# EUROPEAN PATENT APPLICATION

(11) **EP 4 729 285 A1**
(43) Date of publication of application: **22.04.2026**
(21) Application number: 25208504.8
(22) Date of filing: 14.10.2025
(51) Int. Cl.: B32B 5/14, B32B 27/08, B32B 27/10, B32B 27/16, B32B 27/30, B32B 27/32, B32B 29/00, B32B 29/06

(54) **LAMINATED PACKAGING MATERIAL COMPRISING BARRIER-COATED SUBSTRATE AND PACKAGING CONTAINER**

(30) Priority: 17.10.2024 EP 24207197
(71) Applicant: Tetra Laval Holdings & Finance S.A., 1009 Pully (CH)
(72) Inventor: CHRISTOFFERSSON, Jonas, 221 86 Lund (SE); HALL, Emmy, 221 86 Lund (SE); ANDERSSON, Håkan, 221 86 Lund (SE); CAMACHO, Walker, 221 86 Lund (SE); BERLIN, Mikael, 221 86 Lund (SE); WIKNER, Jens, 221 86 Lund (SE); COPELAND, Nick, 221 86 Lund (SE); GENOVESE, Paolo, 221 86 Lund (SE); POMATI, Davide, 221 86 Lund (SE)
(74) Representative: Tetra Pak Patent Attorneys

(57) **Abstract**

The present invention relates to a laminated packaging material (20) for heat-sealable packaging of oxygen-sensitive products, comprising a high-quality, barrier-coated cellulose-based substrate (23;10). The invention further relates to packaging containers made from the laminated packaging material.

## Description

### Technical field

The present invention relates to a heat-sealable laminated packaging material comprising a barrier-coated cellulose-based substrate for heat-sealable packaging of oxygen-sensitive products, such as food products, such as liquid, semi-liquid or viscous food and water. The invention further relates to a packaging container comprising the laminated packaging material.

### Background of the invention

Packaging containers of the single use disposable type for liquid foods are often produced from a packaging laminate based on paperboard or carton. One such commonly occurring packaging container is marketed under the trademark Tetra Brik Aseptic^{®} and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube by the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedal, by fold formation along prepared crease lines in the packaging material. Each package may be equipped with an opening device, such as a screw cork, before or after filling, forming and sealing of the container.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik^{®} -type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

In recent years, most of the producers of food packaging containers are focusing on reaching recyclability and sustainability standards promoted by various governments and other institutions, such as the European Union. The objective of these efforts is to deliver a future carton-based packaging container, made to a larger extent of renewable packaging materials, and being to a higher degree recyclable, to reduce waste and pollution.

One aspect of sustainability is to provide alternatives to aluminium foil as a barrier layer. A layer of an aluminium foil in the packaging laminate provides gas barrier properties quite superior to most other gas barrier materials. The conventional aluminium-foil based packaging laminate for liquid food aseptic packaging has inherent barrier properties also to water vapour, to light, to aroma, flavour and acidic substances, and is still the most cost-efficient packaging material, at its level of performance, available on the market today. Moreover, the aluminium foil enables heat sealing and heating of the laminated material by means of induction in the aluminium foil. Aluminium foil barriers for liquid carton food packaging are normally from 5 to 9 µm in thickness, such as most commonly about 6 µm.

Any other material to compete with the foil-based materials must be cost-efficient regarding raw materials, have comparable food preserving properties and have a comparably low complexity in the converting of materials into a finished packaging laminate.

Among the efforts of developing non-aluminium-foil materials for liquid food carton packaging, there is an incentive towards developing premanufactured films or sheets having high and multiple barrier functionalities, which may replace the aluminium-foil barrier material in the conventional laminated packaging material or, be combined with other barrier layers in the laminated material and adapt them to conventional processes for lamination and manufacturing of laminated packaging materials.

In line with increased requirements to use only sustainable materials, polymeric barrier materials originating from fossil sources have become less interesting, and thus it remains to work with the types of thin barrier coatings which would be almost negligible in recycling processes and cause very little problems in an economy based on circulation of materials and renewable (non-fossil) materials, i.e. aqueous dispersion coatings and vapour deposition coatings. Such coatings are applied on substrates which do not typically provide significant barrier properties themselves e.g. polyolefin, polyester or paper. The thickness of a dispersion-coated polymer is normally around 0.5 to 3 µm, while vapour-deposited barrier coatings are typically in the order of tens of nanometres.

Preferred types of such alternative, more environmentally sustainable barrier materials are barrier-coated paper substrates made by aqueous dispersion coating or vacuum based vapour deposition coating onto thin paper carrier substrates. There are various aqueous dispersion coating processes and vapour deposition coating processes and material recipes for such coatings, but there is a need for cost-efficient barrier materials of this "non-foil" type, i.e. non-aluminium-foil, having improved properties for use in packaging laminates for liquid food packaging, regarding barrier properties, towards gases, such as oxygen gas.

An earlier published patent application WO2011/003565A1 discloses a non-aluminium-foil packaging material comprising a pre-coated and metallised Kraft paper substrate for the purpose of induction heat sealing. It recommends rather thick pre-coating layers and to include additional nanoclay particles in the pre-coating, and for good gas barrier properties it is also recommended to apply further barrier coating layers in the packaging laminate, such as onto the back side of the paper substrate or onto the bulk paperboard layer.

The earlier published patent application WO2017/089508A1 discloses how further improved barrier properties may be obtained from a metallised paper in a similar packaging laminate, by selecting a paper substrate providing optimal properties. Such a metallised paper substrate provided not only improved barrier properties, but also indicated better stability of the metallised layer for induction heat sealing purposes.

The earlier published patent application WO2024/017781A1 discloses how the risk for certain defects in the transversal heat sealing of a longitudinally sealed tube or tubular blank may be reduced, by using a more thermostable base-coating for a standard metallization deposition coating, such as for example starch.

There remains, however, a need for a further improved gas-barrier-coated cellulose-based substrate to provide optimal oxygen gas barrier properties as well as more robust and reliable heat sealability by means of high-frequency induction heating, in a laminated packaging material.

There remains generally also a need for recyclability and sustainability of the materials used, aiming to reduce the amounts of non-cellulose-based materials and the number of different types of materials used.

### Summary of the invention

According to a first aspect of the invention, there is provided a heat sealable laminated packaging material for packaging of oxygen-sensitive food products, such as liquid, semi-liquid or viscous food and water, and more specifically for aseptic packaging thereof, comprising as layers of a layer sequence, as viewed from outside to inside of a packaging container formed from the laminated packaging material,
an outermost, transparent, and protective material layer,
a barrier-coated cellulose-based substrate,
an inside polymer layer structure, comprising at least an innermost, heat sealable, liquid tight layer, which comprises a thermoplastic material and is intended to be in direct contact with a filled food product in a packaging container manufactured from the laminated packaging material, the barrier-coated cellulose-based substrate comprising
a cellulose-based substrate having a surface weight from 30 to 80 g/m², as measured according to ISO 536:2012, and a density from 700 to 1500 kg/m³, as measured according to ISO 534:2011, and
a base coating, comprising from 65 to 100 weight-% of a polymer material selected from the group consisting of polyvinyl alcohol, PVOH, modified polyvinyl alcohols, starch, starch derivatives, modified starch materials, cellulose ethers, nanofibrillar cellulose, NFC, nanocrystalline cellulose, NCC, other cellulose derivatives, and blend compositions of any two or more thereof, and from 0 to 35 weight-% of inorganic laminar particles, based on the total dry weight of the base coating, the base coating being applied on a first, top side of the cellulose-based substrate by means of aqueous dispersion or solution coating and subsequent drying, and
an oxygen-enriched barrier aluminium metallization coating applied onto the uncoated side of the dry base coating, by a vacuum based physical vapour deposition method (PVD), wherein
in a first phase of the vapour deposition method, a first, aluminium oxide sub-portion of the metallization coating is applied adjacent and in direct contact with the free surface of the base coating while adding oxygen to the aluminium metal vapour, and in a second phase of the vapour deposition coating method, a second, aluminium metal sub-portion of the metallization coating is applied onto the first, aluminium oxide sub-portion,
the first and second sub-portions being deposited within a single deposition process, the second, aluminium metal sub-portion being bonded to the base coating by the first, interjacent aluminium oxide sub-portion of the first phase, and the thickness of the second, aluminium metal sub-portion being greater than the thickness of the first, aluminium oxide sub-portion, the oxygen-enriched barrier aluminium metallization coating having a metallization coating appearance and opacity, wherein
the oxygen-enriched barrier aluminium metallization coating has a total thickness from above 90 nm to 150 nm, as measured by transmission electron microscopy, TEM, following sample preparation by ultramicrotomy as described herein, and exhibits a sheet resistance from 0.3 to 0.7 Ω/□, such as from 0.3 to 0.6 Ω/□, such as from 0.4 to 0.6 Ω/□ (Ohms per square), as measured by an instrument for contactless eddy current measurement,
the barrier-coated cellulose-based substrate thus enabling robust heat sealing conditions in a method for manufacturing of packages from the laminated packaging material.

Laminated packaging materials comprising such a barrier-coated cellulose-based substrate exhibit good thermostability and mechanical-electrical endurance in heat sealing operations, such as in high-frequency heat sealing of the materials to form closed packaging containers. The base coating provides a thermostable layer beneath the oxygen-enriched barrier aluminium metallization layer, which is conductive and provides heat to any surrounding material layers being susceptible to induction heating, such as thermoplastic polymers.

The barrier aluminium metallization coating further inherently forms a third, sub-portion of aluminium oxide at the surface of the metallization coating, on top of and adjacent the second sub-portion. Such a third sub-portion of aluminium oxide is formed at the surface of all aluminium metal coatings due to exposure to oxygen in air and comprises mainly aluminium oxide of the formula Al₂O₃. The third sub-portion of aluminium oxide has a corresponding thickness to the first sub-portion of aluminium oxide and is thus also thinner than the second aluminium metal sub-portion.

The compositions and concentrations of the coating constituents are gradually transitioning between the sub-portions, such that when representing the different constituents of the coating by concentration analysis diagrams, such as from TOF-SIMS analyses, they will each appear as gradient curves throughout the coating thickness. It can, however, be seen by TEM analysis that there are first and third sub-portions which are relatively thin, while there is an interjacent, second sub-portion having a different appearance and being significantly thicker than the first and third sub-portion.

In a first embodiment, the base coating has a composition comprising from 65 to 100 weight-%, such as from 70 to 100 weight-%, such as from 80 to 100 weight-%, such from 90 to 100 weight-%, of a polymer material selected from the group consisting of polyvinyl alcohol, PVOH, and modified polyvinyl alcohols, and from 0 to 35 weight-%, such as from 0 to 30 weight-%, such as from 0 to 20 weight-%, such as from 0 to 10 weight-% of an inorganic, laminar compound, based on the total dry weight of the base coating. Such a base coating provides excellent oxygen gas barrier properties by using as little as possible barrier polymer material and as little as possible additional materials to cellulose and polyolefin polymers, the latter being preferred materials for major recycling streams, being the most suitable to provide to have as high homogeneity and purity as possible.

The PVOH or modified polyvinyl alcohol used in the base coating preferably has a degree of hydrolysis of 98 mol-% or higher, such as of 99 mol-% or higher. The PVOH or modified PVOH preferably has a higher molecular weight (and thereby obtains a higher viscosity in aqueous solution or dispersion), than a lower.

The base coating may be applied to a total amount from 0.5 to 2.5 g/m², such as from 1.0 to 2.1 g/m², such as from 1.0 to 2.0 g/m², such as from 1.1 to 2.0 g/m², such as from 1.0 to 1.8 g/m², such as from 1.1 to 1.8 g/m², such as from 1.2 to 1.8 g/m², such as from 1.2 to 1.7 g/m², such as from 1.3 to 1.7 g/m², based on dry weight. Such optimization improves the performance in transversal heat sealing as well as the oxygen gas barrier properties of laminated materials comprising the barrier-coated cellulose-based substrate.

In a second embodiment of the first aspect, the base coating comprises from 65 to 100 weight-%, such as from 70 to 100 weight-%, such as from 80 to 100 weight-%, such as from 90 to 100 weight-% of a material selected from the group consisting of starch, modified starch materials and cellulose ethers and from 0 to 35 weight-%, such as from 0 to 30 weight-%, such as from 0 to 20 weight-%, such as from 0 to 10 weight-% of an inorganic, laminar compound. Such a base coating adds further thermostability to the barrier-coated cellulose-based substrate to endure heat sealing operations.

To provide sufficient oxygen gas barrier properties, depending on how well the base coating works for the purpose, it may be needed to apply a further gas-barrier top coating onto the oxygen-enriched barrier aluminium metallization coating. Such a further gas-barrier top coating preferably comprises a polymer selected from the group consisting of polyvinyl alcohol, PVOH, and modified polyvinyl alcohols, and is applied by means of aqueous dispersion or solution coating and subsequent drying onto the oxygen-enriched barrier aluminium metallization coating.

Preferably, however, the barrier-coated cellulose-based substrate does not comprise a top-coating on the oxygen-enriched aluminium barrier metallization layer.

The optional gas-barrier top coating may further comprise a polymer having functional carboxylic acid groups, such as a copolymer of ethylene with acrylic or methacrylic acid, EAA or EMAA. By adding some EAA an optimal adhesion of the top coating to the surface of the oxygen-enriched barrier aluminium metallization coating, as it makes the barrier coating structure and its production more costly and complex.

Preferably, within the second embodiment, the base coating comprises a starch or modified starch material. A base coating of starch has in previous research proven to provide better thermostability during induction heat sealing, in that it provides a significantly lower risk for defect initiations in a subsequently coated, standard barrier aluminium metallization coating, from deposited aluminium metal vapour only.

The base coating may alternatively, or also, comprise a cellulose ether material. The base coating may instead of, or in addition to, a starch or starch-based material also comprise one or more cellulose ethers, selected from the group consisting of methyl cellulose, ethyl cellulose, carboxymethyl cellulose CMC, hydroxy ethyl cellulose HEC, hydroxy propyl cellulose HPC, hydroxypropylmethyl cellulose HPMC and sodium carboxymethyl cellulose NaCMC.

The cellulose-based substrate may be a fibrous cellulose substrate, which has a first pre-coating and/ or impregnation of an aqueous composition comprising a polymer binder and optionally clay or inorganic particles. The fibrous cellulose substrate may thus have a fibrous surface. A fibrous surface may be more or less smooth and may benefit from having such a first pre-coating or impregnation.

A suitable pre-coating may be an aqueous pre-coating composition comprising a polymer binder and optionally clay, inorganic pigments or particles, dried and subsequently calendered.

The cellulose-based substrate may alternatively be a fibrous cellulose substrate, which is impregnated with an aqueous polymer dispersion or solution, dried and subsequently calendered.

The barrier-coated cellulose-based substrate is thus suitable for use as a gas barrier layer or multilayer barrier section in a heat-sealable laminated packaging material for packaging of oxygen-sensitive food products, such as liquid, semi-liquid or viscous food products and water, and more specifically for aseptic packaging thereof.

The heat sealable laminated packaging material of the first aspect may comparise the barrier-coated cellulose-based substrate as defined in the first aspect, as manufactured by a method comprising the steps of
a) providing and forwarding a continuous web of a cellulose-based substrate, having a surface weight from 30 to 80 g/m2, as measured according to ISO 536:2012, and a density from 700 to 1500 kg/m3, as measured according to ISO 534:2011,
b) providing an aqueous base coating composition comprising a polymer material selected from the group consisting of polyvinyl alcohol, PVOH, modified polyvinyl alcohols, starch, starch derivatives, modified starch materials, cellulose ethers and blend compositions of any two or more thereof, and from 0 to 35 weight-% inorganic laminar particles, based on the total dry weight of the base coating,
c) applying the aqueous base coating composition onto the top side of the web of the cellulose-based substrate by means of dispersion coating (32a), such as by a smooth roller coating method,
d) drying the applied aqueous base coating from step c), to provide the base coating,
e) optionally repeating steps c) and d),
f) further coating the base coated and dried web substrate obtained from step e), with an oxygen-enriched barrier aluminium metallization coating by means of physical vapour deposition of aluminium metal vapour,
comprising
f1) depositing a first sub-portion of aluminium oxide adjacent onto and in direct contact with the free, uncoated surface of the base coating while adding oxygen to the aluminium metal vapour,
f2) depositing a second sub-portion comprising mainly aluminium metal to a greater thickness than the first sub-portion of aluminium oxide, thus providing the oxygen-enriched barrier aluminium metallization coating with an aluminium metallization appearance and opacity,
wherein the first and second sub-portions are deposited within a single deposition process,
the oxygen-enriched barrier aluminium metallization coating being deposited to a total thickness from 90 to 150 nm, as measured by transmission electron microscopy, TEM, following sample preparation by ultramicrotomy as described herein, and exhibiting a sheet resistance from 0.3 to 0.7 Ω/□, such as from 0.3 to 0.6 Ω/□, such as from 0.4 to 0.6 Ω/□ (Ohms per square), as measured by an instrument for contactless eddy current measurement.

The gas barrier coating may be applied by smooth roller coating, such as by semi-flexo coating, in the form of an aqueous dispersion or solution on a first, top side of the cellulose-based substrate and by subsequently drying the applied aqueous dispersion or solution coating.

Preferably, drying the applied aqueous base coating composition is performed while consistently keeping the temperature of the surface of the web substrate at from 60 °C to below 95 °C, such as from 60 to 85 °C, to ensure a best possible coating formation with as few defects as possible, such as pinholes in the dry base coating layer.

The heat sealable laminated packaging material may further comprise a bulk layer of paper, paperboard or other cellulose-based material laminated between the outermost, transparent and protective material layer and the barrier-coated cellulose-based substrate.

According to a second aspect, a packaging container is provided, which comprises the heat sealable laminated packaging material of the first aspect. According to an embodiment, the packaging container is in its entirety made of the laminated packaging material, except for an opening device.

All features described above and in the following in connection with any aspect of the invention can be used in combination with any other aspect of the invention.

### Detailed description

By the term "long-term storage", used in connection with the present invention, it is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

By the term "package integrity", is generally meant the package tightness, i.e. the resistance to leakage or breakage of a packaging container. The term encompasses the resistance of the package to intrusion of microbes, such as bacteria, dirt, and other substances, that may deteriorate the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes, ruptures and the like within each material layer itself, and yet another contribution comes from the strength of the sealing joints, by which the material is sealed together at the formation of a packaging container. Regarding the laminated packaging material itself, the integrity property is thus generally focused on the ability to withstand thermal- and mechanical loads e.g., during folding and sealing, without fracturing. More specifically, good adhesion is needed between the respective laminate layers and its adjacent layers, as well as high quality of the individual material layers. Regarding the sealing of the packages, the integrity is mainly focused on the quality of the sealing joints, which is ensured by well-functioning and robust heat-sealing operations in the filling machines, which in turn is ensured by adequately adapted heat-sealing properties of the laminated packaging material.

The barrier-coated cellulose-based substrate of the first aspect is equally suitable for use in packaging containers made from a continuous web and longitudinally sealed tube of laminated packaging material, as in packaging containers made from blanks (one pre-folded and side-sealed blank per individual packaging container) of laminated packaging material.

The term "liquid, semi-liquid or viscous food" generally refers to food products having a flowing content that optionally may contain also solid pieces of food. Dairy and milk, soy, rice, grains and seed drinks, juice, nectar, still drinks, energy drinks, sport drinks, coffee or tea drinks, coconut water, wine, soups, crushed tomatoes, sauce (such as pasta sauce), beans and olive oil are some non-limiting examples of food products contemplated.

Examples of other oxygen-sensitive food products, possible to package and protect with the laminated packaging materials of the present disclosure are e.g. dry and/or fatty foods.

The term "aseptic" in connection with a packaging material and packaging container refers to conditions where microorganisms are eliminated, in-activated or killed. Examples of microorganisms are bacteria and spores. Generally an aseptic process is used when a product is aseptically packed in a packaging container. For the continued aseptic performance during the shelf-life of the package, the package integrity properties are of course very important. For long-term shelf-life of a filled food product, it may furthermore be important that the package has barrier properties towards gases and vapours, such as towards oxygen gas, in order to keep its original taste and nutritional value intact, such as for example its vitamin C content.

By the term "bulk layer" is normally meant the thickest layer or the layer containing the most material in a multilayer laminate, i.e. the layer which is contributing most to the mechanical properties and the dimensional stability of the laminate and the structural stability of packaging containers folded from the laminate, such as a thick paper, paperboard or carton. It may also mean a layer providing a greater thickness distance in a sandwich structure, which further interacts with stabilising facing layers, which have a higher Young's modulus, on each side of the bulk layer, to achieve sufficient such mechanical properties, such as bending stiffness, for achieving structure stability of formed packaging containers.

By the term "non-foil" packaging material, is meant a laminated packaging material, which does not comprise an aluminium foil of a thickness in the order of micrometres, such as conventional aluminium foils for liquid carton packaging which are normally from 6 to 9 µm thick. A "non-foil" packaging material may comprise a metallisation layer, however, as the thickness of e.g. an aluminium metallisation layer is in the nano-meter scale. The amount of aluminium material employed in such a metallisation coating is very low, and have, in comparison to aluminium foils, a significantly reduced impact on recycling and exploitation of material resources.

The term "dispersion coating" herein relates to a coating technique in which an aqueous or substantially aqueous dispersion, suspension, emulsion or solution of a polymer is applied to the surface of a substrate layer, usually in the form of a continuous web, to form a solid, substantially non-porous film after drying. The term "dispersion" covers thus also any suspension, emulsion or solution or mixes thereof, that would be capable of providing such a coating after drying. Polyvinyl alcohols (PVOH, PVAL) are typical polymers suitable for dispersion coating, but may for example at high saponification degrees in practice rather be polymer solutions, or mixes of dispersed and dissolved PVOH. A dispersion-coated barrier layer or coating is formed by a dispersion coating, also called "liquid-film coating", techniques. An aqueous dispersion may comprise fine polymer-based particles and thus be a "latex".

The term "vapour deposition coatings" specifically refers to those coatings applied using vacuum-based vapour deposition techniques.

The term "latex" as used herein refers to a composition comprising an aqueous suspension or dispersion or emulsion of polymer particles, which can be natural polymers, synthetic polymers, synthetic polymers derived from biomasses or combinations thereof.

The term "thermomechanical stability" about a material or a material layer means that the material can maintain mechanical stability and geometry at elevated temperatures, also at shaping or forming the material (such as pressing, folding, heat sealing), such that the metallised layer is well supported and anchored to such a material or layer and does not deteriorate. Furthermore, the material will not melt or soften upon heating to predetermined temperatures.

The term "polyethylene" refers to a polymer comprising ethylene monomers at from about 90 to 100 mol%. There are various types of polyethylene, as explained below.

Low density polyethylene, LDPE, has a density of 917 to 930 kg/m3. It is typically polymerised from ethylene monomers alone and has a branched polymer chain structure with long chain branches, leading to a more branched and less tightly packed molecular arrangement, and a lower overall density than for medium density polyethylene, MDPE, and high density polyethylene, HDPE.

The term "linear low density polyethylene" (or "LLDPE") covers all linear low density polyethylenes, including "ZN-LLDPE" polymerised by means of Ziegler-Natta type catalysts as well as "m-LLDPE" polymerised by catalysts of so-called "constrained geometry", or "single-site" catalysts, such as "metallocene" catalysts, and other linear low density polyethylenes. Both ZN-LLDPE and m-LLDPE are typically produced by copolymerising an ethylene monomer with a C4-C8, more preferably a C6-C8, alpha-olefin alkylene monomer, the latter in the presence of a metallocene catalyst. 1 to 10 mol%, suitably 8 to 10 mol%, comonomer content is typical. LLDPE has significant numbers of short branches. It differs structurally from conventional low-density polyethylene (LDPE) because of the absence of long chain branching. LLDPE polymers typically have a narrower molecular weight distribution than conventional LDPE (this is true for m-LLDPE especially) and significantly different properties. A higher number of short chain branches will lead to a lower degree of crystallinity, because the crystallisation is suppressed in the polymer and therefore its density becomes lower than for MDPE and HDPE.

If occasionally referring to "mPE" in this application, it is meant a polymer blend for a heat sealable innermost layer comprising at least 50 wt% mLLDPE and up to 50 wt% LDPE, preferably comprising about 70 weight-% of mLLDPE and about 30 weight-% of LDPE. (e.g. in connection to the figures)

High density polyethylene, HDPE, and medium density polyethylene, MDPE, suitable for the inside polymer multilayer portion in the laminated packaging material of the invention has a density of 930 to 970 kg/m³. Up to 2 mol% comonomer content is typical in these polymers of linear type polymer molecules. The lack of long chain branching is ensured by an appropriate choice of catalyst (e.g. ZN catalysts) and the reaction conditions.

MDPE may have a medium level of density, typically ranging from 0.926 to 0.940 g/cm³, while HDPE may have a higher density, typically ranging from 0.941 to 0.965 g/cm³.

A suitable cellulose-based substrate for the invention is not limited to a certain type of paper or cellulose but includes cellulose-based substrates based on any type of fibrous or fibrillar cellulose. The invention is not applicable, however, to substrates from plastics or homogeneous polymers, such as films made from regenerated cellulose, which are not in fibrous form, or in the form of fibrillar cellulose.

Fibrous cellulose-based substrates are preferred from a recycling and re-pulpability point of view, above substrates comprising high proportions of fibrillar (so-called microfibrillar cellulose, MFC, alternatively called nanofibrillar cellulose, NFC). The cellulose-based substrates suitable for the invention are thus preferably not comprising more than 30 weight-% of fibrillar cellulose, such as not more than 20, such as not more than 10, such as not more than 5 weight-% of fibrillar cellulose. Pure fibrillar cellulose, or a cellulose-based substrate having 30 weight-% or more of fibrillar cellulose, is not considered a "fibrous" material and does not have as good dewatering capability in repulping and recycling as fibrous cellulose materials do.

Nano-crystalline cellulose, NCC, is a form of nano-cellulose but is not the same as "microfibrillar cellulose", "MFC" (CMF) or "nanofibrillar cellulose", NFC (CNF)".

MFC/NFC may thus contain longer particles, so-called "fibrils" having a width of 10-1000 nm, and a length of at least 1 µm, such as up to 10 µm, such as up to 100 µm.

Both MFC and NFC have an aspect ratio of 50 or above, while NCC/ CNC may be defined to have an aspect ratio below 50, e.g. in accordance with ISO/TS 20477:2017 and the draft TAPPI norm WI3021.

The term "NCC", is used for shorter particles and "rod-like" particles, having a width of 3-100 nm, and a length from 100 to above 1000 nm, such as from 100 to 3000 nm, such as from 100 to 1000 nm, such as from 100 to 500 nm. The majority of the NCC particles in the composition should have this dimension, may be from 100 to 500 nm length, such as from 100 to 200 nm and with a small width of from 3 to 100 nm.

A cellulose-based substrate may be designed to have a high density, and low porosity, by application of high pressure during its manufacturing process. Typically, densification may take place by calendering, preferably super-calendering. Densities above 850 kg/m³, preferably from 900 to 1400 kg/m³, more preferably from 1000 to 1400 kg/m³, can be obtained by such high-pressure roller treatment through multiple roller nips. Such a high-density cellulose-based substrate may constitute a good substrate for subsequently applied, thin gas barrier coatings of uniform quality, thanks to its obtained lower porosity and density. Depending on how it is made, it may contribute with further advantageous properties for the use in laminated packaging materials.

In an embodiment of such a higher density cellulose-based substrate, the substrate is a paper impregnated with a water soluble or water dispersible polymer, such as PVOH or starch. Such a cellulose-based substrate may for example first be impregnated with a water-soluble polymer and subsequently be treated in a super-calendering treatment. In this way, the fibre matrix impregnated with polymer may be compressed and densified, such that an interlocked fibre-composite without, or with significantly reduced, porosity is obtained. Moreover, such an impregnated cellulose-based substrate can obtain a higher density to avoid air-filled pockets and cavities in the substrate. This may be advantageous in subsequent processes of vapour deposition coating of barrier coatings on the substrate.

In a further embodiment, at least the top surface (i.e. the surface to be base-coated and barrier-coated) may first be pre-coated with a pre-coating layer, such as a starch-based pre-coating or a clay-coat, and optionally, subsequently be treated in a super-calendering treatment, to compress and densify the surface of the cellulose-based substrate. Depending on the pressure and the treatment process, the cellulose-based substrate may be compacted to obtain a high-density substrate with a density above 850 kg/m³, such as above 900 kg/m³, such as above 1000 kg/m³, preferably above 1000 kg/m³.

Generally, to be suitable for a final barrier-coating step by means of a vapour deposition coating process, the fibrous part of a cellulose-based substrate needs to be thin and have a low grammage weight of 80 g/m² or below, such as 70 g/m² or below, preferably 60 g/m² or below, such as 50 g/m² or below, preferably 45 g/m² or below, as measured according to ISO 536:2012, for reasons of efficiency and production economy. On the other hand, fibrous cellulose substrates thinner or with a lower grammage than 30 g/m² may be mechanically too weak and/or less dimension stable, when they are coated with wet dispersions and subsequently dried, thus exhibiting shrinkage or curling problems or even web breaks. It is thus preferred to use cellulose-based substrates having a grammage of from 30 to 70 g/m², such as from 30 to 65 g/m², such as from 35 to 60 g/m², such as from 35 to 55 g/m², such as from 35 to 50 g/m², such as from 35 to 45 g/m², as measured according to ISO 536:2012.

It may be advantageous to use an as thin as possible cellulose-based substrate, because then less polymer may be needed in adjacent liquid-tight, heat-sealable material layers. The thickness of the cellulose-based substrate may be from 35 to 75 µm, such as from 35 to 70 µm, such as from 35 to 60 µm, such as from 35 to 55 µm, such as from 35 to 50 µm, such as from 35 to 45 µm.

In an alternative embodiment, a suitable cellulose-based substrate for carrying i.a. at least one gas barrier coating, is made essentially of cellulose fibres laid together to form a fibrous sheet or paper of lower density, meaning that in between the fibres there will normally be cavities, pockets or porosities filled by air. Such a fibrous, porous, cellulose substrate may have a relatively low density from 700 to 850 kg/m³, more preferably from 700 to 830 kg/m³, most preferably from 700 to 800 kg/m³. Such a relatively low density is normally achieved by not compressing the cellulose fibres together too much in the substrate and by using fibrous cellulose, as distinguished from fibril or crystal variants of cellulose, i.e. so-called nanocellulose or micro-fibrillar cellulose (MFC), to ensure consistent porosity between the fibres in the interior of the substrate. A fibrous and porous, cellulose substrate is normally a conventional paper, which may be readily recycled to a fibre recycling stream, such as a used beverage carton (UBC) recycling stream. If such a fibrous and porous substrate can still be provided with a dense and smooth surface, i.e. compacted surface, such as by a clay-coat and subsequently treated by calendering or surface-glazing, it may also be a good substrate for the purpose of the present invention.

Papers or cellulose-based substrates suitable of the invention may have a roughness of its surface to be coated (top side or print side) lower than 200 ml/min Bendtsen, such as 180 ml/min Bendtsen or below, such as 150 ml/min Bendtsen or below, such as 130 ml/min Bendtsen or below, such as 120 ml/min or below, such as 100 ml/min or below, such as 80 ml/min or below, such as 50 ml/min or below, such as 30 ml/min or below, such as 25 ml/min or below, as measured according to ISO 8791:4, to work better for barrier coating at industrially viable, high-speed operations. At below 50 ml/min, such as below 30 ml/min Bendtsen, the substrate surface is very smooth and a very thin coating of 0.5 g/m² of a thermostable polymer or composition may be applied and dried at high speed with good layer formation of the coating material.

If the surface roughness, measured as Bendtsen value in ml/min, is too high, there may be "valleys" and "peaks" in the surface of the cellulose-based material, such that thinly applied wet coating of an aqueous solution of the gas barrier polymer, may not be able to fill and level out the "valleys" and still also cover the "peaks". In such cases, the applied and dried coating of a base coating or of a gas barrier polymer may not fully cover the surface, but obtain defects, through which oxygen gas molecules may easily permeate through the coating. A rougher substrate surface naturally requires more polymer coating to be applied, which is possible to apply at lower coating line speeds. At high coating speeds, however, there are limits to how much aqueous coating may be applied, to how much water may be evaporated in a drying operation and to how high viscosity and solid content the aqueous barrier polymer solution can have. In such a case the paper surface may not be a good substrate for a thin base coating and a subsequent metallization coating and may thus first need a smoothening pre-coating to form a proper foundation for the subsequent barrier coatings.

Advantageously, cellulose-based substrates may further have a Cobb 60 surface water absorption value of 30 g/m² or lower, as measured according to ISO 535:2014, on its coating side ("top side" or "print side"), for the purpose of functioning better in high-speed coating methods of the barrier-coated structures according to the present invention, under viable industrial conditions.

The Cobb 60 method according to ISO 535:2014 measures the water absorption of the cellulose-based substrate under standardised conditions and is in a way a measure of "coatability" of the cellulose-based substrate surface, i.e. the ability to be coated by an aqueous solution composition of a gas barrier polymer. If the surface can absorb too much of the solution before drying, the thinly applied wet coating will be broken and cannot form a continuous coating of the gas barrier polymer. Accordingly, it is preferred that the Cobb 60 value is lower than 30 g/m², such as lower than 28 g/m², and preferably not higher than 25 g/m².

The surface of the top side of the cellulose-based substrate may thus preferably exhibit a Bendtsen roughness value lower than 30 ml/min and a Cobb 60 absorption value of 25 g/m² or lower.

In a further embodiment, the surface of the top side of the paper- or cellulose-based substrate may exhibit a Gurley porosity value greater than 1000 s/dl, such as greater than 2000 s/dl, according to Tappi T460 om-2. The advantage of the surface having a low porosity is that less aqueous solution of the gas barrier polymer will be absorbed into the cellulose-based substrate. Since a dispersion coated aqueous composition of the base coating may be very thin, this may be important for the internal coherence of the coating as well as for the ability of the coating to form a smooth and even surface for receiving further coatings or layers there onto.

Thus, in a cellulose-based substrate more suitable to be coated with a thin coating of an aqueous solution composition comprising a thermostable polymer, the number and the size of pores in the substrate material should preferably be significantly reduced. By extensive refining of the pulp used for manufacturing of the substrate, the degree of fibre bonding will increase and thus reduce the porosity.

Greaseproof paper is produced by such extensive refining and has sufficiently low porosity to provide a grease barrier. Greaseproof paper has thus also been seen as a potential substrate or carrier for an additional gas-barrier coating. The resulting pulp has, however, high dewatering resistance and demands long time for stock dewatering and is both costly in its manufacturing process and undesired in repulping and recycling processes. The same is valid regarding parchment papers, which in their manufacturing acquire gelatinized fibres by passing a bath of sulphuric acid, which makes the fibres less dewaterable and repulpable, and moreover the parchment papers acquire undesired brittleness.

According to a preferred embodiment, the cellulose-based substrate for the use of the invention, may be formed from cellulose fibres comprising at least 50% by dry weight of chemical pulp, such as Kraft pulp or sulphite pulp. Sulphate or sulphite pulp is used to obtain a paper that is tough enough for downstream processes, such as coating at high line speed, but also converting lamination and use of the final package.

Sulphate/kraft pulp may thus be preferred since it is widely produced in large quantities and is advantageous for improved repulping in recycling, and general dewatering of the fibres. Sulphite fibres normally have a higher proportion of refined fibres, which may have an effect slightly to the contrary depending on the proportion in a total cellulose mix and on the degree of refinement. A major proportion of Kraft pulp is thus preferred, and 100 % Kraft pulp is more preferred from the repulping and recyclability point of view.

For recyclability and good dewatering ability, the fibres of the cellulose-based substrate may have a Canadian Standard Freeness (CSF) higher than 300 ml, such as higher than 350 ml, such as higher than 400 ml, as measured by ISO 5267-2:2001. Correspondingly, the fibres of the cellulose-based substrate may have a Schopper-Riegler value lower than 40 degrees SR, such as lower than 36 degrees SR, such as lower than 32 degrees SR, as measured according to ISO 5267-1:1999.

Softwood pulp may provide strength/toughness properties in the resulting paper and may be comprised in the pulp by at least 50 wt%. In an embodiment, the cellulose-based substrate comprises at least 50 wt%, such as from 60 to 100 wt%, such as from 70 to 100 wt% Kraft cellulose, such as bleached Kraft cellulose. The cellulose-based substrate may be formed from cellulose fibres comprising 35-100 %, such as 35-80 %, such as 40-70 % of softwood pulp, by dry weight of the pulp used to form the high-density paper. The other part of the pulp composition may comprise hardwood fibres and some low amounts of other fibres.

A benefit of including softwood pulp is an improved runnability in the paper machine and beneficial strength/toughness properties in the resulting paper. A relatively high proportion of softwood pulp may facilitate sufficiently high density of the cellulose-based substrate without causing problems in dewatering during the manufacturing of the substrate as well as enabling repulping in recycling operations. The degree of refinement of the fibre compositions is further chosen to promote both dewatering and repulping abilities, and at the same time the formation of a dense paper with lower porosity.

A different type of cellulose-based substrates suitable for use in the invention may comprise low molecular celluloses such as microfibrillar cellulose, MFC, nanofibrillar cellulose, NFC, or nanocrystalline celluloses, NCC, within its fibrous structure. The inclusion of such low-molecular cellulose would fill voids and pores in the fibrous cellulose, to densify the structure, rather than preserving its porosity.

To the latter type of cellulose-based substrates belong also so-called MFC films, which comprise in the majority micro/nano-fibrillar cellulose, may have more the character of a polymer film although being mainly made up from fibrillar cellulose molecules, and which are thus not made from regenerated cellulose. This fact has the important advantage that the cellulose-based film substrate is possible to re-disperse in water, i.e. is repulpable, as opposed to a film of regenerated cellulose, and it is thus also at least partly recyclable to a fibre-based recycling stream, however it may require significantly longer re-pulping time than a fibrous cellulose substrate, such as a conventional paper.

As explained above, for recyclability and repulping of cellulose fibre streams, it is preferred that the cellulose-based materials contain only low contents of cellulose in a fibrillar form.

Thus, whereas some substrate papers exist, which have inherent, good oxygen barrier properties, those are for other reasons, such as low recyclability (repulpability), less preferred for the final materials, and there is a need to be able to provide a major contribution of oxygen barrier properties by coating materials, to be applied and well bonded to, and well interacting with, the substrate surface.

To have good mechanical properties for coating at high coating line speeds above 300 m/min, such as at above 400 m/min, the cellulose-based substrate may have a tensile strength from 3 to 6 kN/m in the MD (machine direction) and from 1.5 to 3.5 kN/m, in the CD (cross direction). In the present disclosure tensile strength is measured according to ISO 1924-3:2005. A higher tensile strength may thus indicate a cellulose-based substrate, useful to withstanding web handling forces during coating and lamination operations.

Further, the E Modulus of the cellulose-based substrate may be from 9500 to 12500 MPa in the MD, and from 4000 to 7000 MPa in the CD.

Preferably, the beneficial barrier and recycling properties are obtained without sacrificing tensile strength and other mechanical properties.

The base-coated cellulose-based substrate may thus be pre-coated with a pre-coating layer beneath the base coating. The pre-coating layer may be applied by means of aqueous solution or dispersion coating and subsequent drying. A lower-density substrate, or a substrate having a top surface with high roughness, may for example advantageously be first pre-coated with a composition comprising a polymer binder and, optionally, inorganic particles or pigments.

Examples of binders for smoothening base layers may be aqueous compositions of starch, starch derivatives or modified starch, or cellulose-ethers, such as carboxy-methyl cellulose (CMC) or hydroxyethyl cellulose (HEC). In combination with a subsequent calendering treatment, a dense and smooth substrate surface may be provided. The advantage of such a pre-coating, is that only cellulosic or non-fossil (plant-based) materials are used in the substrate, while obtaining a denser and smoother substrate surface. Such pre-coatings are also normally readily redispersible and repulpable to an aqueous fibre recycling stream.

An advantageous example of a densifying and smoothening pre-coating layer is a pre-coating of an aqueous composition of a latex binder and inorganic particles. It may add flexibility and ductility to a paper, which supports fold-forming in the conversion from planar laminated packaging material into fold-formed, cuboid packaging containers.

A suitable pre-coating layer may comprise from 30 to 96 weight-%, such as from 40 to 96 weight-%, such as from 50 to 96 weight-%, such as from 55 to 96 weight-%, such as from 60 to 96 weight-%, such as from 65 to 96 weight-%, such as from 70 to 96 weight-%, of the inorganic particles and from 4 to 70 weight-%, such as from 4 to 60 weight-%, such as from 4 to 50 weight-% such as from 4 to 45 weight-%, such as from 4 to 40 weight-%, such as from 4 to 35 weight-%, such as from 4 to 30 weight-%, of a polymer binder and further additives, based on dry weight. The pre-coating layer may thus be a so-called clay-coat or pigment coating, and has the purpose to provide a smooth, dense and flexible surface applied onto a fibrous cellulose substrate. The pre-coating layer acts both to resist steam expansion of moisture entrapped in the air pockets of the fibrous cellulose substrate and to provide an optimal surface for further coating with gas barrier layers, and to altogether provide good oxygen barrier in a packaging container, i.e. also after fold-forming and heat sealing a laminated packaging material comprising the barrier-coated cellulose-based substrate into a packaging container.

The inorganic particles or filler material may comprise various inorganic particles, such as clay minerals, silica particles, talcum, and calcium carbonate. The thus dispersion-coated and dried layer of such a pre-coating layer may act as a barrier to migrating small molecules, such as water vapour, but may also act more efficiently as a barrier to resist sudden expansion of water vapour, i.e. steam blisters bursting towards the layer of the steam-resistant base coating from the adjacent substrate layer of fibrous cellulose.

In an embodiment, the inorganic particles comprise laminar silicate particles, which may contribute further to barrier properties in the material, by the creation of overlapping mineral flakes or lamellae, thus preventing migration of small molecules through the material. Such laminar inorganic particles may be selected from clays, such as kaolin clay or bentonite clays, silicates, and talcum particles.

The polymer binder of the pre-coating layer may be an aqueous emulsion binder, such as selected from the group consisting of aqueous emulsions of acrylic or methacrylic homo- or co-polymers, such as styrene-acrylate latex, vinyl acrylic copolymer latex or vinyl acetate acrylate copolymer latex, and of styrene-butadiene copolymers, such as styrene-butadiene latex, and of biobased emulsion binders, such as modified starch latex, and of vinyl alcohol polymers, such as polyvinyl alcohol, PVOH, or (ethylene-) modified PVOH (also called dispersion coatable ethylene vinyl alcohol, EVOH, to be clearly distinguished from melt processable EVOH with significantly higher ethylene content), and of other starch, modified starches or starch derivatives.

The pre-coating layer may be applied by means of aqueous dispersion coating at an amount of from 5 to 25 g/m², such as from 7 to 22 g/m², such as from 7 to 20 g/m², such as from 7 to 19 g/m², such as from 10 to 20 g/m², such as from 10 to 19 g/m², dry weight.

After dispersion coating and drying of the aqueous pre-coating layer, the surface of the pre-coated, fibrous cellulose substrate is smoothened and compacted, such as by calendering, such as supercalendering to provide a higher density substrate, to obtain optimal surface properties, i.e. smoothness and low porosity, for receiving further coatings of gas barrier materials.

The free, dried but uncoated surface of the pre-coating layer as measured after such soft calendering may have a surface roughness below 150 ml/min Bendtsen, such as below 100 ml/min Bendtsen, such as below 80 ml/min Bendtsen, such as below 50 ml/min Bendtsen. Preferably, the surface roughness is very low and can be measured to exhibit values below 3 µm, such as below 2.5 µm, such as below 2 µm, such as 1.5 µm or lower, such as 1.2 µm or lower, such as 1.0 µm or lower, as measured according to ISO 8791-4 (PPS). Such level of smoothness is improving the film formation of subsequently applied gas barrier coatings, thus providing as high gas barrier as possible.

It is further believed that the inherent flexibility of a pre-coating layer supports any subsequently applied, less flexible, barrier coatings, to stay coherent as well as adherent upon folding of the barrier-coated cellulose substrate.

The polymer of the pre-coating layer may be selected to exhibit a glass transition temperature from -30 to +30 degrees Celsius, such as from -30 to +20 degrees Celsius, to provide inherent flexibility to a paper.

The free, uncoated surface of the pre-coating layer applied on the cellulose-based substrate also may have a low porosity, measured as a Gurley air resistance above 1500 s /100 ml, such as above 3000 s/100 ml. The low porosity further improves the film formation of subsequently applied gas barrier coatings, in that no or very low amounts of the oxygen gas barrier composition liquid is absorbed into the fibrous molecules at the surface of the substrate.

The cellulose-based substrate may further have a second pre-coating layer on its opposite side, which may be of the same type as the pre-coating on the first side of the substrate.

The pre-coating layer may be applied by means of suitable dispersion coating techniques, such as blade coating, rod coating, bar coating, smooth roll coating, reverse roll coating, lip coating, air knife coating, curtain flow coating, dip coating and slot die coating methods, and subsequent drying to evaporate the dispersion medium, normally water, by forced convection drying. A pre-coating layer having high content of inorganic particles is suitably applied by blade coating, roll coating or rod coating technology and subsequent drying. The term aqueous dispersion coating includes thus coating of aqueous compositions of binder polymer emulsions, dispersions, suspensions, solutions, and latex formulations, further comprising a substantial amount, such as more than 50 weight-% of more of pigments, inorganic particles, or other filler material.

In yet a further embodiment, the cellulose-based substrate of the barrier-coated cellulose-based substrate has a strain at break in the machine direction in the range of 3.5% - 9.0%, such as 4.0% - 8.0%, as measured according to ISO 1924-3:2005. It may be pre-coated or impregnated with a polymer composition and subsequently calendered to compress and lock the cellulose-based substrate to a state of high density, as described in a copending patent application from Applicant.

Preferably, the base-coated cellulose-based substrate does not have any pre-coating or impregnation and is directly coated with an aqueous base coating composition, such that the base coating is directly adjacent and contiguous to the cellulose-based substrate. The base coated substrate is subsequently to be deposition coated with the oxygen-enriched barrier aluminium metallization coating. This provides the least complex and most cost efficient barrier-coated cellulose-based substrate.

In a specific embodiment, the aqueous base coating composition may comprise a polymer selected from the group consisting of vinyl alcohol polymers and copolymers, such as from the group consisting of polyvinyl alcohol, PVOH, modified polyvinyl alcohols, starch, starch derivatives, and blends of two or more thereof. Such polymers are most suitable as base coatings, as they exhibit very good thermostability in heat sealing operations of laminated materials comprising a thus barrier-coated cellulose-based substrate.

In a more specific embodiment, the aqueous oxygen gas barrier composition of the at least one gas barrier layer comprises a polymer selected from the group consisting of starch and vinyl alcohol polymers and copolymers, such as a polymer selected from the group consisting of polyvinyl alcohol, PVOH, modified PVOH, starch and blends thereof.

In a further specific embodiment, the aqueous oxygen gas barrier composition of the at least one gas barrier layer comprises a polymer selected from the group consisting of vinyl alcohol polymers and copolymers, such as a polymer selected from the group consisting of polyvinyl alcohol, PVOH, and modified PVOH.

The base coating may comprise from 95 to 100 weight-%, such as from 97 to 100 weight-%, such as from 98 to 100 weight-%, such as from 99 to 100 weight-%, of a gas barrier polymer selected from polyvinyl alcohol, PVOH, or modified polyvinyl alcohol, per weight of dry polymer content, in the base coating. It is advantageous to use a pure or substantially pure base coating polymer of PVOH, because it provides good film formation properties, excellent gas barrier properties, cost efficiency, food compatibility and odour barrier properties. Small amounts of additives or modifying or processing agents may be included in the aqueous gas barrier composition.

Most preferably, the base coating comprises a gas barrier polymer selected from polyvinyl alcohol, PVOH, or modified polyvinyl alcohol at from 95 to 100 weight-%, such as from 97 to 100 weight-%, such as from 98 to 100 weight-%, such as from 99 to 100 weight-%, per weight of dry matter, in the base coating.

In a further specific embodiment, the aqueous oxygen gas barrier composition of the at least one gas barrier layer comprises starch or a starch derivative.

The base coating layer may generally be applied by means of aqueous dispersion or solution coating at a total grammage from 0.5 to 3 g/m², such as from 0.5 to 2 g/m² dry weight. Higher grammages also generally require higher drying capacity, or processing at lower coating speed, to remove more water from the aqueous coating compositions. Lower grammages are not capable of providing sufficient smoothness and thermostability, while higher grammages normally make the coatings more brittle and prone to cracking upon fold-forming of the substrate and the laminated packaging material.

In a further embodiment, the base coating has a composition comprising from 65 to 100 weight-%, such as from 70 to 100 weight-%, such as from 80 to 100 weight-%, such from 90 to 100 weight-%, of a polymer material selected from the group consisting of polyvinyl alcohol, PVOH, and modified polyvinyl alcohols, and from 0 to 35 weight-%, such as from 0 to 30 weight-%, such as from 0 to 20 weight-%, such as from 0 to 10 weight-% of an inorganic, laminar compound, based on the total dry weight of the base coating.

Suitable inorganic, laminar compounds to be used in any embodiment of the invention may be talcum particles, or clay particles having a high aspect ratio, such as bentonite or kaolin. Such flake-shaped particles may be organized in a layered structure in a dispersion coating at the time of application onto the substrate, such that any migrating molecules (such as oxygen, water vapour and other low-molecular substances) through the coated layer must follow a longer, so-called "tortuous path" through the layer, and practically be blocked, by being slowed down, from passing through the layer. The better exfoliation of the clay particles, the better such migration barrier properties will be.

The PVOH or modified polyvinyl alcohol used in the base coating preferably has a degree of hydrolysis of 98 mol-% or higher, such as of 99 mol-% or higher, both from oxygen barrier point of view and for good heat sealing results. Better coating and heat sealing results may be obtained when the PVOH or modified PVOH has a higher molecular weight (and thereby a higher viscosity in aqueous solution or dispersion), than a lower.

In a preferred embodiment, the PVOH may be Poval^{®} 15-99. Suitable grades of modified PVOH to be coated in the method of the invention may be Exceval^{®} 4104 AQ, which has similar coatability properties to Poval^{®} 6-98, and Exceval^{®} HR-3010, which has similar coatability properties to Poval^{®} 15-99. The modified PVOH polymers are mainly modified by a low comonomer content of ethylene from 3 to 15 mol-% and are also referred to as EVOH, ethylene vinyl alcohol, polymers. They are clearly different from melt processable (e.g. suitable for melt extrusion coating and lamination) EVOH, however, which have significantly higher ethylene contents from 30 mol-% and above.

For better induction heat sealability and induction heating durability, at critical areas of e.g. transversal sealing areas where the materials overlap, and also in view of better oxygen barrier properties, the base coating may be applied to a total amount from 0.5 to 2.5 g/m², such as from 1.0 to 2.1 g/m², such as from 1.0 to 2.0 g/m², such as from 1.1 to 2.0 g/m², such as from 1.0 to 1.8 g/m², such as from 1.1 to 1.8 g/m², such as from 1.2 to 1.8 g/m², such as from 1.2 to 1.7 g/m², such as from 1.3 to 1.7 g/m², based on dry weight.

In a second embodiment, the base coating comprises from 65 to 100 weight-%, such as from 70 to 100 weight-%, such as from 80 to 100 weight-%, such as from 90 to 100 weight-% of a material selected from the group consisting of starch, modified starch materials and cellulose ethers and from 0 to 35 weight-%, such as from 0 to 30 weight-%, such as from 0 to 20 weight-%, such as from 0 to 10 weight-% of an inorganic, laminar compound. It is believed that such a base coating would add even further thermostability to the barrier-coated cellulose-based substrate to endure heat sealing. It has been proven in connection to conventional metallization coating that such a base coating provides a more thermostable and durable base for the metallization at the critical heat sealing areas where materials layers overlap.

To provide sufficient oxygen gas barrier properties, depending on how well the base coating works for that purpose, it may be needed to apply a further gas-barrier top coating onto the oxygen-enriched barrier aluminium metallization coating. Such a further gas-barrier top coating preferably comprises a polymer selected from the group consisting of polyvinyl alcohol, PVOH, and modified polyvinyl alcohols, and is applied by means of aqueous dispersion or solution coating and subsequent drying onto the oxygen-enriched barrier aluminium metallization coating.

The gas-barrier top coating may further comprise a polymer or compound having functional carboxylic acid groups, such as a copolymer of ethylene with acrylic or methacrylic acid, EAA or EMAA. By adding some EAA an optimal adhesion of the top coating to the surface of the oxygen-enriched barrier aluminium metallization coating. The amount of such added polymer should be less than 50 weight-%, such as less than 40 weight-%, such as less than 30 weight-%, dry weight, of the total gas-barrier top coating.

Preferably, within the second embodiment, the base coating comprises a starch or modified starch material. A base coating of starch has in previous research proven to provide better thermostability during induction heat sealing, in that it provides a significantly lower risk for defect initiations in a subsequently coated, standard barrier aluminium metallization coating, from deposited aluminium metal vapour only.

The base coating may alternatively, or also, comprise a cellulose ether material. The base coating may instead of, or in addition to, a starch or starch-based material also comprise one or more cellulose ethers, selected from the group consisting of methyl cellulose, ethyl cellulose, carboxymethyl cellulose CMC, hydroxy ethyl cellulose HEC, hydroxy propyl cellulose HPC, hydroxypropylmethyl cellulose HPMC and sodium carboxymethyl cellulose NaCMC. Cellulose ethers can also form good covering coatings and provide smoothness, similarly to starch.

Methods suitable for coating of low dry-content base coating polymer dispersion/ solution compositions are broadly any suitable wet coating methods, such as gravure roll coating, smooth roll coating, reverse roll coating, wire bar coating, blade coating, lip coating, air knife coating, and curtain flow coating methods. Smooth roller coating, such as flexo coating or semi-flexo smooth roller coating, is preferred for best possible base coating quality in the present invention.

It is important that the coating applied is evenly coated, forming a continuous and coherent film on the surface and furthermore being defect-free, i.e. substantially without pinholes, blisters or coating misses. Even if a defect is very small, its effect on the barrier properties may be negative, which is not desirable. In non-foil packaging materials, i.e. materials without a thick metal foil that can ensure good barrier properties in general, it is very important to reduce the defects of the very thin and more sustainable material coatings to a minimum. It is advantageous to apply at least two coatings on top of each other, to cover and overlap any defects in the separate, thin coating layers.

Advantageously, the aqueous base coating composition is applied onto the cellulose-based substrate by a smooth roller coating method, such as by a flexo(graphic) or semiflexo roller coating method.

It has been concluded that a smooth roller coating method can provide a more even and coherent base coating layer, than previously seen with gravure or reverse gravure coating methods, in addition to more easily providing coatings having fewer defects, such as pinholes. The aqueous solution of PVOH could be applied with a higher viscosity and at a lower temperature, while foaming of the solution could be kept at a minimum, resulting in a better, coherent film formation having an even thickness throughout the full area extension of the base coating.

The solid content of the PVOH solution is suitably from 5 to 20 weight-%, such as from 7 to 15 weight-%. Preferably, the PVOH solution may be applied by a smooth roller method at a viscosity from 150 to 500 mPa*s, such as from 250 to 350 mPa*s. Advantageously, a flexo or semi-flexo smooth roller coating method is used with the viscosity ofthe PVOH solution being from 150 to 500 mPa*s, such as from 250 to 350 mPa*s. Such (semi-)flexo smooth roller coating may be performed at 300 m/min or above with high resulting quality of the base coating. The number of pinholes and defects in one single PVOH base coating, applied by a semi-flexo or flexo smooth roller coating method, may be kept at a minimum. The number of defects in the total base coating layer, which normally is applied by two coating and drying steps, was reduced to a fraction of what could be obtained by reverse gravure coating, even if the settings of the gravure coating method were balanced and optimised to perfection. In comparison to an optimised gravure coating method, the quality of the total base coating layer resulting from the smooth roller method was thus significant and defects were close to eliminated.

Moreover, any pattern that could be transferred from a gravure cylinder to the coating, will not occur when using a (semi-)flexo smooth roller method. The defect and pinhole occurrence were tested by an ink penetration detection method described in a previous, published international patent application from Applicant, i.e. WO2023174915.

To reduce or eliminate bubble- or foam-formation in the aqueous gas barrier polymer solution, a defoaming additive may be added. A suitable defoaming agent is n-octanol, which is both food safe and proved to provide a better effect at low amounts, than other tested agents, such as at a low amount from 0.01 to 0.1 weight-%, such as at about 0.05 weight-%, of the solution.

It is advantageous to dry the wet coated web consistently at low temperatures only, as the wet coatings of aqueous solution of gas barrier polymer are very thin and may be damaged by too forceful heating.

The drying step may be carried out by a hot air dryer, which also allows the moisture to evaporate and be removed from the surface of the substrate by the air convection. The substrate temperature may be kept constant at a temperature lower than 95 °C, such as lower than 90 °C, such as at from 65 to 90 °C, such as from 65 to 85 °C, such as from 70 to 85 °C such as from 75 to 85 °C, as it travels through the dryer. The drying may be partly assisted by irradiation heat from infrared IR-lamps, if needed at high lines speeds, in combination with hot air convection drying.

The base coating may be applied as two consecutive coatings with intermediate drying.

The aqueous base coating composition may in addition to the polymer comprise from about 1 to about 30 weight %, of an inorganic laminar compound based on dry coating weight, such as exfoliated nanoclay particles, such as bentonite. Correspondingly, the barrier layer may include from about 99 to about 70 weight % of the polymer based on the dry coating weight. An additive, such as a dispersion stabiliser, defoamer or the like, may also be included in the oxygen gas barrier composition, preferably in an amount of not more than about 1 weight % based on the dry coating. The total dry content of the composition is preferably from 5 to 20 weight-%, such as from 7 to 15 weight-%.

In an embodiment, the base coating may be applied in two, three or even four consecutive steps with intermediate drying, as part-layers. When applied as two part-layers or "part-coatings", each coating may suitably be applied in amounts from 0.2 to 1.0 g/m² and allows a higher quality total layer from a lower amount of liquid oxygen gas barrier composition. More preferably, the two part-layers may be applied at an amount of from 0.2 to 0.8 g/m² each.

It has been seen that a vapour deposited coating, such as a metallization coating, coated to mere tens of nanometre thickness, first requires a thin but defect-free base coating or pre-coating of a smoothening polymer applied onto the paper or cellulose-based substrate, to provide barrier properties, good sheet resistance and a good quality in the metallization coating itself. A well-functioning polymer for a base coating may thus be selected from aqueous vinyl alcohol polymers and copolymers, which also have inherent gas barrier properties, and which are food safe and environmentally sustainable both regarding recyclability and in industrial coating and lamination processes. Such polymers are water dispersible and/or dissolvable in water and are applied by means of an aqueous "dispersion coating" process, or a so called "liquid film coating" process.

Starch and starch-based polymers have a good smoothening effect. Generally, however, starch materials have significantly lower gas barrier properties, than PVOH.

For the purpose of high-frequency induction heat sealing, it has recently been understood that starch materials work significantly better as base coatings for receiving an induction-susceptible metallization layer, as regards standard metallization coatings. Starch materials seem to provide better thermo-mechanical stability in heat sealing operations, but also have a significant smoothening effect such that the initial roughness of substrate surfaces may be less crucial for the quality of subsequently applied thin barrier and metal coatings.

Suitable starch materials for such base coatings may be oxidised or modified starches suitable for aqueous dissolution at cold or ambient temperature, such as oxidised native potato starch or the like, because such cold water dissolved starches do not form gels in production. Examples of such suitable starch materials are Etenia^{®} or Solvicol^{®} 1290 from Avebe, the Netherlands.

The composition of the base coating may further comprise inorganic particles or filler material, such as talcum, kaolin and nanoclays, such as bentonite, montmorillonite and the like. The amount of inorganic material may be from 1 to 35 weight-%, such as from 1 to 30 weight-%, such as from 1 to 25 weight-%, such as from 1 to 20 weight-%, such as from 1 to 15 wt-% of the composition of the base coating, based on solid content.

The aqueous solution of the base coating composition may be applied evenly onto the surface of the top side of the web of the cellulose-based substrate by means of a roll coating method to provide a coating at an amount from 0.3 to 2 g/m², dry weight. Below 0,3 g/m², the starch will provide less of a smoothening effect to the cellulose substrate surface, while above 2, or even 1.5 g/m², the coating will be more difficult to dry and takes more energy and time for evaporating the water from the starch. A good smoothening effect is achieved by starch at 0,5 g/m² and above, and a good balance between coating layer quality and cost efficiency, is achieved at coating layers from 0,5 to 0.8 g/m². Often, a thicker coating of the starch material is desired in total, and thus at least one further coating step is added after the drying of a first coating layer has been completed.

Thus, the base coating may be applied in two consecutive steps with intermediate drying, as two part-layers. When applied as two part-layers, each layer is suitably applied in amounts from 0,2 to 1 g/m², such as from 0,2 to 0.8 g/m², dry weight, and allows a higher quality total layer from a lower amount of liquid base coating material composition.

Two part-layers of starch may thus be applied at an amount of from 0,2 to 1 g/m² each, but since the starch base coating can provide a very good smoothness coating by only a single coating, the metal coating may obtain sufficiently good quality by only one such base coating. Consequently, thanks to the smoothness and high quality of the metal coating applied onto the starch base coating, it seems to be also sufficient to apply only one single gas barrier coating as a top coating and still obtain very good gas barrier properties altogether, and good high-frequency induction heat sealing capability.

Almost all polymer materials suitable for dispersion coating of water-dispersible or water-soluble compositions to provide oxygen barrier properties have the disadvantage that their oxygen barrier deteriorates with increasing humidity in and surrounding the dried material layer. Thus, a coating or layer capable of providing barrier properties towards migrating water vapour is needed to keep the oxygen barrier layer(s) dry. Most barrier deposition coatings, applied by vapour deposition methods, provide good water vapour barrier properties. Depending on deposition method, quality and thickness, they also provide more or less of oxygen barrier properties. Metallization coatings provide mainly water vapour barrier, but may also provide quite some oxygen barrier, provided they are of a good coating quality and sufficient thickness.

Next, the method of coating the barrier-coated cellulose-based substrate of the invention thus comprises a step of vapour depositing an oxygen-enriched barrier aluminium metallization coating onto the first applied base coating, obtained from the applied and dried aqueous solution of the thermostable polymer, by means of physical vapour deposition (PVD).

Such thin vapour deposited metallization coating layers are nanometre-thick, i.e. they have a thickness counted in nanometres. Normally, standard aluminium metal vapour metallization coatings for general purpose decoration or barrier have a thickness below 70 nm, such as below 50 nm, and provide metallic, shiny coatings with an optical density of about 1.5-2.0.

Metallization coatings may be applied by different physical vapour deposition (PVD) techniques based on evaporation of metal, such as resistive evaporation, electron-beam evaporation, induction evaporation, pulsed laser deposition (PLD) and the slower sputtering techniques, which cause evaporation by bombardment with high-energy particles.

Generally, below 5 nm the barrier properties and quality of a conventional, standard aluminium metallization coating would be too low, i.e. a standard metallization coating would have too low barrier properties to provide sufficient gas barrier together with a gas barrier dispersion coating, and would have a too high sheet resistance for the purpose of induction heating, and above 200 nm, such as at 100 nm and above, such as above 80 nm, depending on the quality of the standard aluminium metal vapour deposition coating, the barrier coating may be less flexible and, thus, more prone to cracking when applied onto a flexible substrate.

The oxygen-enriched barrier aluminium metallization coating applied in to the present invention preferably has a total thickness from above 100 nm to 150 nm, such as from 101 nm to 150 nm, such as from 105 nm to 150 nm, such as from 105 nm to 145 nm, such as from 105 nm to 140 nm, such as from 110 to 140 nm, such as from 110 to 135 nm, as measured by transmission electron microscopy, TEM or by X-ray fluorescence calibrated with TEM known thickness samples, following sample preparation by ultramicrotomy as described herein.

The aluminium content of such a thin metallization coating corresponds to less than 2 percent of the aluminium metal material present in an aluminium foil of conventional thickness for packaging, such as about 6 µm.

Preferably, the oxygen-enriched barrier aluminium metallization coating exhibits a sheet resistance from 0.3 to 0.6 Ω/□, such as from 0.4 to 0.6 Ω/□ (Ohms per square), as measured by an instrument for contactless eddy current measurement.

The barrier-coated cellulose-based substrate with the oxygen-enriched barrier aluminium metallization coating has a metallic, opaque appearance similar to that of a standard aluminium metallization coating, i.e. may have an optical density above 2, preferably above 3, such as 4 or above, such as 4.5 or above.

It is to be noted that the optical density of a coated paper substrate may be influenced also by the properties of the paper substrate, not being a transparent layer and contributing to hindering light from being transmitted through the layers of the coated paper substrate. Generally, at an optical density (OD) lower than 1.8, the barrier properties of a metallised substrate may be too low and at an OD lower than 2.0, the sheet resistance may be too high for use in high frequency induction heat sealing. At an OD above 5, such as above 6, however, the deposited metal layer may become unnecessarily expensive and more sensitive to mechanical stress and less flexible, thus forming cracks or defects which may in turn impair oxygen barrier properties as well as induction heat sealing properties. These limits are not the same for different paper substrates, however, and can vary greatly. For natural reasons, it is not possible to remove the metallization layer from the paper substrate and measure the OD independently of the paper.

While vapour deposited metallization coatings require significantly less metal material than a foil of metal, they only provide a lower level of oxygen barrier properties and need to be combined with a further gas barrier material to provide a final laminated material having sufficient barrier properties. On the other hand, they may efficiently interact with and complement and protect a gas barrier layer like PVOH, which does not provide inherent water vapour barrier properties and whose gas barrier properties are very sensitive to moisture.

Normally, an aluminium metallization coating layer inherently includes also a thin surface portion comprising aluminium oxide, which is inherently formed towards and after the end of the metallisation coating process by reaction with oxygen when exposed to air.

A vapour deposited "pure," standard aluminium metallization coating onto PVOH seems to form such a thin boundary layer of practically pure aluminium oxide having the average formula Al₂O₃, also at the interface towards the PVOH substrate surface after a longer, sufficient time has passed. After several months of storage, up to half a year, the metallization coating exhibits a thin aluminium oxide layer also at the bottom, substrate side of the coating. After such time, there will be no further change in thickness of the Al₂O₃ "bottom", boundary, sub-portion of the metallization coating. It is believed that this may be due to having reached a "steady-state" equilibrium or a reached maximum level, similar to the "passivation of aluminium", i.e. similar to the formation of aluminium oxide, Al₂O₃, on the top surface of the aluminium metallization coating, such that the standard metallization deposition coating has reached its final configuration of aluminium oxide versus pure metal aluminium content in its depth or z-directional, i.e. thickness, extension of the metallization coating.

Accordingly, a standard aluminium metallization coating provides a higher sheet resistance when aged for some months, than what can be measured immediately after production and deposition of the coating, because some of the pure metal coating is gradually transformed into aluminium oxide, Al₂O₃. The change seems to happen more quickly in a climate of higher temperature and/or higher moisture, such as in a filled packaging container.

Regarding the oxygen-enriched aluminium metallization deposition coating as according to the present invention, this equilibrium content of aluminium oxide at the interface to the surface of the substrate, i.e. at the "bottom" of the coating, is reached during and very soon after, almost immediately after deposition coating of the aluminium metallization coating, i.e. within hours only.

For high frequency induction heat sealing, it is important to ensure that the metallization coating has a required low sheet resistance. The sheet resistance of the metallization coating should be as low as possible. A feasible level has so far been found at about 0.4 up to 0.7 Ω/□, but a lower value of sheet resistance than 0.5, such as 0.4, such as 0.3 or even lower, may be desirable for better functioning in induction heat sealing of the material. Thus, to obtain a low enough sheet resistance from a standard metallization coating, it seems necessary to apply more pure metal than measured to be sufficient at the time of manufacturing of a conventional, standard metallization coating.

By instead applying an oxygen-enriched aluminium metallization deposition coating as according to the present invention, it appears there will be no further such change to the coating, i.e. the first phase aluminium oxide sub-portion of the layer will be formed at the time of coating and will increase no further in thickness or amount with time. The barrier-coated cellulose-based substrate achieves the desired sheet resistance during manufacturing and will consistently retain this resistance from that point onward (up to a 0.03 Ω/□ precision of measurements). It is perceived that the thickness of the first and third sub-portions of the layer, with aluminium oxide at the bottom and top parts of the thus oxygen-enriched aluminium metallization coating may be approximately the same, however, as obtained eventually after longer time of storage, in a standard metallization coating.

Yet, the two different types of coatings, although they may be designed and produced to finally have the same level of sheet resistance, seem to have very different properties. There is a clear difference in the thickness of the total deposition coating, as measured by TEM after sample preparation by ultra microtomy, in an oxygen-enriched aluminium metallization coating, having the required sheet resistance. The oxygen-enriched aluminium barrier metallization coating is about 30 % thicker than a standard metallization coating. However, the initial or "bottom" phase boundary layer at the substrate interface (the first sub-portion of the coating layer) adds very little to the overall thickness, contributing only about 3 to 4.5 nm in both types of metallization coatings This also indicates that the second sub-portion of the layer with a higher aluminium metal content contains a higher proportion of oxygen compared to the standard metallization coating, presumably also in the form of aluminium oxide, which has further been seen by comparable TOF-SIMS analysis of the two corresponding coatings.

Comparative analyses of oxygen-enriched and aged standard aluminum metallization coatings indicate that both contain the same type of oxygen (present as aluminum oxide with the average formula Al₂O₃) throughout the coating, including the second aluminum metal sub-portion of the layer, but at varying concentrations. A low amount of aluminium hydroxide is also detectable in the coatings at the first and third sub-portions of the layer , i.e. at the interface and at the surface portions. Given the great improvement effects seen in developing the present invention, it seems there should be further differences between the two principal metallization coatings, but it has been difficult to identify clear differences.

One clear difference seen by Dynamic Time of Flight Secondary ion Mass Spectroscopy, ToF-SiMS analysis of the coatings, as depicted by an intensity-versus-time diagram by surface analysis, is that the oxygen-enriched aluminium metallization coating in the first sub-portion at the interface towards the substrate surface contains no methyl aluminium , i.e. CH3Al+, or virtually none. This is different from a standard metal aluminium metallization. Accordingly, the first aluminium oxide sub-portion of the oxygen-enriched barrier aluminium metallization coating, which is at the interface of the metallization coating towards the surface of the base coating, contains no, substantially none, or at least significantly fewer, methyl-aluminium ions, CH3Al+, in comparison to a corresponding sub-portion at the same interface towards the base coating of a standard, aluminium metal metallization deposition coating. Methyl aluminium ions seem to be fully oxidized at the interface towards the base-coated substrate in the oxygen-enriched barrier aluminium metallization coating, while some methyl aluminium ions remain in a standard metallization coating, even if aged for more than several months, such as for a year. In an aging standard aluminium metallization coating, on the other hand there is gradually also formed aluminium oxide in the sub-portion of the coating at the interface towards the substrate, but such gradual (ageing) formation of aluminium oxide, even if completed or at equilibrium, is different in that there clearly are remaining methyl aluminium ions in the first sub-portion at the interface towards the base coating.

Further differences seem to relate to concentration levels of substances and ions in the coatings, rather than to the more easily detectable absence or presence thereof.

There has been seen a further clear difference in that the oxygen-enriched barrier aluminium metallization coating may give rise to a yellow colour or yellowish appearance of the metallization coating, especially after melt extrusion coating with a transparent polymer coating. Such a yellow colour or yellow strips or yellowish appearance is never seen with a standard, not oxygen-enriched aluminium metallization, however, and is believed to appear due to moisture in the cellulose-based substrate somehow interacting with the oxygen-enriched aluminium barrier metallization.

It is believed that these yellow features may be caused by interaction during the PVD deposition coating process between the oxygen and the hydroxyl content of the PVOH molecules of the substrate surface, and that it may provide the same or a similar effect with other substrate surfaces comprising hydroxyl groups, such as from starch or suitable cellulose derivatives.

Moreover, it has been observed that the oxygen-enriched barrier aluminium metallization coating has larger grain size than a corresponding standard metallization coating (as otherwise manufactured under the same conditions), as analysed by Atomic Force Microscopy, AFM, according to ASTM E2859-11 (2023). While the former coating may have an average grain size of about 45 nm, the latter may have an average grain size in the coating of about 35 nm, for example. The aluminium oxide layer formed in the first sub-portion, at the interface to the substrate in the oxygen-enriched aluminium metallization coating, influences crystal growth of the aluminium layer formed in the second sub-portion, thus resulting in larger grains and fewer boundary layers, seemingly having a positive impact on the coating properties. We have seen consistently that the oxygen-enriched aluminium metallization coating has larger grains and a rougher surface than the standard metallization coating.

The first aluminium oxide sub-portion of the oxygen-enriched barrier aluminium metallization coating of the present invention is thus a completely oxidized aluminium oxide having the formula Al₂O₃. The thickness of the first sub-portion is from 3 to 5 nm, preferably from 3 to 4.5 nm, as measured by TEM in combination with TOF-SIMS analysis, as described herein.

The great effects obtained in the barrier-coated cellulose-based substrate of the invention are that it exhibits a remarkably improved durability in high frequency induction heat sealing and that it seems particularly resistant to long-term moisture conditions when laminated into polymer-layered structures and used for packaging of oxygen-sensitive food, in particular liquid or semi-liquid food products.

There is no need for further layers for moisture protection or water vapour barrier properties and no further materials are needed to introduce better electrical and mechanical properties, than merely PVOH, modified PVOH or e.g. starch and the oxygen-enriched aluminium barrier metallization. More specifically, there is no need for additional pre-coatings or material layers in the barrier-coating structure to act as a water barrier for the moisture sensitive parts thereof, such as of a PVOH base coating. Liquid-tight layers, such as those of thermoplastic polymers such as polyolefins or modified polyolefins, such as ethylene copolymers with (meth)acrylic acid, EAA or EMAA, should be avoided within the barrier coating structure to allow equalization of moisture between the base coating and the cellulose-based substrate layer. Preferably, the only liquid barrier present in the structure is the oxygen-enriched barrier aluminium metallization coating. Otherwise, more moisture could be accumulated within the moisture sensitive base coating, which would deteriorate its oxygen barrier properties.

For the PVD coating process to work optimally, the moisture content in the paper or cellulose-based substrate should preferably be kept at from 4 to 8 %. If the substrate becomes too dry, it may curl its longitudinal edges toward each other and cause coating and handling problems in the method of the invention. If the moisture content becomes too high, on the other hand, the vapour deposition coating operation may not function properly to provide a high-quality coating.

The adhesion of any standard aluminium metal metallization coating, as well as of an oxygen-enriched barrier aluminium metallization coating, to the base coating is excellent, both in the case of a PVOH base coating and in the case of a starch base coating. In peel testing, to investigate the adhesive forces, there will thus be fibre tear in the paper substrate rather than between the PVOH and the metallization coating. The adhesion between an oxygen-enriched metallization coating and the inside polymer layer structure in a laminated material comprising the barrier-coated cellulose-based substrate is equally good and thus also provides fibre tear within the substrate.

The oxygen-enriched barrier aluminium metallization coating may optionally be further "top coated" with a thin aqueous solution composition comprising a thermostable gas barrier polymer. The top coating may need to add some thermostability in induction heat sealing, such that it does not melt or deteriorate, whereas an adjacent heat sensitive material layer would soften or melt. Thus, the top coating polymer should preferably have a melting point which is higher than that of the material to be molten and heat sealed. The thermostable polymer of the aqueous solution composition for the top coating may also suitably be a polymer or copolymer based on vinyl alcohol monomers, i.e. selected from polyvinyl alcohol (PVOH) and modified PVOH, including water dispersible ethylene-modified PVOH or so-called water-dispersible ethylene vinyl alcohol copolymers, EVOH_{aq}, such as of the type Exceval^{®} from Kuraray, which can form aqueous dispersions or solutions.

In an embodiment, the water-soluble gas barrier polymer is PVOH, such as a PVOH of the type Poval^{®} from Kuraray, which also provides good film formation properties, gas barrier properties, cost efficiency, food compatibility and odour barrier properties.

Ethylene-modified PVOH polymers, EVOH_{aq}, are clearly different from thermoplastic, conventional EVOH polymers, normally intended for melt extrusion and which are not possible to disperse or dissolve in water. Such melt processable EVOH have conventionally an ethylene content of more than 30 mol%. The modified PVOH on the other hand, comprises a much higher amount of vinyl alcohol monomer units to be water-dispersible and the properties are very close to those of PVOH. It also exhibits a melting point which is higher than that of the material layer to be heat sealed, and accordingly is sufficiently thermostable for supporting the metallization coating and enduring an induction heat sealing operation.

A melt extruded EVOH layer, on the other hand, is not an alternative to a dispersion-coated modified PVOH, because it inherently has different properties from PVOH. Moreover, EVOH cannot be applied by melt extrusion coating or melt extrusion lamination at sufficiently low thickness and with sufficient adhesion to adjacent layers, without involving so-called tie layers of an adhesive polymer, while aqueous dispersion-coating of an ethylene-modified PVOH can be applied in very thin coatings such as from 0.5 to 4 µm.

For optimal oxygen gas barrier properties, a PVOH-based composition performs best when the PVOH has a degree of saponification of at least 98%, preferably at least 99%, although also PVOH with lower degrees of saponification would provide some oxygen barrier properties.

In a preferred embodiment, the PVOH may have a degree of hydrolysis of 99% or higher, such as in Poval^{®} 15-99 from Kuraray.

Suitable grades of modified PVOH to be coated in the method of the invention may be Exceval^{®} 4104 AQ, which has similar coatability properties to Poval^{®} 6-98, and Exceval^{®} HR-3010, which has similar coatability properties to Poval^{®} 15-99.

The method of manufacturing the barrier-coated substrate as of the second aspect, may thus further comprise the optional steps of
g) applying an aqueous solution or dispersion of a gas-barrier top coating material onto the oxygen-enriched barrier aluminum metallization coating,
h) drying the applied aqueous solution or dispersion from the previous step to provide a gas-barrier top coating, and
i) optionally repeating the above steps g) and h),
the steps g), h) and i) to be performed after step f2).

The method may further comprise a step of
j) coating the surface of the gas-barrier top coating with at least one heat sealable layer of thermoplastic material(s), the heat resistant gas-barrier top coating having a higher melting temperature than the thermoplastic material(s).

A possible additive in the barrier top coating composition may be a polymer or compound with functional carboxylic acid groups, for the purpose of improving the water vapour and oxygen barrier properties of a PVOH top-coating and in particular to improve the adhesion of the top-coating to the metallised coating on the surface of the coated cellulose-based substrate. Suitably, such polymer with functional carboxylic acid groups may be selected from among ethylene acrylic acid copolymer (EAA) and ethylene methacrylic acid copolymers (EMAA) or mixtures thereof. An EAA or EMAA copolymer may be included in the barrier top coating in an amount of from 1 to 49 weight-%, such as from 1 to 40 weight-%, such as from 1-35 weight %, such as from 1 to 30 weight-%, such as from 1 to 25 weight-%, such as from 1 to 20 weight-%, such as from 1 to 15 weight-%, based on dry coating weight.

In an embodiment, the top coating may be applied as two consecutive layers, wherein the first coating layer comprises a higher proportion of EAA adhesive polymer, and the remainder being PVOH, while the second coating layer may comprise a major proportion of PVOH, or PVOH only. Accordingly, both good adhesion to the metallisation surface and good gas barrier properties may be provided at optimal level by the top coating layers. With a high content of EAA or EMAA, the thermostability may be lower, however, and it is less optimal for induction heat sealing properties.

In one embodiment, such a barrier layer mixture may essentially consist of PVOH, EAA and an inorganic laminar compound, such as comprising from about 1 to about 10 weight-%, based on dry coating weight, of an inorganic laminar compound, such as talcum, kaolin or exfoliated nanoclay particles, such as bentonite.

The aqueous solution of the gas barrier polymer of the top coating may be applied evenly onto the surface of the top side of the web of the metallized cellulose-based substrate by means of a roll coating method to provide a coating at an amount from 0.5 to 2 g/m², preferably from 0.5 to 1.5 g/m², dry weight.

In a case where the base coating provides insufficient gas barrier properties, a surface weight of the top coating below 0,5 g/m², may provide insufficient gas barrier properties altogether, while above 2 g/m², the coating may neither bring cost-efficiency to the packaging laminate, due to high energy cost and the short time available (because of high coating line speed) for evaporating the water, nor for induction heat sealability properties. A recognisable level of oxygen barrier is achieved by PVOH at 0,5 g/m², and above, and a good balance between barrier properties, coating layer quality and cost, may be achieved at coating layers from 0,5 to 2.0 g/m².

For good thermostability, the top coating may alternatively comprise a starch polymer. Suitable starch materials for such top coatings may be oxidised or modified starches suitable for aqueous dissolution at cold or ambient temperature, such as oxidised native potato starch or the like, because such cold water dissolved starches do not form gels in production. Examples of such suitable starch materials are Etenia^{®} or Solvicol^{®}1290 from Avebe, the Netherlands.

The thermostable gas-barrier top coating composition may further comprise a low amount, such as from 1 to about 20 weight %, such as from 1 to about 15 weight %, based on dry coating weight, of an inorganic laminar compound, such as talcum, kaolin or exfoliated nanoclay particles, such as bentonite. In such cases, the barrier layer may include from about 99 to about 80 weight %, such as from 99 to 85 weight%, of the polymer based on the dry coating weight.

Such a top coating may provide good oxygen barrier and thermostability properties, and surprisingly also show resistance to deterioration (i.e. no or very low increase) of the low OTR from high relative moisture content of 80 % (RH), although the gas barrier coating is positioned on the inside of the metallisation coating in a laminated packaging material, such that it is more exposed to migration of water vapour from a liquid or wet product in a filled packaging container. Thus, it is suitable for lamination into a laminated packaging material and further for the fold-forming and sealing operations of such a laminated material into packages.

The aqueous solution composition of the thermostable gas-barrier top coating may be applied in the same way by a similar dispersion coating method to that of the base coating.

The heat sealable laminated packaging material of the first aspect thus comprises as layers of a layer sequence, as viewed from outside to inside of a packaging container formed from the laminated packaging material,
an outermost, transparent, and protective material layer,
a barrier-coated cellulose-based substrate described and defined above,
an inside polymer layer structure applied on the inner side of the barrier-coated cellulose-based substrate, comprising at least
an innermost, heat sealable, liquid tight layer, which comprises a thermoplastic material and is intended to be in direct contact with a filled food product in a packaging container manufactured from the laminated packaging material.

The heat sealable laminated packaging material may further comprise a bulk layer of paper, paperboard or other cellulose-based material laminated between the outermost, transparent and protective material layer and the barrier-coated cellulose-based substrate. This is the typical laminate structure for liquid carton flowable food and beverage packaging and the most preferred laminated packaging material to make use of the barrier-coated cellulose-based substrate of the invention.

The bulk layer may contribute to the bending stiffness of the laminated packaging material, and to dimensional stability of fold-formed packaging containers made thereof, to withstand strong, acting forces created by movement in the packed content of for example liquid and viscous oxygen-sensitive products, during distribution, handling and storage. In such a laminate, the oxygen-enriched barrier aluminium metallization coating is directed towards the inside of the packaging container, i.e. such that the cellulose-based substrate is directed towards the bulk layer while the barrier coatings are directed towards the innermost layer.

A suitable paper or paperboard bulk layer for use in the invention usually has a thickness of from about 70 µm up to about 600 µm, and a surface weight of approximately from 65 to 500 g/m², such as from 100-400 g/m², preferably from about 200 to 300 g/m², and may be a conventional paper or paperboard of suitable packaging quality. Clay-coated duplex paperboard is preferred. For larger packages a paperboard of 400 to 500 µm and higher bending stiffness is preferred, such as 260 mN. For portion packs of 150 to 250 mL size, a bending stiffness of 80 mN is preferred and accordingly a lower surface weight and thickness.

In the case the resulting laminated material is to be used as a pouch package, thinner paper layers may be used for the barrier-coated cellulose-based substrate and as well as for the bulk layer, which then together create the bulk strength or stability of the paper laminate. In such cases, the additional "bulk" paper may have a grammage from 40 to 64 g/m², such as from 40 to 55 g/m², and the barrier-coated paper substrate may have a grammage weight from 40 to 55 g/m².

For low-cost aseptic, long-term packaging of liquid food, a thinner packaging laminate suitable for pouch packages may thus be used, having a thinner paper core layer. The packaging containers made from such packaging laminates are not fold-formed but are more similar to pillow-shaped flexible pouches. A suitable paper for pouch-packages usually has a surface weight of from about 50 to about 140 g/m², preferably from about 70 to about 120 g/m², more preferably from 70 to about 110 g/m². As the barrier-coated paper or cellulose-based substrate of the invention in itself may contribute with some stability to the laminated material, the paper layer corresponding to a "bulk" layer may be even thinner and interact with the barrier-coated cellulose-based substrate in a sandwich interaction to still produce a laminated packaging material having the desired mechanical properties.

The barrier-coated cellulose-based substrate may be bonded to the bulk layer by an interjacent bonding layer of a thermoplastic polymer. The thermoplastic polymer may be used as a bonding layer by melt-extrusion lamination to join a web comprising the barrier-coated cellulose-based substrate to a web comprising the bulk layer, in a lamination roller nip, in which the molten, interjacent thermoplastic polymer is cooled and solidified to form the interjacent bonding layer. This is a preferred embodiment as it fits nicely into already installed and producing, extrusion-lamination converting lines for the purpose of laminating liquid carton packaging materials. It has recently been concluded that only a low surface weight of a melt extrusion laminated thermoplastic polymer, such as LDPE, is needed for obtaining excellent adhesion between the bulk layer and the cellulose-based substrate. This is advantageous both to keep the total proportion of polymers down and for recyclability, as such a laminated packaging material has proven, contrary to expectations, to be sufficiently quick to repulp into the used beverage carton, UBC, recycling stream. A suitable surface weight for such melt extrusion lamination of a thermoplastic bonding layer is from 6 to 10 g/m², such as from 7 to 9 g/m².

An alternatively feasible lamination method suitable for recycling, is aqueous adhesive wet lamination of the two layers to each other by an aqueous adhesive and pressing the webs to be joined together in a lamination roller nip. Such a lamination method may reduce the total polymer proportion in the laminated material further and allows fast repulping but needs new installations and investments into extrusion lamination facilities. The gain in comparison to melt extrusion lamination is only a very few grams per square meter, however. Aqueous wet lamination still requires from 0.5 to 6 g/m², such as from 1 to 6 g/m², such as from 1 to 5 g/m², such as from 3 to 5 g/m² of an aqueous adhesive polymer, per dry weight, for adequate adhesion. The barrier-coated cellulose-based substrate may thus be laminated to the bulk layer by an intermediate bonding layer from a composition comprising a water-dispersible binder, such as selected from the group consisting of acrylic polymers and copolymers, polymers and copolymers of vinyl acetate and/or vinyl alcohol, biobased binders, such as starch-based binders, binders based on cellulose or cellulose derivatives and binders based on other polysaccharide derivatives.

The barrier-coated cellulose-based substrate may thus be laminated to the bulk layer by wet application of a dispersion of an aqueous adhesive composition comprising an adhesive polymer binder onto one of the web surfaces to be laminated and pressing the two paper webs together while they are forwarded through a lamination roller nip, thus providing a laminated structure by wet lamination. The moisture of the aqueous adhesive composition is absorbed into the fibrous cellulose network of the two paper layers, and partly evaporating with time, during the subsequent lamination processes. There would thus be no need for a forced drying step. The barrier-coated cellulose-based substrate may be laminated to the bulk layer by from 0.5 to 6 g/m², such as from 1 to 6 g/m², such as from 1 to 5 g/m², such as from 3 to 5 g/m², dry weight, of an interjacent bonding composition comprising a binder selected from the group consisting of acrylic polymers and copolymers, starch, starch derivatives, cellulose derivatives, polymers and copolymers of vinyl acetate, polymers and copolymers of vinyl alcohol, copolymers of styrene-acrylic latex or styrene-butadiene latex or adhesive bio-latexes. For best possible environmental and sustainability profile, adhesive binders originating from plants or non-fossil sources are preferred.

Such a low amount of an interjacent bonding composition is only possible to apply by aqueous dispersion or solution coating of a polymer binder and is not possible to apply by extrusion coating or extrusion lamination of a single-layer polymer melt due to the nature of the molten-layer extrusion process. Since the surfaces of the layers to be laminated together are both made of cellulose, aqueous wet lamination is performed by the absorption of the aqueous medium into the respective cellulose layers, and thus a thin and dry bonding layer at the interface between the two layers may be formed.

Suitable materials for the outermost and innermost layers of the heat sealable laminated packaging material may be thermoplastic polymers, such as polyolefins such as polyethylene and polypropylene homo- or co-polymers, such as polyethylenes and more preferably polyethylenes selected from the group consisting of low density polyethylene (LDPE), linear LDPE (LLDPE), single site catalyst, so-called "metallocene" linear low density polyethylenes (m-LLDPE) and blends or copolymers thereof. Such thermoplastic polymers also have the advantage of being readily weldable, i.e. heat sealable, to the same or similar polymers and to other materials with thermoplastic behaviour.

The outermost, transparent, and protective material layer may be a liquid tight, heat sealable layer of a polyolefin-based polymer, such as polyethylene-based polymer, such as low density polyethylene, LDPE. Such an outermost, liquid tight and heat sealable layer usually is applied at a surface weight from 7 to 15 g/m², such as from 7 to 12 g/m², such as from 7 to 10 g/m². Such a polyolefin-based polymer is applied by melt-extrusion coating.

In another embodiment, the outermost layer may be merely protective towards liquid and dirt, such that any sealing of the outside surface to another surface or item, such as an opening device or the like, will be carried out by an additional glue or hot melt. Thus, if a significantly thinner outermost layer is desired, not necessarily providing complete tightness to liquids but still some moisture and dirt resistance, an aqueous dispersion of a polyolefin-based polymer, such as a water dispersible copolymer of ethylene acrylic acid with a rather high content of acrylic acid comonomers, such as more than 20 mol% of acrylic acid comonomer may be used. The surface weight may then be reduced to from 4 to 8 g/m², such as from 4 to 7 g/m². Such low amounts of polymer in the outermost layer may not be recoverable to a polymer recycling stream from UBC recycling, however, but the polymer would rather be entirely re-dispersed into the fibre recycling stream or dissolved in the repulping liquid, or fragmented and form part of the actual fibre stream. Thus, it may be preferred to recover the polymer applied on the outside as a solid polymer fraction instead. Consequently a layer of melt extrusion coated LDPE at from 7 to 10 g/m² may be equally advantageous.

The innermost layer of the liquid tight, heat sealable laminated packaging material may also be a thermoplastic polymer, such as a polyolefin, such as a polyethylene, such as from the group consisting of low density polyethylene, LDPE, linear low density polyethylene, LLDPE, and blends thereof. Preferably, the innermost layer is a blend of low density polyethylene, LDPE, and metallocene-catalysed (using a single-site or constrained-geometry catalyst), linear low density polyethylene, m-LLDPE. This is the type of polymer most used today for the innermost layer, for best balanced liquid tightness and heat-sealability properties. By choosing the composition of this layer carefully, the amount of polymer in this layer may be optimised to be as low as possible while still producing strong and reliable, filled packages.

According to an embodiment, the outermost heat sealable and liquid-tight layer may be an LDPE, while the innermost heat sealable, liquid-tight layer may be a blend composition of m-LLDPE and LDPE for optimal lamination and heat sealing properties. The thermoplastic material of the innermost liquid tight, heat sealable layer may thus be a thermoplastic polymer, such as a polyolefin-based material, such as a polyethylene-based polymer, such as a blend of a linear low-density metallocene-polyethylene, m-LLDPE, and low-density polyethylene, LDPE. An optimal composition of such an innermost layer tight, heat sealable material layer may be a blend comprising from 50-90 weight-% of a linear low density polyethylene catalysed by a metallocene-type catalyst, m-LLDPE, and from 10 to 50 weight-% of a low density polyethylene, LDPE.

Preferably, the innermost liquid tight, heat sealable material layer has a density lower than 0.93 g/cm³, such as lower than 0.92 g/cm³, such as lower than 0.915 g/cm³.

Preferably, the innermost liquid tight, heat sealable material layer has a major melting point from 88 to 110 °C. In a preferred embodiment, the thermoplastic material of the innermost liquid tight, heat sealable layer may be a pre-manufactured polyolefin film, such as a polyethylene film, such as a biaxially oriented polyethylene film comprising a major proportion of linear low density polyethylene, LLDPE, or linear low density metallocene-polyethylene, m-LLDPE, for improved robustness of the mechanical properties of the laminated packaging material. The innermost, pre-manufactured, polyethylene film is laminated to the inner side of the barrier-coated cellulose-based substrate by a melt extrusion laminated layer, such as comprising a first sub-layer of an adhesive polymer, such as EAA, to contact the oxygen-enriched barrier aluminium metallization coating, and a second major bonding sub-layer, such as comprising LDPE, contacting the innermost, pre-manufactured film.

In another preferred embodiment, the inside polymer layer structure applied on the inner side of the barrier-coated cellulose-based substrate may comprise an interior layer comprising high-density polyethylene, HDPE, medium-density polyethylene, MDPE, or a linear low-density polyethylene, LLDPE, the LLDPE having a melt flow ratio, MFR, from 4 to 20 g/10 min (190 °C/ 2.16 kg) and a melting temperature above 115 °C. Such an interior layer may be referred to as a load-bearing layer, which improves the overall package integrity of the laminated packaging material. The innermost liquid tight, heat sealable layer is then suitably a blend of a linear low-density metallocene-polyethylene, m-LLDPE, and low-density polyethylene, LDPE, as described above.

Other suitable bonding or tie layers in the interior of the laminated material, such as for example between the bulk or core layer and the barrier-coated cellulose-based substrate, or between the innermost, liquid tight and heat sealable layer and the barrier-coated cellulose-based substrate, may alternatively be so-called adhesive thermoplastic polymers, such as modified polyolefins, which are mostly based on LDPE or LLDPE co-polymers or, graft co-polymers with functional-group containing monomer units, such as carboxylic or glycidyl functional groups, e.g. (meth)acrylic acid monomers or maleic anhydride (MAH) monomers, (i.e. ethylene acrylic acid copolymer (EAA) or ethylene methacrylic acid copolymer (EMAA)), ethylene-glycidyl(meth)acrylate copolymer (EG(M)A) or maleic anhydride (MAH) grafted polyethylene (MAH-g-PE). Another example of such modified polymers or adhesive polymers are so called ionomers or ionomer polymers. Preferably, the modified polyolefin is an ethylene acrylic acid copolymer (EAA) or an ethylene methacrylic acid copolymer (EMAA). General bonding layers such as polyolefin layers, and layers of adhesive polymers, i.e. so-called adhesive layers or tie layers, may be applied as co-extruded, adjacent layers for optimal interior polymer properties and bonding properties. For the sake of recycling of polymers and keeping the number of different polymers to a minimum in recycling, such polymers would be used on a need-basis only, to obtain better adhesion if needed only, and would preferably be avoided as far as possible.

The outer- and innermost, liquid-tight layers and the lamination layers in the interior of the laminate structure, do not normally and inherently add high barrier properties to migrating gas molecules or small molecules. Their purpose is to provide a direct barrier to water in liquid form from penetrating through to the cellulose-based bulk material and other paper layers. The liquid barrier layers also prevent water vapour from migrating to the cellulose to the extent that it gets wet but are not capable of keeping the moisture content of the laminated structure at zero or at the low level of "dry" paper (which is at about 7-8 % in an environment at ambient temperature, i.e. at 23 °C, and 50 % relative humidity, RH). The moisture content in the laminated carton material of a packaging container filled with liquid is usually rather high and migration through the material occurs, unless there is a further water vapour barrier included, such as an aluminium foil, a vapour deposited metallisation layer, other vapour deposition coating, inorganic material layer or other polymer barrier material layer.

In a preferred embodiment, an interior, interjacent layer comprising a high-density polyethylene, HDPE, medium-density polyethylene, MDPE, or a linear low-density polyethylene, LLDPE, the LLDPE having a melt flow ratio, MFR, from 4 to 20 g/10 min (190 °C/ 2.16 kg) and a melting temperature above 115 °C, is adjacent and in direct contact with the innermost liquid tight, heat sealable material layer. By such an inside polymer layer configuration, a more cost-efficient and well-functioning packaging laminate is provided. As few as possible melt extrusion polymer streams are needed, requiring as few extruders as possible, while yet combining all positive functionality and properties needed in an inside polymer multilayer structure, i.e. heat sealability, liquid-tightness, load-endurance (upon folding and straining) to provide good package integrity, good adhesion to the barrier layer portion, as well as good openability of the packaging laminate through a pre-cut, laminated straw-hole or a larger hole intended for an opening device.

Preferably, the inside polymer layer structure further comprises a tie layer comprising an adhesive polymer adjacent and in contact with the barrier-coated, inner side of the barrier layer or barrier multilayer structure, such as the barrier-coated cellulose-based substrate. This is advantageous in long-term packaging and storage of filled packages, to maintain adhesion between the inside polymer layer structure and the barrier layer surface of the barrier-coated cellulose-based substrate, in particular when the barrier layer surface is a metal surface, such as the oxygen-enriched, barrier aluminium metallization deposition coating.

In an embodiment, the laminated packaging material thus comprises at least one laminated opening hole in which a hole in the bulk layer is covered by the other layers of the laminated packaging material. The configuration of the inside polymer multilayer portion supports the membrane of the pre-cut, laminated hole better in heated operations, such as in lamination of the material and in heat sterilization in a filing machine, by its better thermomechanical resistance by including the above described interior layer of HDPE, MDPE or LLDPE.

The method of manufacturing the laminated packaging material comprises lamination of the bulk layer, barrier layer, outermost layer, and innermost layers, and may also comprise coating of the barrier layer substrate layer with one or more of the barrier coatings. The layers of the laminated packaging material may be joined in any order.

In an embodiment, the bulk layer and barrier-coated cellulose-based substrate are laminated, followed by application of the innermost layer and then the outermost layer (or less preferably followed by application of the outermost layer and then the innermost layer). This order is referred to as "LID" wherein L= lamination of paperboard to barrier layer by intermediate bonding layer; I = application of innermost layer to barrier layer; D (décor) = application of outermost layer onto paperboard. The less preferred alternative is referred to as "LDI".

Alternatively, the bulk layer may be initially joined to the outermost layer. This order is referred to as "DLI". This order is particularly suitable when the outermost layer is a dispersion coated thin layer. In this case, dispersion coating may follow printing of the bulk layer, as printing and dispersion coating are similar coating processes. Extrusion coating of the outermost layer is also possible. DLI is further suitable to protect the printed décor on the paperboard, such that it will not be scratched or scuffed or in the following lamination stations.

A heat sealable laminated packaging material as described above may provide good integrity when transformed into filled packaging containers, by good adhesion between the adjacent layers within the laminated construction and by providing good quality of the barrier coatings as well as by the resilience of the inside polymer multilayer portion. Especially, for the packaging of liquids, it is important that the inter-layer adhesion within the laminated packaging material, as well as the oxygen gas barrier properties, is maintained also under wet packaging conditions.

A packaging container formed from the described laminated packaging material may be partly sealed, filled with liquid or semi-liquid food and subsequently sealed, by sealing of the packaging material to itself, optionally in combination with a plastic opening or top part of the package.

Robust and reliable heat sealed packages for liquid food packaging for long term shelf-life and storage may be obtained from laminated packaging materials comprising a barrier-coated cellulose-based substrate, as defined by the claims, thanks to the resilience of the inside polymer layer structure, such that the oxygen barrier properties are preserved and the filled product is well protected during folding, forming and sealing of the packaging material.

The bulk layer may contribute to the bending stiffness of the laminated packaging material, and to dimensional stability of fold-formed packaging containers made thereof, to withstand strong, acting forces created by movement in the packed content of for example liquid and viscous oxygen-sensitive products, during distribution, handling and storage. In such a laminate, the oxygen-enriched barrier aluminium metallization coating is directed towards the inside of the packaging container, i.e. such that the cellulose-based substrate is directed towards the bulk layer while the barrier coatings are directed towards the innermost layer.

A paper or paperboard bulk layer for use in the invention usually has a thickness of from about 70 µm up to about 600 µm, and a surface weight of approximately from 65 to 500 g/m², such as from 100-400 g/m², preferably from about 200 to 300 g/m², and may be a conventional paper or paperboard of suitable packaging quality. Clay-coated duplex paperboard is preferred. For larger packages a paperboard of 400 to 500 µm and higher bending stiffness is preferred, such as 260 mN. For portion packs of 150 to 250 mL size, a bending stiffness of 80 mN is preferred and accordingly a lower surface weight and thickness.

In the case the resulting laminated material is to be used as a pouch package, thinner paper layers may be used for the barrier-coated cellulose-based substrate and as well as for the bulk layer, which then together create the bulk strength or stability of the paper laminate. In such cases, the additional "bulk" paper may have a grammage from 40 to 64 g/m², such as from 40 to 55 g/m², and the barrier-coated paper substrate may have a grammage weight from 40 to 55 g/m².

For low-cost aseptic, long-term packaging of liquid food, a thinner packaging laminate suitable for pouch packages may thus be used, having a thinner paper core layer. The packaging containers made from such packaging laminates are not fold-formed but are more similar to pillow-shaped flexible pouches. A suitable paper for pouch-packages usually has a surface weight of from about 50 to about 140 g/m², preferably from about 70 to about 120 g/m², more preferably from 70 to about 110 g/m². As the barrier-coated paper or cellulose-based substrate of the invention in itself may contribute with some stability to the laminated material, the paper layer corresponding to a "bulk" layer may be even thinner, and interact with the barrier-coated cellulose-based substrate in a sandwich interaction to still produce a laminated packaging material having the desired mechanical

### Examples and description of preferred embodiments

In the following, preferred embodiments of the invention will be described with reference to the drawings, of which:
Fig. 1 schematically shows in cross-section an example of a gas- and water-vapour barrier-coated cellulose-based substrate as used in the laminated packaging material of the invention,
Fig. 2 shows a schematic, cross-sectional view of a laminated packaging material of the invention, comprising the barrier-coated cellulose-based substrate of Fig. 1,
Fig. 3a shows schematically a method, for dispersion coating an aqueous barrier coating composition onto a cellulose-based substrate,
Fig. 3b shows schematically a method for extrusion lamination of a barrier-coated cellulose-based substrate to a paperboard bulk layer,
Fig. 3c shows schematically a method, for melt (co-) extrusion coating layer(s) of a thermoplastic heat sealable and liquid-tight polymer onto a web substrate, to e.g. form innermost and outermost layers of a packaging laminate of the invention,
Fig. 4 is showing a diagrammatic view of a plant for physical vapour deposition (PVD) of a metallization coating onto a base-coated web of a cellulose-based substrate,
Fig. 5a, 5b, 5c and 5d are showing typical examples of packaging containers produced from the laminated packaging material according to the invention,
Fig. 6 is showing the principle of how such packaging containers may be manufactured from the packaging laminate in a continuous, roll-fed, form, fill and seal process,
Fig. 7a1 illustrates schematically by a cross-sectional view a fold-formed tube of packaging material having overlapping longitudinal edges, which will be heat sealed to each other along a longitudinal sealing area, LS,

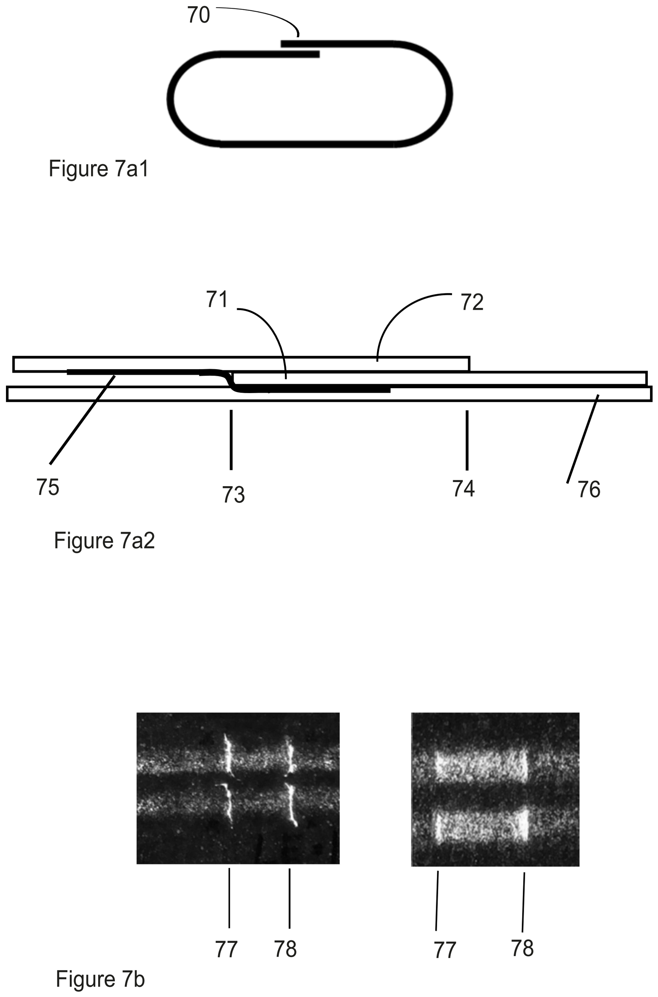

Fig. 7a2 shows a cross-sectional close-up view of a transversally sealed tube of packaging material at the longitudinal seal, LS, overlap area, as formed by folding and heat sealing the packaging material into a tube,
Fig. 7b shows with a top view, how strong light may shine through stress-induced defects in the metallization coating at the LS area of a packaging material tube as formed and transversally sealed, as shown by fig. 7a1 and 7a2,

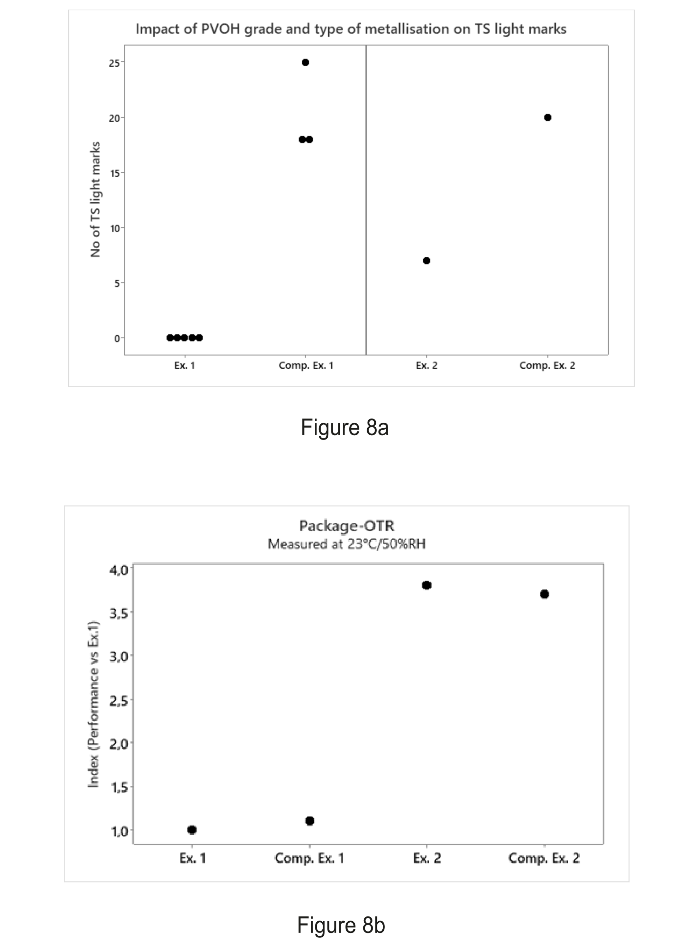

Fig. 8a is a diagram showing the results from testing the transversal heat sealing performance of the laminated material samples of Examples 1 and 2 according to the invention and of Comparative Examples 1 and 2 having a conventional, standard barrier aluminium metallization coating, under stressed conditions,
Fig. 8b is a diagram showing the oxygen barrier performance of packaging containers made from the laminated materials in Fig. 8a,

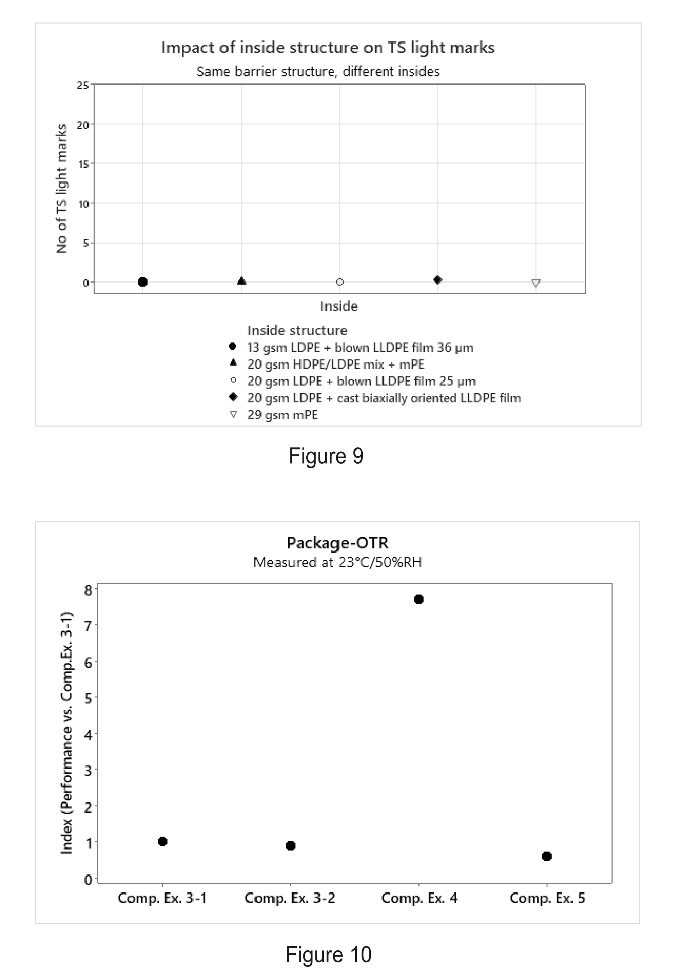

Fig. 9 is a diagram showing that different layer configurations of the polymer inside structure of otherwise the same laminate structures do not influence the transversal heat sealing performance,
Fig. 10 is a diagram showing the oxygen barrier performance of packaging containers made of laminated materials having different base coatings and a conventional, standard barrier aluminium metallization coating as of Comparative Examples 3-1, 3-2, 4 and 5 (the transversal heat sealing performance of the laminated materials is shown in Table 2),

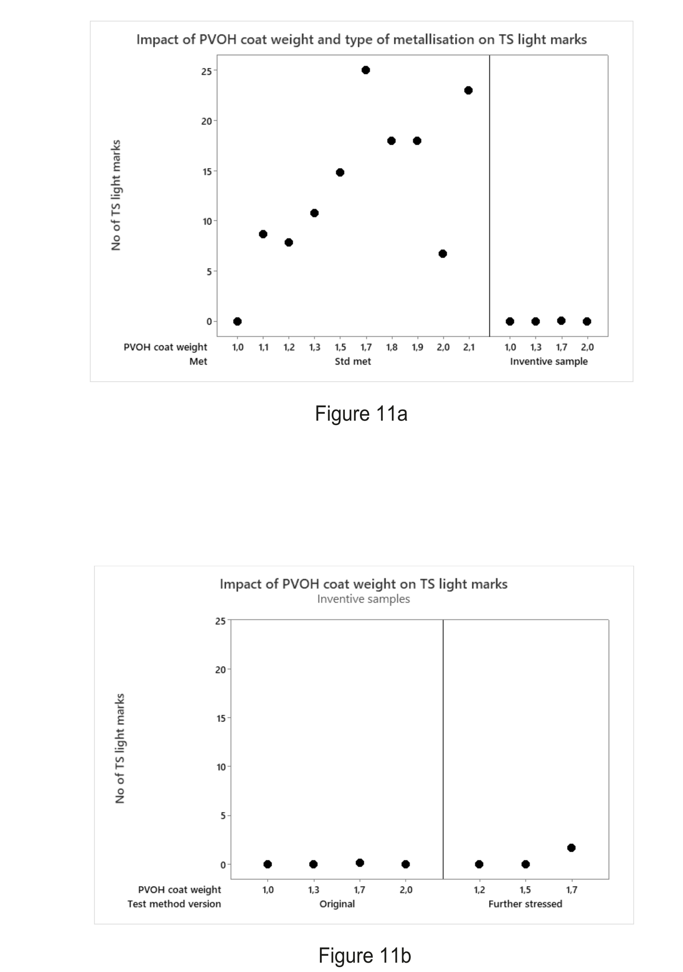

Fig. 11a is a diagram showing by Comparative Examples 9, and Examples 9, how the transversal heat sealing performance of laminated material samples varies with the applied dry coat weight of the base coating under stressed conditions,
Fig. 11b is a diagram showing how some of the samples in Fig. 11a perform under even further stressed conditions,

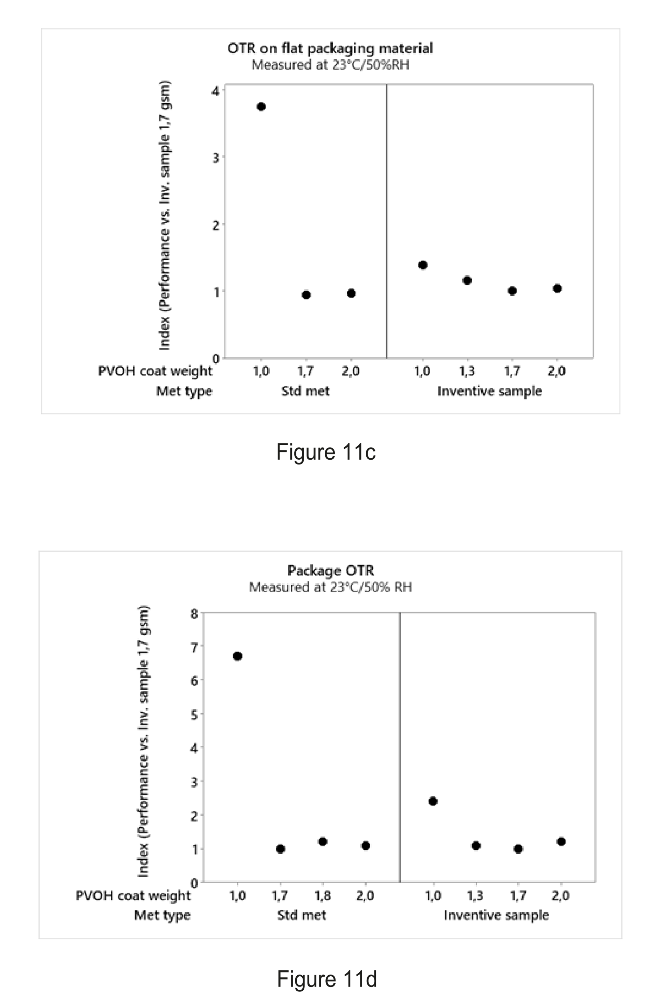

Fig. 11c is a diagram showing the oxygen barrier performance of some of the laminated material samples in Fig. 11a,
Fig. 11d is a diagram showing the oxygen barrier performance of packaging containers made from some of the laminated material samples in Fig. 11a,

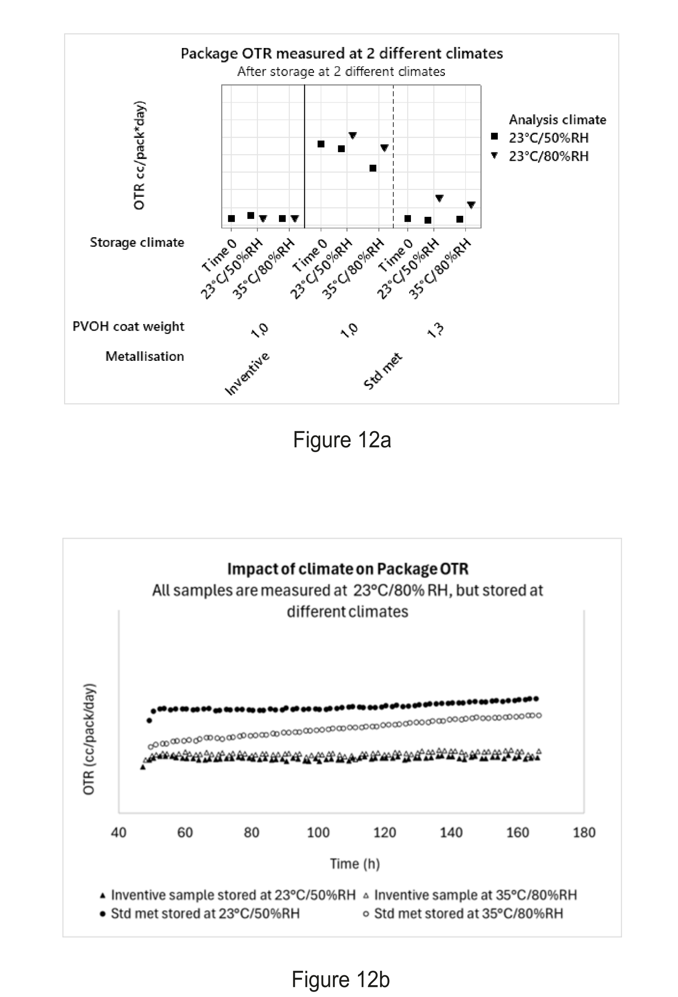

Fig. 12a is a diagram showing the oxygen barrier performance of packaging containers made from selected laminated materials behind Fig. 11, i.e. Example 10 and Comparative Example 10, after long-term storage at different climate conditions,
Fig. 12b is a diagram showing the results of repeated OTR measurements of the same packaging containers as in Fig. 12a, after long-term storage at different climate conditions,

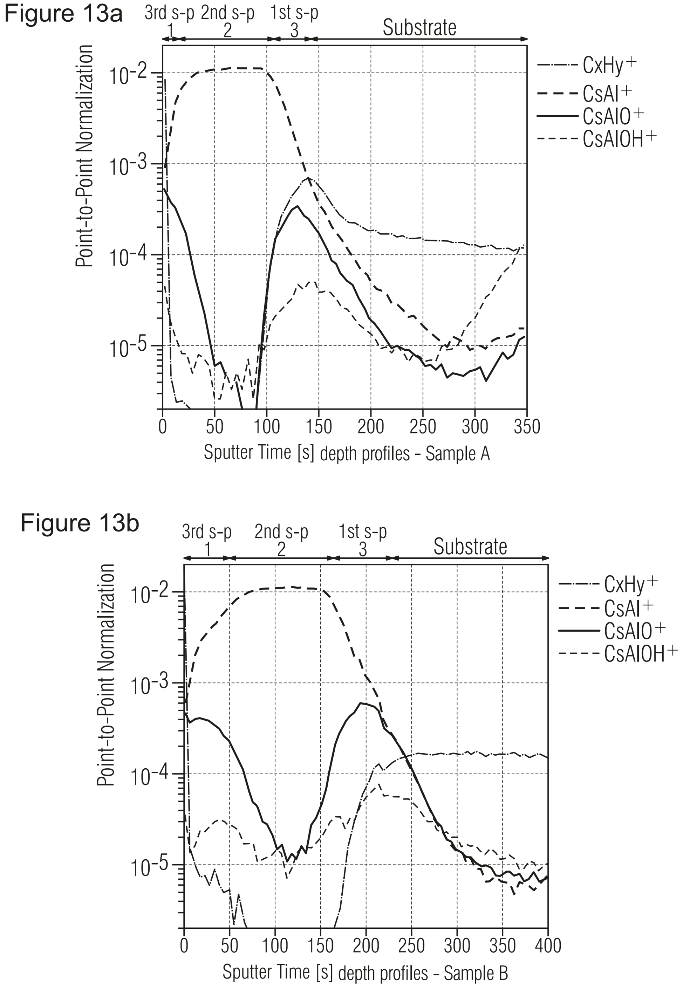

Fig. 13a is a schematic diagram showing an intensity-versus-time diagram from surface analysis by TOF-SIMS, showing how the content of oxygen in the form of aluminium oxide varies throughout the thickness of a standard barrier aluminium metallization coating, as applied by standard metal vapour deposition onto a base coated paper substrate (Comparative Example 11),
Fig. 13b is a schematic diagram from TOF-SIMS analysis, showing correspondingly how the content of oxygen in the form of aluminium oxide varies throughout the thickness of an oxygen-enriched barrier aluminium metallization coating, as obtained by metal vapour deposition onto a base coated substrate (Example 11), while adding oxygen to the entrance of the deposition zone, (i.e. to the part of the deposition zone where the substrate enters into the deposition zone),

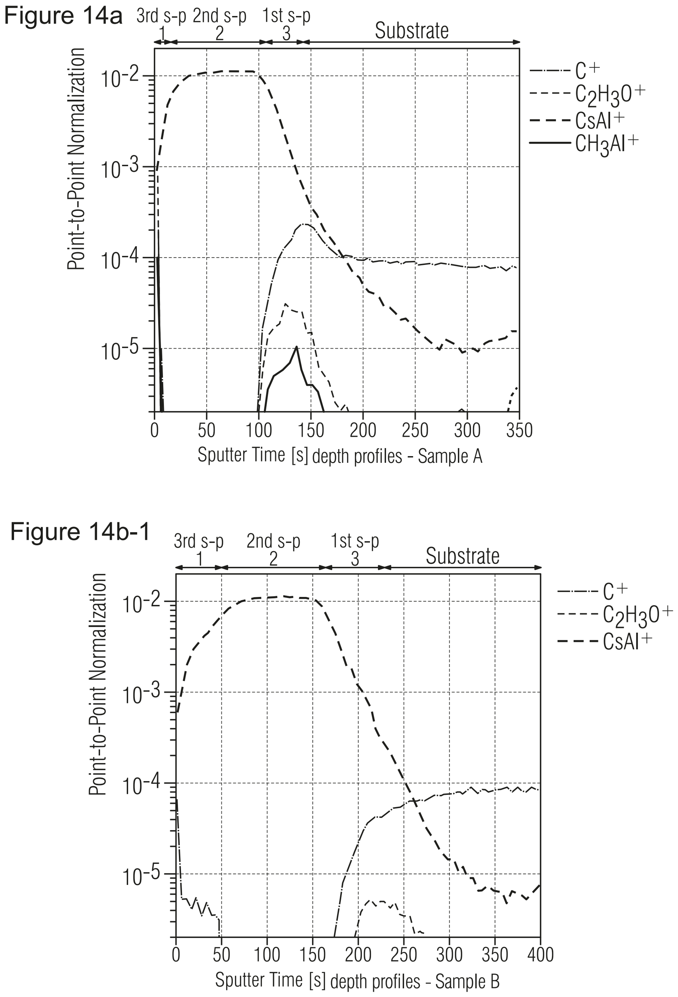

Fig. 14a shows a different intensity-versus-time diagram from surface analysis by ToF-SIMS at varying depths of the standard, not oxygen-enriched, aluminium metallization coating, as deposited onto a base coated paper substrate (Comparative Example 11), with respect to trimethyl aluminium ions, CH₃Al+,
Fig. 14b-1 and fig. 14b-2 show corresponding TOF-SIMS diagrams of the oxygen-enriched aluminium metallization coatings (Example 11), and

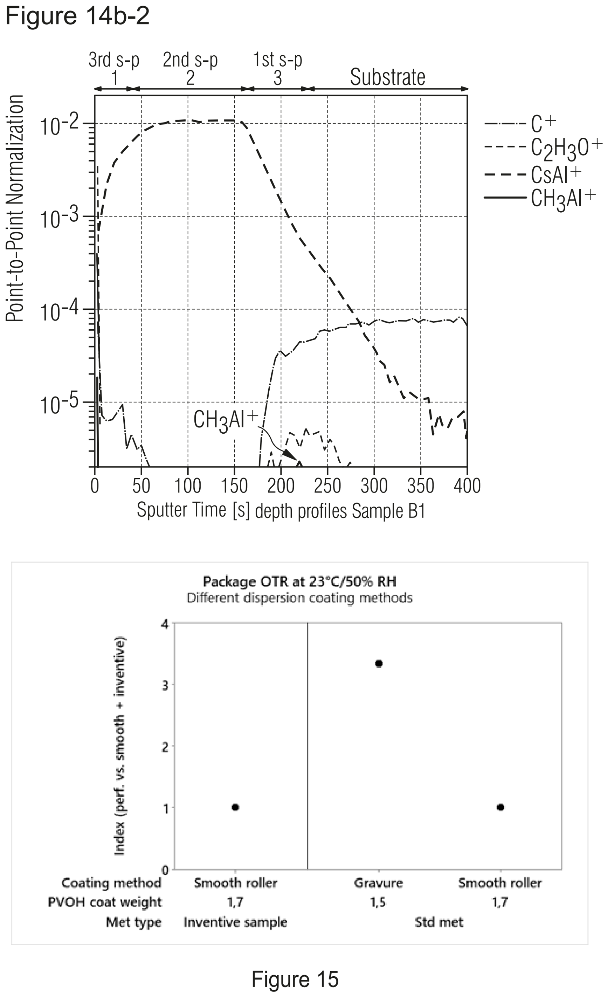

Fig. 15 is a diagram showing the oxygen barrier performance of packaging containers made from laminated materials comprising barrier-coated papers having standard aluminium metallization coatings or oxygen-enriched aluminium metallization coatings, applied onto base-coated paper substrates wherein the base coating is applied by two different coating methods.

Further, relating to the attached figures:

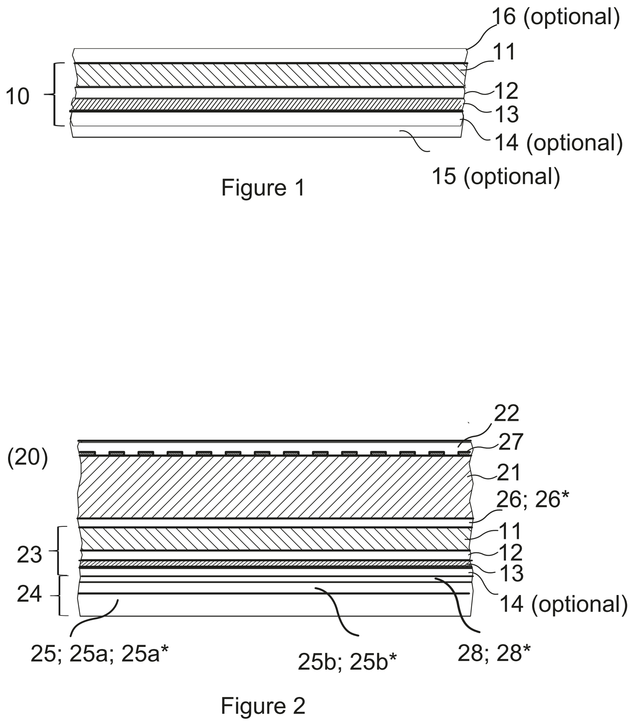

In Fig. 1, there is shown, in cross-section, an embodiment of the barrier-coated cellulose-based substrate 10 as used in the laminated material of the invention. The cellulose-based substrate 11 is a paper having a density above 900 kg/m³, a grammage weight of about 40 g/m², a top side roughness Bendtsen value of lower than 80 ml/min and a Cobb 60 value of less than 30 g/m², and was in a first embodiment provided with a base coating 12 of PVOH, Poval^{®} 15-99 from Kuraray, in the form of an aqueous solution coating composition and subsequently heat dried to evaporate the water from the wet applied coating. The base coating was applied as two consecutive wet coatings with intermediate drying, each at about 0.8 g/m². The total dry weight of the resulting PVOH base coating is about 1.6 g/m². Further, the thus base-coated cellulose-based substrate is vapour deposition coated with an oxygen-enriched barrier aluminium metallisation coating 13, i.e. a barrier aluminium-metal metallisation layer applied onto the dried surface of the base coating 12, by injection of extra oxygen in the early deposition phase into the PVD vapour deposition zone. The oxygen-enriched aluminium metallization coating was applied until a sheet resistance of 0.5 ohms/square was obtained. The thickness of the coating was determined to be about 125 nm.

The sub-portions of the barrier aluminium metallization coatings are not visible to the human eye, and are not indicated in figures 1 and 2, which are illustrating the layered configuration of the barrier-coated cellulose-based substrate and the laminated packaging material of the invention, respectively. The sub-portions have been indicated in the TOF-SIMS diagrams, however, in figures 12a and 12b and in figures 13a and 13b (13b-1 and 13b-2) and may be distinguishable and illustrated also by Transmission Electron Microscopy, TEM, technology and images.

The thus metallised and base-coated paper substrate may have an optional further thermostable gas-barrier top coating 14 of an aqueous solution of a PVOH, applied on the surface of the aluminium coating 13, which is suitable if the base coating contributes with less oxygen barrier properties. Such a thermostable, gas-barrier top coating 14 may be applied and dried in the same way as the base coating, and the dry weight of the top coating of a PVOH gas barrier composition may be about 0.7 g/m². In this embodiment, such a further thermostable top coating was not needed, however.

The barrier-coated cellulose-based substrate 10 may further be provided with optional protective and/or heat sealable coatings applied on each side 15, 16. The further layer coating 15 may be a thermoplastic polymer, such as a polyolefin, such as an LPDE or an ethylene-based adhesive polymer, such as EAA or a maleic anhydride graft copolymer with polyethylene. Such a further layer is needed to cover any defects, such as pinholes, in the barrier coatings. If the further protective coating 15 is a made of a thermoplastic polymer or material, the laminated structure may also be heat-sealable to itself, as a barrier wrapping or packaging material , the heat-sealable layer 15 thus forming the heat sealable inside of the packaging material structure and the barrier coatings are directed towards the heat sealable inside layer 15. Such a packaging material may thus be heat sealable by induction heat sealing. The further polymer layer or further coating itself has no or very low inherent oxygen barrier properties and thus does not contribute further to the oxygen transmission value measured. A further layer or coating 16 of a protective polymer, which may be of the same or a different kind as the coating or layer 15, may optionally be applied also onto the other side of the cellulose-based substrate, to form the outside of the packaging material. Consequently, a simple laminated material may be obtained by merely adding outermost, protective polymer layers 15 and 16 to the barrier-coated cellulose-based substrate 10, comprising the layers 11, 12, 13 and optionally 14.

In Fig. 2, a laminated packaging material 20 for packaging of oxygen sensitive products, such as for liquid food and beverage is shown, which comprises the barrier-coated cellulose-based substrate 10; 23, as described in Fig. 1. The laminated material further comprises a bulk layer 21 of paperboard, having a bending force of 80 mN and a grammage weight of about 200 g/m², and further comprising an outermost, transparent and protective, preferably liquid tight and heat sealable polymer layer 22 applied on the outside of the bulk layer 21, which side is to be directed towards the outside of a packaging container produced from the packaging laminate. The layer 22 is transparent to show the printed décor pattern 27, which is printed onto the bulk layer of paper or paperboard, to the outside. Thereby, the printed pattern may inform about the contents of the package, the packaging brand and other information targeting consumers in retail facilities and food shops. The polymer of the outermost layer 22 may be a polyolefin, such as a conventional low density polyethylene (LDPE) of a heat sealable quality, but could also include further similar polymers, including LLDPEs. It is applied at an amount of about 12 g/m².

On the inner side of the barrier-coated cellulose-based substrate 23, there is applied an inside polymer layer structure 24, comprising at least an innermost liquid tight and heat sealable layer 25; 25a, thus arranged on the opposite side of the bulk layer 21, which is to be directed towards the inside of a packaging container produced from the packaging laminate, i.e. the innermost layer 25; 25a will be in direct contact with the packaged product. The thus innermost heat sealable layer 25; 25a, which is to form strong transversal heat seals of a liquid packaging container made from the laminated packaging material, may comprise one or more of polyethylenes selected from the groups consisting of LDPE, linear low density polyethylene (LLDPE), and LLDPE produced by polymerising an ethylene monomer with a C4-C8, such as a C6-C8, alpha-olefin alkylene monomer in the presence of a metallocene catalyst, i.e. a so called metallocene - LLDPE (m-LLDPE). In a preferred embodiment, the innermost layer 25 is a melt (co-)extrusion coated layer of a blend comprising from 50 to 100 weight-%, such as from 60 to 80 weight-% of m-LLDPE and from 0 to 50 weight-%, such as from 20 to 40 weight-% LDPE. The innermost liquid tight and heat sealable layer 25 may be applied by (co-)extrusion coating at an amount of from 15 to 35 g/m²., depending on the total configuration of the inside polymer layer structure. The innermost layer 25 may be co-extrusion coated together with a tie layer 28 of an adhesive polyolefin-based polymer, such as an ethylene acrylic acid, EAA, and an interjacent, interior layer of LDPE or a different polyethylene.

According to a preferred embodiment, the innermost heat sealable and liquid-tight layer consists of a pre-manufactured, oriented film 25a, comprising at least one part-layer with a major proportion of linear low density polyethylene (LLDPE). The film may further comprise some LDPE. The oriented film 25a may preferably be biaxially oriented and from 12 to 25 µm thick, such as from 15 to 20 µm thick, such as about 18 µm thick.

The pre-manufactured, oriented film 25a may be laminated to the barrier-coated paper substrate 23, to the surface of the oxygen-enriched aluminium barrier metallization 13 or its optional top coating of PVOH 14, by means of an intermediate, melt extrusion laminated bonding-layer 28, comprising a tie layer of EAA, at from 5 to 8 µm, and a further interior bonding layer 25b of LDPE, which is melt extrusion laminated at from 12 to 30 µm, such as from 12 to 20 µm, such as from 12 to 18 µm thick. Such a laminated structure improves the integrity of a fold-formed packaging container, from a laminate comprising the barrier-coated cellulose-based substrate and the described inside polymer layer structure. This is the topic of a co-pending application from Applicant.

In a further embodiment, for maximal package integrity of larger size packages and storage under more severe circumstances, the laminate structure described above, having an innermost layer of the pre-manufactured, oriented film 25a, may comprise a further, extra and ultimately innermost layer of an extrusion coated layer as described above, i.e. a melt (co-)extrusion coated layer of a blend comprising from 50 to 100 weight-%, such as from 60 to 80 weight-% of m-LLDPE and from 0 to 50 weight-%, such as from 20 to 40 weight-% LDPE.

In a second, preferred embodiment, the innermost heat sealable layer 25a* is alternatively melt co-extrusion coated separately from, or together with, a first interior, tie layer, 28* of a few g/m², such as from 4 to 7 g/m², e.g. of ethylene acrylic acid copolymer (EAA) layer, which is well adhered to the surface of the oxygen-enriched aluminium barrier metallization 13 or its optional thermostable gas barrier top coating 14 of the barrier-coated paper substrate 23; 10, and a further interior layer (25b*) comprising a polymer selected from a high-density polyethylene, HDPE, medium-density polyethylene, an MDPE, or a linear low-density polyethylene, LLDPE, the LLDPE having a melt flow ratio, MFR, from 4 to 20 g/10 min (190 °C/ 2.16 kg) and a melting temperature above 115 °C. Such an insider polymer layer structure thus adheres the innermost heat sealable layer to the barrier coated paper substrate 23, by applying the layers together, or separately, by melt coextrusion coating. The interior layer preferably may comprise a blend layer of 50:50 weight ratio of the HDPE and LDPE, thus improving and optimizing the integrity of a fold-formed packaging container, from a laminate comprising the barrier-coated cellulose-based substrate and the described inside polymer layer structure.

The bulk layer 21 is laminated to the uncoated side of the barrier-coated paper substrate 23; i.e. 10 from Fig. 1, by an intermediate bonding layer 26 of a thermoplastic polymer, such as a low density polyethylene (LDPE). The barrier coatings 12, 13 and optionally 14, are thus directed towards the inside in the laminated material, as seen in a packaging container made from the laminated material. The intermediate bonding layer 26 is formed by means of melt extruding it as a thin polymer melt curtain between the two paper webs and thus laminating the bulk layer and the barrier-coated paper substrate to each other, as all three layers pass through a cooled press roller nip. The thickness of the intermediate bonding layer 26 may be from 7 to 18 µm, such as from 7 to 15 µm, such as from 7 to 12 µm, such as from 7-10 µm. Surprisingly, excellent adhesion may be reached by a lower amount of extrusion lamination polymer, such as from 7 to 10 µm, while an improved recycling process is enabled, by a significantly shortened repulping time of the laminated packaging material. This is the topic of a co-pending patent application from Applicant.

In an alternative embodiment, applicable to any described embodiment regarding the inside polymer layer structure 24, the bulk layer 21 may be laminated to the barrier-coated paper substrate 23, by means of wet lamination with an intermediate bonding layer 26* of a thin layer of adhesive polymer, obtained by applying an aqueous dispersion of a polyvinyl acetate adhesive onto one of the surfaces to be adhered to each other and subsequently pressing together in a roller nip. Such a lamination step is performed in an efficient cold or ambient lamination step at industrial speed without any energy-consuming drying operation needed to accelerate the evaporation of the water. The dry amount applied of the intermediate bonding layer 26* is from 3 to 5 g/m² only, which explains that there is no need for drying and evaporation of the water content, as it is equalized and absorbed into the cellulose matrix of the two cellulose-based layers, i.e. the bulk layer paperboard and the back-side of the barrier-coated thin paper.

The amount of thermoplastic polymer can thus be significantly reduced in this lamination layer, in comparison to the conventional melt extrusion laminated bonding layer 26 of polyethylene, involving traditionally from 12 to 18 µm of thermoplastic bonding polymer (LDPE).

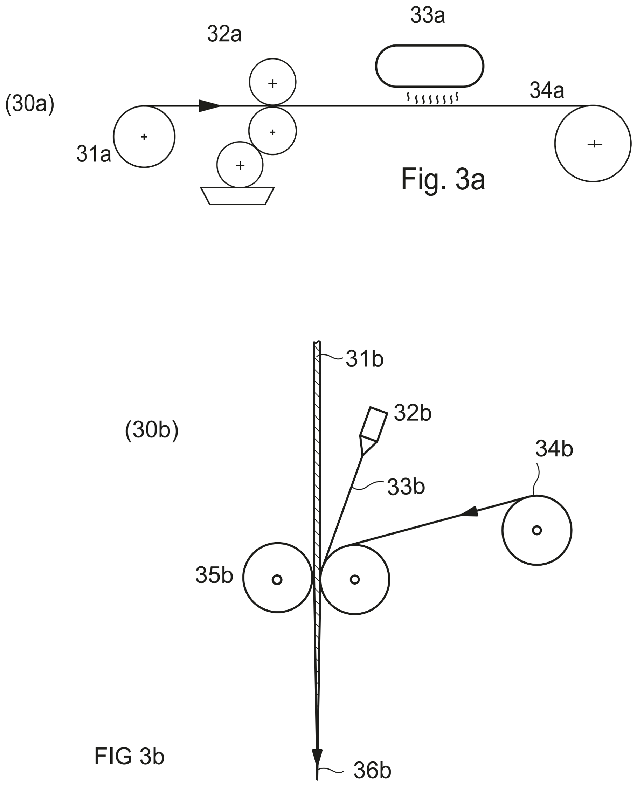

In Fig. 3a, a principal process of aqueous dispersion coating 30a is shown, which may be used for applying the aqueous composition of the base coating layer 12. The principal process may also be used for applying and any optional further aqueous pre-coating composition, or any optional aqueous top coating composition. The paper substrate web 31a (e.g. the cellulose-based substrate 11 from Figure 1) is forwarded to the dispersion coating station 32a, where the aqueous composition is applied by means of rollers onto the top side surface of the substrate. If the surfaces of the two sides of the substrate are different, usually there is one side more suitable for receiving a coating or a printed décor pattern, which is the surface to be coated for this invention (usually this side is called the top side or the print side). Since the composition has an aqueous content of from 80 to 99 weight-%, there will be a lot of water on the wet coated substrate that needs to be dried by heat, and evaporated, to form a continuous coating, which is homogenous and has an even quality with respect to barrier properties and surface properties, i.e. evenness and low occurrence of defects. The drying step 33a is carried out by a hot air dryer, which also allows the moisture to evaporate and be removed from the surface of the substrate. The temperature of the substrate surface as it travels through the dryer, is consistently kept below 95 °C, such as at from 60 to 95 °C, such as at from 70 to 90 °C, such as below a temperature from 80 to 90 °C, such as below a temperature of about 85 °C.

The resulting gas-barrier-coated paper substrate web 34a is forwarded to cool off and is wound onto a reel for intermediate storage. At a following or later stage, the thus coated web may be forwarded to a further barrier coating step, i.e. a physical vapour deposition coating of a barrier aluminium metallization coating 13 onto the base-coated paper substrate 11-12: 34a.

Fig. 3b shows a first lamination process step in a principal process for extrusion lamination in the manufacturing of the laminated packaging material 20, as the bulk layer 31b; 21 is laminated to the barrier-coated substrate material web 34b (34a from fig. 3a); 23.

As explained in connection to Fig. 2, the bulk layer paperboard 21 may be laminated to the barrier-coated substrate material 23 by means of melt extrusion lamination as shown in this figure, or by means of wet, cold dispersion adhesive lamination, the latter method however not shown. Thus, in extrusion lamination a thin molten polymer curtain 33b of e.g. LDPE is fed from a heated extruder and extrusion die 32b into a nip of lamination rollers 35b, as the two webs 31a and 34b are also forwarded to the same lamination nip and joined to each other by the intermediate, extruded bonding layer 33b of LDPE. The three layers are thus pressed together and joined at the nip 35b, which is formed between a press roller and a chill roller, while cooling the laminated material to properly solidify the extruded bonding layer of LDPE. The resulting laminated bulk-to-barrier material web 36b is forwarded to be wound up on a reel for intermediate storage, or directly forwarded to subsequent lamination operations.

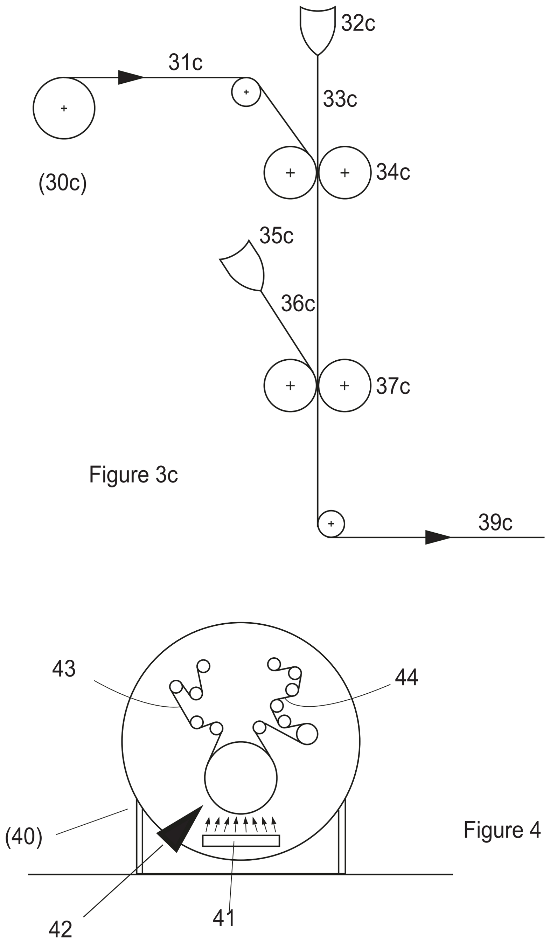

Fig. 3c shows a process for the final lamination steps in the manufacturing of the packaging laminate 20, of Fig. 2, after the bulk layer 21 has been first laminated to the barrier-coated cellulose-based substrate 10 of Fig. 1, (i.e. layer arrangement 23 in Fig. 2). The resulting paper bulk-to-barrier, pre-laminate web 31c is forwarded from an intermediate storage reel, or directly from the lamination station for laminating the pre-laminate of the bulk layer to the barrier-coated cellulose-based substrate.

The non-laminated side of the bulk layer 21, i.e. its print side, is melt-extrusion coated by being joined at a cooled lamination roller nip 34c to a molten polymer curtain 33c of the LDPE, which is to form the outermost layer 22 of the laminated material, the LDPE being extruded from a first extrusion feedblock and die 32c. Subsequently, the pre-laminate bulk-paper web, now having the outermost layer 22 coated on its printed side, i.e. on the outside, passes a second extruder feedblock and die 35c and a cooled lamination roller nip 37c, where a molten polymer curtain 36c is joined and coated onto the other side of the pre-laminate, i.e. on the barrier-coated side of the paper substrate 10; 23. Thus, the innermost heat sealable layer 25a, and an optional interjacent polymer layer 25b, optionally together with a tie layer of an adhesive polymer having functional groups to increase its bonding capability to adjacent layers, are coextrusion coated onto the inner side of the paper pre-laminate web, to form a finished laminated packaging material 20; 39c, which is finally wound onto a storage reel, not shown.

These two coextrusion steps at lamination roller nips 34c and 37c, may alternatively be performed as two consecutive steps in the opposite order.

According to another embodiment, one or both outermost layers may instead be applied in separate pre-lamination stations, where the coextrusion coated layer is first applied to the outside of the (printed) bulk paperboard layer and onto the inside of the barrier-coated paper substrate, and finally thereafter, the two pre-laminated paper webs may be laminated to each other, by extrusion lamination or by wet lamination, as described above.

According to a preferred embodiment, the innermost layers of the heat sealable and liquid-tight thermoplastic layers are applied in the form of a pre-manufactured polymer film 25a, which is laminated to the barrier-coated side of the barrier-coated paper substrate 10; 23 by melt co-extrusion lamination of a thin layer of an adhesive polymer and a thicker layer of LDPE.

Fig. 4 is a diagrammatic view of an example of a plant for physical vapour deposition, PVD, of e.g. an aluminium metal coating, onto a web substrate of the invention. The base-coated cellulose-based substrate web 43 is forwarded through a vacuum deposition chamber, in which it is subjected, on its base-coated side, to continuous deposition 40, of evaporated aluminium, to form a metallized layer of aluminium. A standard aluminium metallization coating is normally provided at a thickness from 5 to 800 nm, such as from 10 to 80 nm, such as from 10 to 50 nm, to form a metal-deposition, barrier-coated cellulose-based substrate 44 of the invention. The aluminium vapour is formed from an aluminium evaporation source 41, via thermal evaporation from a resistive heated source.

According to the present invention, the barrier aluminium metallization coating is oxygen-enriched by injection of additional oxygen 42 at the initial part of the deposition zone in an initial phase of the metal deposition step. The addition of oxygen into the vacuum deposition zone forces the initial coating of the base-coated cellulose-based substrate web 43 to become a reaction product of the evaporated aluminium and the oxygen, i.e. to form aluminium oxide, Al₂O₃. Rapidly, with the transportation of the base-coated cellulose-based substrate web 43 through the deposition zone, the oxygen concentration decreases to allow also pure metal aluminium deposition coating to be formed, which appearance looks the same as a conventional, standard aluminium metallization coating. The metallic, second phase part of the oxygen-enriched metallization coating still has more oxygen in it than a standard aluminium metallization coating, which has very low level of oxygen content in this second part and phase of the deposition coating.

When deposited on an oxygen-containing substrate, such as specifically onto a PVOH material, the gradient of oxygen content throughout the aluminium metallization coating looks the same in an aged, standard barrier aluminium metallization coating as in an oxygen-enriched barrier aluminium metallization coating, however only with higher levels of oxygen, in the form of higher content of aluminium oxide throughout the oxygen-enriched aluminum metallization coating. In a standard metallization coating, this initial aluminium oxide part of the coating is not formed during the deposition coating process, however. A similar, initial aluminium-oxide part of the coating is slowly formed later and over time in a standard aluminium metallization coating but will be immediately formed in an oxygen-enriched aluminium metallization coating.

It is believed that the aluminium oxide formed during the first phase of the deposition process of the oxygen-enriched metallization coating has excellent chemical bonding to the PVOH of the gas barrier coating such that the oxygen-enriched aluminium metallization coating altogether protects the PVOH layer surprisingly well under conditions of high surrounding moisture in the laminated packaging material.

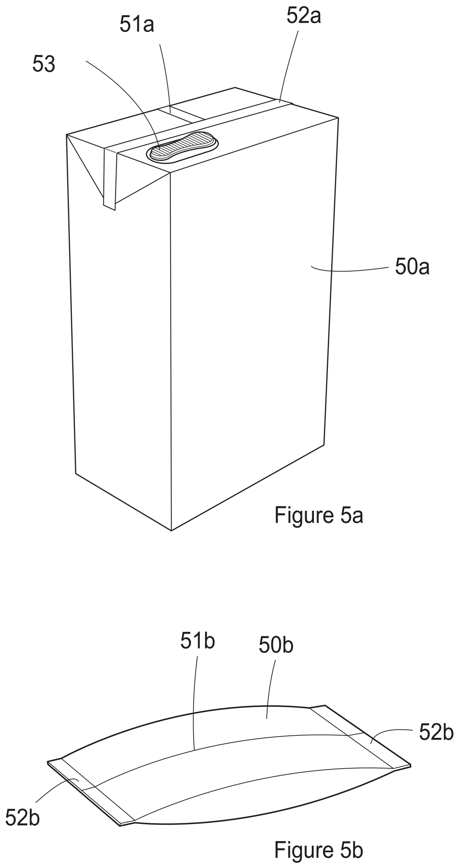

Fig. 5a shows an embodiment of a packaging container 50a produced from a packaging laminate according to the invention. The packaging container is particularly suitable for beverages, sauces, soups or the like. Typically, such a package has a volume of about 100 to 1000 ml. It may be of any configuration, but is preferably brick-shaped, having longitudinal and transversal seals 51a and 52a, respectively, and optionally an opening device 53. In another embodiment, not shown, the packaging container may be shaped as a wedge. To obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the only partly folded packaging container is still easy to handle and dimensionally stable enough to put on a shelf in the food store or on any flat surface.

Fig. 5b shows an alternative example of a packaging container 50b produced from an alternative packaging laminate according to the invention. The alternative packaging laminate is thinner by having a thinner paper bulk layer, and thus it is not dimensionally stable enough to form a parallelepipedal or wedge-shaped packaging container and is not fold formed after transversal sealing 52b. The packaging container will remain a pillow-shaped pouch-like container and be distributed and sold in this form.

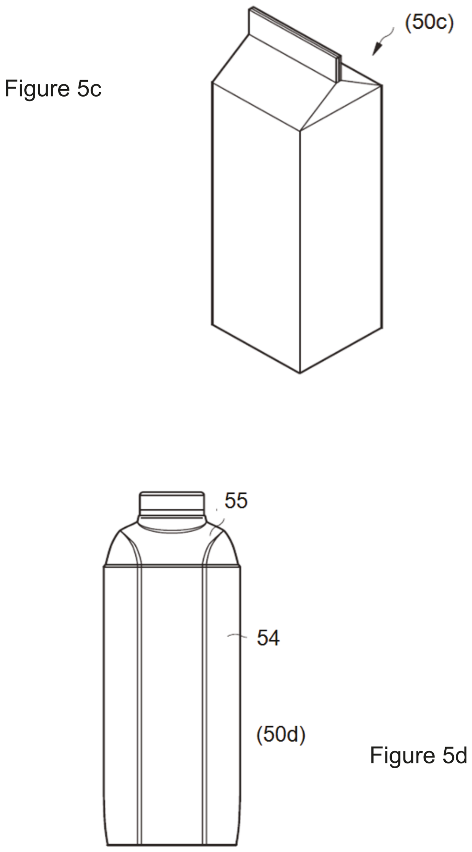

Fig. 5c shows a gable top package 50c, which is fold-formed from a pre-cut sheet or blank, from the laminated packaging material comprising a bulk layer of paperboard and the barrier-coated paper substrate of the invention. Also flat top packages may be formed from similar blanks of material.

Fig. 5d shows a bottle-like package 50d, which is a combination of a sleeve 54 formed from a pre-cut blanks of the laminated packaging material of the invention, and a top 55, which is formed by injection moulding plastics in combination with an opening device such as a screw cork or the like. This type of packages is for example marketed as Tetra Top^{®} packages, from Tetra Pak^{®}. Those packages are formed by attaching the moulded top 55 with an opening device attached in a closed position, to a tubular sleeve 54 of the laminated packaging material, sterilizing the thus formed bottle-top capsule, filling it with the food product and finally fold-forming the bottom of the package and sealing it.

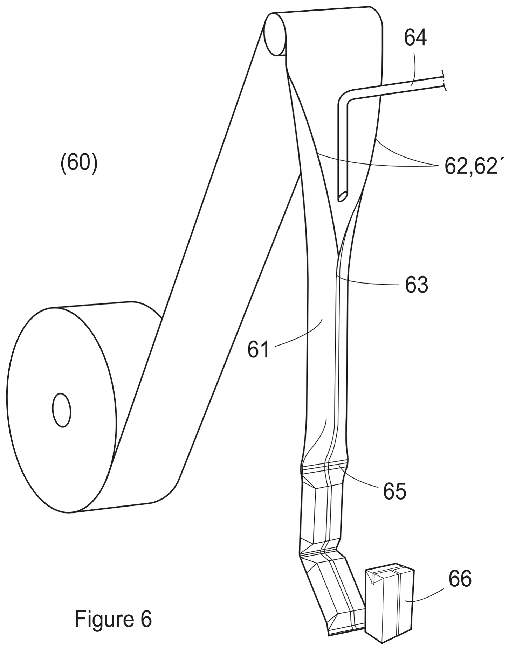

Fig. 6 shows the principle of the tube-filling and -packaging method 60 as described in the introduction of the present application, i.e. a web of packaging material is formed into a tube 61 by overlapping the longitudinal edges 62, 62' of the web and heat sealing them to one another, to thus form an overlap joint 63. The tube is continuously filled 64 with the liquid food product to be filled and is divided into individual, filled packages by repeated, double transversal seals 65 of the tube at a pre-determined distance from one another below the level of the filled contents in the tube. The packages 66 are separated by cutting between the double transversal seals (top seal and bottom seal) and are finally shaped into the desired geometric configuration by fold formation along prepared crease lines in the material.

### Measurement methods

### Method for investigating tendency to form defect initiations at the area of the longitudinal seal overlapping with the transversal heat sealing area.

When forming a laminated packaging material into tube-formed packaging containers, as described in the introduction above and in connection to figure 6 below, the longitudinal edges of the web are continuously placed to form an overlapping longitudinal seal area and are thus joined to a longitudinally sealed "LS" area along the formed tube, by simultaneous application of heat and pressure. When applying the heat by high-frequency induction heating via the metallized aluminium layer, and pressing the overlapping materials together, there may appear small defects in the form of tiny holes or inhomogeneities in the metallization coating.

Furthermore, when reshaping the tube into individual packages, the tube is transversally heat sealed and the formed "pillows" of packages are cut off from the tube. As the longitudinal seal is further involved in (by crossing) the transversal sealing, there is a double overlap area created "LS-TS", which is prone to generate further defects during the heat sealing operation, due to the overlapping high thickness of materials in this area. Here, defects may occur in connection to the longitudinal edges of the overlapping material, if the edges of the thicker paperboard bulk layer in the laminated material causes significant stress on the adjacent and surrounding layers and coatings of materials, which are considerably thinner layers than the paperboard. The stresses may be reinforced by the application of induced current and heat and pressure, such that defects emerge primarily in the metallization coating at the location of the paperboard edges.

Fine marks or crack initiations in the metallization coating at the longitudinal edge positions of the laminated packaging material can be visible as lit-up marks by exposing the packaging material from this area to back-light, such as by placing the flat packaging material onto a lightbox with strong light. Such defect initiations could jeopardize the quality and strength of the transversal heat seal and must be avoided as far as possible.

Fig. 7a1 shows a schematic cross-section of a longitudinally folded tube of laminated packaging material, just before it is flat-folded, to be heat sealed transversally across the tube and the overlapping longitudinal sealing area 70 along the tube, by simultaneous application of a mechanical pressing force and heat to weld, i.e. by melt-bonding, and subsequent and immediate cooling, the inside polymer layers of the tube to each other.

Fig. 7a2 shows a cross-sectional view of the transversal seal area of the transversally flat folded tube at the longitudinal overlap seal of a sealed packaging container. The folded side parts of the tube are not shown, the view is zooming in on the longitudinal overlap seal, LS. Thus, it is shown how the longitudinal edges 71, 72 overlap each other, and the location of the most sensitive positions 73, 74 that may develop such light-marks in the metal coating at the transversal seal of the LS (longitudinal seal) area, i.e. at the LS-TS area, is shown. The sensitive points 73, 74 coincide with the edges of the laminate, which is rather thick due to the thick, bulky layer of a paperboard or carton. At these points, there is a transition from the overlapping double laminate thickness to a single laminate thickness. It is also shown how a flat longitudinal sealing cover strip 75 of polymer is arranged and sealed along one of the edges, i.e. the so-called "LS-SA" (meaning LS Strip Application) edge 73, to the inside polymer layers of the packaging material, to cover the otherwise exposed edge 73 of cut material of the overlap edge on the inside of the tube (in this edge, the thickest layer is the bulk layer of cellulose, which would otherwise absorb liquid from the filled product). When the tube is transversally sealed, the side of the tube having the LS overlap is sealed to the opposite side of the tube 76. The folded edges, or corners, of the transversally sealed tubular "pillow" are outside the drawing and not shown in figure 7a2.

Fig. 7b shows the visible, rather large such light-marks 77, 78, thus corresponding to positions 73 and 74 in Figure 7a, seen when viewing the flat material against strong back-light. Even if the marks, would be much smaller, they may impact the quality of the heat seal negatively, as they may disturb the induction heating process to cause defective or uneven seal zones, which in turn would result in weaker transversal seals in the filled and formed packages. The quality of the LS-TS area may be visually inspected regarding the occurrence of such marks, against backlight illumination.

The laminated sample structures were each exposed to high-frequency induction heat sealing conditions at a "fictive" LS overlap area in a sub-system test rig, corresponding to severe heat sealing conditions in a filling machine. First, a narrow strip of paperboard material (having the same width as the LS zone and a predetermined thickness) was placed at the inside of the laminated packaging material test sample pilot rig, to simulate the severe stresses at the linear areas 73 and 74 of the overlap seal of laminated material at the longitudinal seal area (LS) under stressed conditions of a heat sealing operation. The applied severe stress would rarely occur in a conventional filling machine, however. No polymer LS cover strip 75 was used in these "sub-system" tests, as no packages would be produced therefrom. The extra "stress" is partly created by using a thicker than normal overlap of the laminated packaging materials in the longitudinal seal zone, LS, by applying thick longitudinal strips of paperboard material along the LS zone thus simulating the higher thickness and partly by applying higher force when pressing the materials together at the LS zone. Furthermore, the highest applied high frequency induction power setting applied in the sealing operation tests is higher than what would normally be used in a filling machine, to further test the limits. The width of the test strips of paperboard is 10 mm, i.e. 0.01 m. In real packages, the LS overlap width may vary between 4 and 8 mm, depending on package size and type.

The laminated material samples tested in this way were thus exposed to different high frequency induction power settings of 1500 W, 2000 W and 2500 W at a seal pressing force of 12 kN and during a time of 200 ms in a test rig. The highest power setting of 2500 W was beyond realistic conditions, to stress the materials and the sealing operation even further.

The described test is thus a stressed test to induce potential defects, rather than truly representing the mechanical (and electrical) stress applied in a conventional filling machine. The more defects created in this stress-test, the higher the risk that real defects can occur in a heat sealing operation in a filling machine under severe circumstances, however. Accordingly, such a severe and consistent sub-system test provides feedback to learn more about how to produce more resistant materials, while more expensive and less consistent tests under more severe conditions in different installed filling machines can be avoided.

The strips of paperboard material were of three different thicknesses and were placed at the inside of each sample of material, to evaluate the material robustness, at heat sealing at each of the three different power levels. The thicknesses of the strips varied between 0.25 and 0.5 mm.

To evaluate the seal and material quality in the most challenging part of the heat sealed packaging material, i.e. the LS-TS area, the sealed area was visually inspected against backlight illumination, and the number of visible light marks were noted at different power settings of the inductor for heating to seal the transversal seal. The resulting, visually identified number of marks in the metallization coating at the LS overlap seal, at the different power levels, were noted. Higher power levels and higher thickness of the strips of paperboard normally generated at least some visible marks in the metallization coating, and generally generated a higher number of marks than at lower power and lower thicknesses, for any given material.

### OTR of laminated barrier materials

OTR of the laminated barrier materials is measured with an Oxtran 2/21 (Mocon) equipment using a coulometric sensor, according to ASTM F1927:2020 and ASTM D3985:2017.

The method for determining OTR on planar packaging material identifies the amount of oxygen per surface and time unit at passing through a material at a defined temperature and climate, a given atmospheric pressure, during a certain time, i.e at an atmosphere of 21, or alternatively, 100 % oxygen, expressed as 0.2 or 1 atm (oxygen), during 24 hours. The measurement unit relating to this invention is cm³/m²*24h*0.2 atm. For determining the OTR of the laminated materials in connection to this invention, measurements were thus carried out at 21 % oxygen (0.2 atm).

### OTR Package

The oxygen transmission rate of packages (filled, emptied and dried) was measured according to ASTM F1307:2020, at 0.2 atm (surrounding air containing 21 % oxygen). The unit is cm³/package/24h.

For the OTR measurement, the package was mounted on a special holder; inside the package nitrogen is purged; the outside of the package is exposed to the environment surrounding the instrument (room air). When oxygen permeates through the package into the nitrogen carrier gas, it is transported to the coulometric sensor. The sensor reads how much oxygen permeates into the nitrogen gas inside the package.

The climates at which the above OTR measurements were performed were 23 °C/ 50 % Relative Humidity, RH, and 23 °C/ 80 % RH, at 0.2 atm oxygen (air containing 21 % oxygen).

### Grammages and thicknesses

Grammages of paper substrates were determined according to the official test method of ISO 536:2019 by the unit g/m², while thickness and density were determined according to ISO 534:2011, by the units µm (m) and kg/m³, respectively.

Thickness measurements of coated polymer layers on paper and in laminate structures may be measured and estimated by taking sliced section samples of the structure and studying them in a SEM microscope. The slicing may be done using e.g. a microtome.

### Transmission electron microscopy (TEM)

Transmission electron microscopy (TEM) is a microscopy technique in which a beam of electrons is transmitted through a specimen to form an image. The specimen is most often an ultrathin section less than 100 nm thick. An image is formed from the interaction of the electrons with the sample as the beam is transmitted through the specimen. The image is then magnified and focused onto an imaging device, such as a fluorescent screen, a layer of photographic film, or a detector such as a scintillator attached to a charge-coupled device or a direct electron detector. Transmission electron microscopes are capable of imaging at a significantly higher resolution than light microscopes, owing to the smaller de Broglie wavelength of electrons. This enables the instrument to capture detail as small as a single column of atoms, which is thousands of times smaller than a resolvable object seen in a light microscope. The contrast of TEM images is related to the distinction between transmitted and scattered electrons. The contrast obtained on amorphous specimen depends on the thickness and the electronic density of the specimen. The contrast obtained on crystalline specimen is largely influenced by Bragg diffraction. There are basically two TEM modes, dark and bright field. One of the main differences between the bright field and dark field mode is which electron populations are used to construct the TEM image. Bright field (BF) at 300 kV with a contrast diaphragm was used for measuring the samples herein.

### Ultramicrotomy

Ultramicrotomy is a method for cutting specimens into extremely thin slices, called ultra-thin sections, that can be studied and documented at different magnifications in a transmission electron microscope (TEM). It is used mostly for biological specimens, but sections of plastics and soft metals can also be prepared. Sections must be very thin because the 50 to 125 kV electrons of the standard electron microscope cannot pass through material much thicker than 150 nm. For best resolution, sections should be from 30 to 60 nm. A piece of each sample was embedded in an epoxy resin, which was polymerized. Transverse cuts were done by ultra microtomy at room temperature, to 50 nm thick sections.

### Sheet resistance (Rs)

Sheet resistance (Rs) of a metallisation coating are measured by a contactless method on a laminated material, by means of an instrument for contactless eddy current measurements, such as of the type SRM-12 or SRM-14 instrument, from Nagy Instruments, Germany. The set range for measurements in connection to the present invention was from 0.2 to 8 Ohms. Measurements were performed on laminated packaging materials as well as on metallised material only, on samples of a size of 0.05 x 0.05 meters (5 by 5 cm). Nine measure points were taken from a 1 meter long portion of a web of 0.17 m width, i.e. three measure points from the middle of the web and three measure points closer to each of the respective ends of the web portion. On a sample of homogenous density, the sheet resistance is the value Rs given by the principal formula Rs= rho / t, wherein t is the thickness of the sheet and rho is the bulk resistivity of the material. The unit is measured as ohms / square (Ω/□). The Nagy instruments use the "transmission mode" for the measurements and the accuracy is high at up to a 0.03 Ω/□ precision of measurements. The measurements may also be made by similar instruments from Suragus GmbH, Germany, such as by a "Suragus EddyCus^{®} portable 1010" instrument, working in the "reflection mode" with similar precision of measurements.

### Optical density of the barrier aluminium metallization deposition coating

Optical density of a metallization coating is measured in production by means of a densitometer, i.e. an instrument (such as from Macbeth, Tobias or similar), which uses the principle of diffuse light transmission. The instrument is suitable for measuring the optical density values of films coated with aluminium metallization. The accuracy and precision of the measurements is high and about +/- 0.2 OD and about +/-0.01 OD, respectively, within a measuring range from 0 to 6.60 OD. In lab measurements, a spectrophotometer may alternatively measure the light transmission over the full visible spectrum (380-800 nm). The optical density is calculated from the light transmission (T, also referred to as I₁/I₀ i.e. ratio of incident light to transmitted light) value at 560 nm, according to a formula OD= -log₁₀(I₁/I₀) and the values obtained are equally accurate (+/- 0.2 OD) and comparable to light transmission densitometer values.

Bendtsen surface roughness is measured according to ISO 8791-4.

Gurley porosity is measured according to Tappi T460 om-02.

### Time of Flight Secondary Ion Mass Spectroscopy ToF-SIMS

Secondary ion mass spectrometry (SIMS) is a technique used to analyze the composition of solid surfaces and thin films by sputtering the surface of the sample with a focused primary ion beam and collecting and analyzing ejected secondary ions. The mass/charge ratios of these secondary ions are measured with a mass spectrometer to determine the elemental, isotopic, or molecular composition of the surface to a depth of 1 to 2 nm. Due to the large variation in ionization probabilities among different materials, SIMS is generally considered to be a qualitative technique, and is a very sensitive surface analysis technique, with elemental detection limits ranging from parts per million to parts per billion.

The ToF-SIMS method measures the composition of solid surfaces and thin films and can thus do this at different depths of the material, to determine the chemical structure of and within the coating.

The ToF-SIMS measurements were performed using a TOF 5 equipment from IONTOF GmBH company

### Depth profiles:

ToF-SIMS profiles were obtained by alternating analysis and abrasion cycles. The sequence used is the following:
Analysis conditions:
   Primary ions: Bi3+, 25 keV, 100 µs, I ~ 0.6 pA, bunched mode
   Analyzed area: 50 x 50 µm², 256 x 256 pixels
   Secondary positive ion analysis
   Surface charge neutralization with a low energy (< 20 eV) pulsed electron flow
Abrasion:
   Abrasion ions: Cs+, 1 keV, I ~70 nA
   Etched area: 200 x 200 µm²
   Cycle used:
   Analysis: acquisition of 1 scan from 0 to 600 amu (max time of flight = 100 µs)
   Abrasion: 10 frames, pause between erosion and analysis: 0.5 seconds
Thickness measurements were performed by Transmission Electronic Microscopy as described above. Samples were prepared by ultramicrotomy.

### Examples

### Example 1

A laminated packaging material was prepared with the structure of /outermost layer / bulk layer / intermediate bonding layer / gas barrier coated paper substrate/ inside polymer layers (tie layer, interjacent layer, innermost layer)/. The laminated packaging material had the following structure: /12 g/m² LDPE / paperboard (bulk layer) / 8 g/m² LDPE / PVOH coated and metallized 39 g/m² Kraft substrate paper / 6 g/m² EAA / 20 g/m² LDPE / 17 g/m² LLDPE film /

The paperboard bulk layer was CLC/C Duplex liquid packaging board from Billerud AB, Sweden, having a bending stiffness 80 mN and basis weight 200 g/m², and being clay-coated on the outer surface only and with an uncoated fibrous inner surface.

The LDPE in the outermost layer, intermediate bonding layer and interjacent layer of the inside polymer layers was 19N730 from Ineos.

The EAA in the tie layer was Primacor 3540 from Dow.

The innermost LLDPE film was SealTOUGH 18X400 from Jindal films.

The PVOH coating was applied in two consecutive steps of coating about 0.85 g/m2, dry weight, of an aqueous PVOH solution of Poval^{®} 15-99 from Kuraray with intermediate and subsequent drying at a substrate surface temperature held below 95 °C to evaporate the water content from the aqueous solution. The PVOH solution was applied by means of a semiflexo roller (smooth roller) arrangement in a "Mastercoater 8000" equipment from Bobst, Italy. The PVOH solution was held at a viscosity from 250 to 300 mPa*s and had a solid content from 7 to 15 weight-%.

The metallization of the thus PVOH-coated and dried paper barrier substrate was performed by physical vapour deposition, PVD, of evaporated aluminium metal, in a metallizing equipment "Expert K5", from Bobst Manchester Ltd, UK. The metal vapour is deposited as a mixture with added oxygen gas injected at the entry of the deposition chamber and the deposition zone, to form aluminium oxide at the interface of the metallization coating to the substrate surface. The formed aluminium oxide had the average formula Al₂O₃. The further coating phase deposits higher proportion of aluminium metal with a much lower oxygen content. The thus oxygen-enriched metallization layer was applied until a sheet resistance of 0.5 Ω/□ was reached, resulting in a coating having an aluminium metallic and shiny appearance, equal to a metal appearance and sheet resistance obtained without any injection of additional oxygen, corresponding to a thickness of 120-130 nm.

### Comparative Example 1

A laminated packaging material was prepared in the same way as in Example 1 with the only difference that the metallization coating was a conventional, standard, physical vapour deposition, PVD, by evaporating aluminium metal without injecting oxygen to the deposition chamber, to provide a sheet resistance of 0.5 Ω/□. By deposition coating of the metallization coatings until ensuring a final sheet resistance of 0.5 Ω/□, the two coatings had a similar content of metal in the coatings. Laminated packaging materials were formed, comprising the inventive and comparative barrier-coated paper substrates, as follows. The paperboard web was unwound, printed on its outer surface and provided with creasing lines for subsequent folding in register with the thus printed décor, and again wound onto a reel. LID lamination was conducted. Thus, the paperboard was melt-extrusion laminated to the paper substrate of the barrier-coated paper with LDPE. The paper barrier multilayer was thus oriented with the metallization coating directed towards the inside polymer layers and the paper barrier substrate directed towards the paperboard bulk layer. The tie layer and interjacent layer of the inside polymer layers were co-extruded between the inner surface of the barrier metallization coating and the innermost layer, in this case being a pre-manufactured film, and the outermost layer was then extruded onto the outer surface of the paperboard.

### Example 2 and Comparative Example 2

In a different test run and further comparison, two variants of a similar laminated material only having a different grade of PVOH in the base coating, i.e. Poval^{®} 6-98 from Kuraray, having a slightly lower degree of hydrolyzation and a lower molecular weight than the Poval^{®} 15-99 from Kuraray, were used as in Example 1 and Comparative Example 1.

The laminate structures were very similar to the ones of Example 1 and Comparative Example 1 and only also had a different configuration of the polymer layers on the inside of the barrier-coated paper material. The different configuration of the inside polymer layers does not significantly influence the oxygen barrier properties, since the types of polymers used, i.e. LDPE, (m-)LLDPE and EAA do not contribute with any significant, inherent gas barrier properties.

The principal structure of the tested laminates was: / 12 g/m² LDPE / paperboard (bulk layer) / 15 g/m² LDPE / PVOH coated and metallized 39 g/m² Kraft substrate paper / 6 g/m² EAA / 29 g/m² of a blend 70:30 of m-LLDPE: LDPE /

### Example 2

The innermost layers of 20 g/m² LDPE and the 17 g/m² of LLDPE film as used in Example 1 was thus in this Example 2 replaced with one single, extrusion coated layer of 29 g/m² of a blend of 70 weight-% of a linear low density metallocene polyethylene, m-LLDPE, and 30 weight-% of an LDPE.

The barrier metallization coating was deposited in the same way as described in Example 1, i.e. with an addition of oxygen which above all immediately forms aluminium oxide in the part of the coating that forms an interface to the substrate surface. The PVOH was applied to the same coat weight as in Example 1, however the PVOH grade was different, as explained above.

### Comparative Example 2

In comparison, the barrier metallization coating was deposited in the same way as described in Comparative Example 1, i.e. as a conventional, standard aluminium metallization coating without adding any oxygen during the deposition process. The laminated material of Comparative Example 2 was otherwise the same as the one of Example 2.

Laminated packaging materials of the barrier-coated cellulose-based substrates of the Examples 2 were formed in the same way as in connection to the Examples 1, except that the inside layers were melt co-extrusion coated in one step onto the inside of the aluminium barrier metallization coatings.

The results from testing the transversal heat-sealing performance of the laminated packaging materials of the Examples 1 and 2 are shown in Table 1 below and in Fig. 8a.

**Table 1**

| | ***Example 1*** | ***Comparative example 1*** | ***Example 2*** | ***Comparative example 2*** |
|---|---|---|---|---|
| ***STRUCTURES:*** | | | | |
| **Outermost layer** | LDPE (12) | LDPE (12) | LDPE (12) | LDPE (12) |
| **Bulk layer** | 80 mN | 80 mN | 80 mN | 80 mN |
| **Bonding layer** | LDPE (8) | LDPE (8) | LDPE (15) | LDPE (15) |
| **Paper substrate** | HD paper | HD paper | HD paper | HD paper |
| **Base Coating** | 1,7 gsm PVOH (Poval^{®} 15-99) | 1,7 gsm PVOH (Poval^{®} 15-99) | 1,7 gsm PVOH (Poval^{®} 6-98) | 1,7 gsm PVOH (Poval^{®} 6-98) |
| **Metallisation** | Oxygen-enriched met, Rs 0,5 | Std met, Rs 0,5 | Oxygen-enriched met, Rs 0,5 | Std met, Rs 0,5 |
| **Inside polymer** | /EAA/LDPE/pre-manufactured | /EAA/LDPE/pre-manufactured | /EAA/mPE/ (6/29) | /EAA/mPE/ (6/29) |
| **layer structure** | film LLDPE/ (6/20/18) | film LLDPE/ (6/20/18) | | |

| ***EVALUATION:*** | | | | |
|---|---|---|---|---|
| **Number of light marks** | **0** | **20** | **7** | **20** |

After performing the sub-system test method for investigating the tendency to form defect initiations at the area of the longitudinal seal overlapping with the transversal heat sealing area of a packaging container, as can be seen from Fig. 8a and Table 1, it was concluded that by applying the oxygen-enriched metallization layer, instead of a conventional metallization layer, to a corresponding sheet resistance, a significantly improved laminated material for being employed in an induction heat sealing process was obtained, because a much lower risk for defects in the critical LS-TS area was seen. A significant reduction of light-marks in the LS-TS area, so-called "TS light marks", i.e. potential defect initiations, was thus obtained by the materials of the inventive Examples 1 and 2, i.e. a reduction from levels of 20-25 potential defect initiations in a standard metallization layer down to only a few or even down to zero with the oxygen-enriched metallization layer.

The sample laminated materials were all formed into water-filled packaging containers of 200 ml size and Tetra Brik^{®} Slim shape, in a Tetra Pak^{®} A3/Speed filling machine. This type of filling machine can fill portion packages at a speed of 24 000 packages/hour and a flexibility that allows for quick change between different package formats. The obtained packages were emptied and measured regarding package oxygen transmission at 25 °C and 50 % RH.

The oxygen transmission values of the packages were all very good. As shown in the diagram of figure 8b, the measured OTR values did not differ significantly between the respective inventive example and comparative examples. This means that the different types of metallization coating did not significantly influence the oxygen barrier properties of each respective laminate.

From further tests in accordance with the inventive examples 1 and 2, i.e. within the invention, it has been concluded that differences in the inside polymer layer configuration does not seem to have any effect on the occurrence of TS light-marks in heat sealing at critical areas where there is thicker and overlapping laminated materials involved.

Sample laminates as of Example 1 above, however with different inside polymer layer configurations, provided thus the same result, i.e. zero TS light-marks, regardless of which of the below inside layer configurations was used, i.e.
a two-layer coextrusion, having the structure
- /adhesive (EAA) polymer 6 g/m²/ blend of m-LLDPE/ LDPE at 70:30 weight ratio, 29 g/m²/
a three-layer coextruded inside having the structure
- /adhesive (EAA) 6 g/m²/ blend HDPE: LDPE at 50:50, 20 g/m²/ blend of m-LLDPE: LDPE at 70:30 weight ratio, 18 g/m²/
a two-layer coextrusion lamination with different innermost pre-manufactured LLDPE-based films, i.e. having the different structures
- /adhesive (EAA) 6 g/m²/ LDPE 20 g/m²/ "SealTOUGH 18X400" from Jindal films, 18 µm/
- /adhesive (EAA) 6 g/m²/ LDPE 20 g/m²/ Mono-oriented blown LLDPE film, 25 µm/
- /adhesive (EAA) 6 g/m²/ LDPE 13 g/m²/ Mono-oriented blown LLDPE film, 36 µm/

The results obtained are shown in the diagram of Figure 9. The variation of results is greater when using a conventional standard aluminium metallization coating in the laminate structure, such as of Comparative Example 1, also when very similar inside polymer layer configurations are used (this may be seen in the diagram of Figure 11a below). However, the oxygen-enriched aluminium metallization as used in the laminate structure of Example 1 seemed to eliminate any problem of induced defect initiation in the LS-TS area, regardless of the polymer layer configuration on the inside of the barrier-coated paper structure.

### Comparative Examples 3-1, 3-2, 4 and 5

Different samples of barrier coated cellulose-based substrates were produced. In the first sample (Comparative Example 3-1), a base coating of PVOH, i.e. Poval^{®} 6-98, from Kuraray was applied onto a paper substrate, having a density of about 950 kg/m³, and a grammage weight of about 40 g/m². A base-coating of PVOH was applied onto the substrate paper in the first sample, as two consecutive coatings of about 0.7 g/m².

A corresponding barrier coated cellulose-based substrate having a base coating of PVOH of the grade Poval 15-99 was made for Comparative Example 3-2.

In a further sample (Comparative Example 4), a base coating of coldwater soluble starch was applied onto the same paper substrate, as two consecutive coatings of about 0.5-0.6 g/m².

The samples of base-coated paper substrates were further metallized by conventional physical vapour deposition of aluminium metal to a sheet resistivity in the metallization coating of about 0.5 Ω/□ (Ohms/ square), and subsequently laminated into a laminate structure having the principal structure:
// LDPE outside (12 g/m²)/ paperboard 80 mN/ bonding layer blend LDPE+mLLDPE (15 g/m²)/ barrier-coated paper substrate/ adhesive polymer EAA (6 g/m²)/ LDPE (13 g/m²)/ bi-axially oriented LLDPE film (17 g/m²) //

The laminated material sample according to Comparative Example 4 produced fewer marks in the metallization coating during the transversal induction heat sealing operation. The conclusion from these results, was that employing starch as a base coating provides better stability during the phase of applying heat for sealing of the inside polymers, especially at the sensitive areas where defect initiation marks in a thin metallization coating more easily may be generated. Starch is less preferred than PVOH from a gas barrier point of view, however.

In a further Comparative Example 5 it was shown that the lower value of oxygen transmission rate from using a base coat of starch, could be regained by instead applying a top coating of PVOH onto the metallization coating, thus adding a top coating of PVOH to the structure of Comparative Example 4. This result is shown in Fig. 10. Such a structure provided both good oxygen barrier properties in packages and worked well in induction heat sealing operations.

The numbers of TS light marks at the different levels of the applied induction heating power were noted in Table 2, showing that a base coating of starch significantly improved the quality of the transversal heat seal, causing substantially no TS light marks at all.

**Table 2**

| | ***Comparative example 3-1*** | ***Comparative example 3-2*** | ***Comparative example 4*** | ***Comparative example 5*** |
|---|---|---|---|---|
| ***STRUCTURES:*** | | | | |
| **Outermost layer** | LDPE (12) | LDPE (12) | LDPE (12) | LDPE (12) |
| **Bulk layer** | 80 mN | 80 mN | 80 mN | 80 mN |
| **Bonding layer** | LDPE (15) | LDPE (15) | LDPE (15) | LDPE (15) |
| **Paper substrate** | HD paper | HD paper | HD paper | HD paper |
| **Base Coating** | 1,4 gsm PVOH (Poval^{®} 6-98) | 1,5 gsm PVOH (Poval^{®} 15-99) | 1,2 gsm starch | 1,2 gsm starch |
| **Metallization** | Std met, Rs 0,5 | Std met, Rs 0,5 | Std met, Rs 0,5 | Std met, Rs 0,5 |
| **Top coating** | - | - | - | 0,7 gsm PVOH (Poval^{®} 6-98) |
| **Inside polymer layer structure** | /EAA/LDPE/pr e-manufactured film LLDPE/ (6/13/18) | /EAA/LDPE/p re-manufactured film LLDPE/ (6/13/18) | /EAA/LDPE/p re-manufactured film LLDPE/ (6/13/18) | /EAA/LDPE/pre-manufactured film LLDPE/ (6/13/18) |

| ***EVALUATION:*** | | | | |
|---|---|---|---|---|
| **Number of TS light marks** | **49** | **22** | **1,5** | **0** |

### Comparative Examples 6-1

Further examples were performed as simplified sub-system screening tests, wherein the barrier and inside layers were laminated but not to a paperboard bulk layer. Such thinner laminates were thus tested regarding induction heat sealability in a comparable manner to above. The barrier-coated cellulose-based substrate was thus not laminated to a paperboard bulk layer, but only laminated to polymer layers on the inside of the barrier coatings, as directed in a packaging container made from the laminate.

The structure was according to the following:
//thin paper substrate 40 g/m²/ base coating / standard metallization to 0.5 Ohms/square/ adhesive (EAA) polymer 6 g/m²/ blend of m-LLDPE/ LDPE at 70:30 weight ratio, 29 g/m²//

The paper substrate had a density of about 950 kg/m³, and a grammage weight of about 40 g/m².

Different base coatings were applied in a pilot coating equipment and subsequently metallized by a standard PVD metallization process. The barrier-coated paper substrates were then laminated into the above principal paper barrier structures.

The different laminated samples were conditioned for at least 10 days at 23 °C and 50 % RH.

First, three different base coatings, applied in the same way, were compared:
Poval^{®} 6-98 (pure aqueous PVOH having 98 % degree of hydrolysis)
Poval^{®} 15-99 (pure aqueous PVOH having 99 % degree of hydrolysis)

Exceval^{®} 4104 AQ (aqueous modified PVOH comprising from 3 to 15 wt% of ethylene monomer units; the modified polymer is sometimes denoted as "EVOH", but contains significantly less ethylene than a conventional thermoplastic EVOH used for melt processing and thus has more of the characteristics of an unmodified PVOH and is water soluble/dispersible)

The laminate samples were inspected regarding light marks in the LS-TS overlap area, after induction heat sealing, as described above, in a test rig by applying different levels of induction power and thicknesses of materials at the overlap area.

The results as presented in Table 3 show that the laminate materials with the modified PVOH, Exceval^{®} 4104 AQ, led to fewer TS light marks than the laminate materials comprising the pure PVOH Poval^{®} 6-98 (8-10 marks), while they still provided a few more TS light marks (2) than the materials comprising PVOH Poval^{®} 15-99, which in turn provided no light-marks at all. The modified PVOH thus seems feasible too, for providing a base coating for the metallization for the purpose of induction heat sealing.

**Table 3**

| | ***Comparative Examples 6-1*** | | | ***Examples 6-2a and 6-2b*** | |
|---|---|---|---|---|---|
| ***STRUCTURES:*** | | | | | |
| **Outermost layer** | - | - | - | LDPE (12) | LDPE (12) |
| **Bulk layer** | - | - | - | 80 mN | 80 mN |
| **Bonding layer** | - | - | - | LDPE (8) | LDPE (8) |
| **Bulk layer** | HD paper | HD paper | HD paper | HD paper | HD paper |
| | | | | | |
| **Base Coating** | 2 gsm PVOH (Poval^{®} 6-98) | 2 gsm PVOH (Poval^{®} 15-99) | 2 gsm EVOH (Exceval^{®} 4104) | 1,7 gsm EVOH (Exceval^{®} HR3010) | 1,7 gsm PVOH (Poval^{®} 15-99) |
| **Metallisati on** | Std met, Rs 0,5 | Std met, Rs 0,5 | Std met, Rs 0,5 | Oxygen-enriched met, Rs 0,5 | Oxygen-enriched met, Rs 0,5 |
| **Inside polymer layer structure** | /EAA/mPE/ (6/29) | /EAA/mPE/ (6/29) | /EAA/mPE / (6/29) | /EAA/HDP E+LDPE/70 :30 m-LLDPE:LD PE/ (6/27/18) | /EAA/HDP E+LDPE/7 0:30 m-LLDPE:LD PE/ (6/27/18) |

| ***EVALUATION:*** | | | | | |
|---|---|---|---|---|---|
| **Number of TS light marks** | **8** | **0** | **5** | | |
| **Number of TS light marks (Further stressed test)** | | | | **1** | **2** |

### Example 6-2a and Example 6-2a

In a later comparison of two laminate structures in accordance with the invention, a laminate structure having a base coating of a modified PVOH Exceval^{®} HR3010 was compared to the same structure having a base coating of unmodified PVOH, Poval^{®} 15-99. In both cases the coatings were applied at 1.7 g/m2 and in both cases they were deposition coated with the oxygen-enriched aluminium barrier metallization coating, i.e. with added oxygen during the phase of the deposition zone. The inside polymer layer structure of these laminate structures were coextruded layers having in the order of sequence from the barrier-coated paper substrate to the innermost layer:
/adhesive polymer layer of EAA (6 g/m²) / a blend layer of HDPE and LDPE at a weight ratio 50:50 (27 g/m²)/ a blend layer of mLLDPE and LDPE at a weight ratio 70:30 (18 g/m²)/

The outermost layer, the bulk paperboard, the bonding layer (between the bulk layer and the barrier-coated paper substrate) were all the same as in Example 1 above.

The heat-sealing test as described above was made more severe and even further stressed, by using only a thicker carton strip having three times the thickness of the thickest strip, i.e. a total thickness of 1.5 mm, such that the very good samples above finally also provided some induced TS light marks.

The results show in Table 3 that there is an insignificant difference between the two laminate structures in this respect, and concluded what was seen also in the above sub-system screening tests (Comparative Examples 6-1).

### Comparative Examples 7

In the same test series as according to the above, it was investigated to mix 10 and 30 weight-% of laminar, mineral particles, i.e. bentonite clay particles, into each of an aqueous composition of pure PVOH, being Poval^{®} 6-98 and Poval^{®} 15-99. There were no resulting TS light marks in any of the laminates having base coatings with bentonite mixed into the PVOH composition. Moreover, the sheet resistance remained low or may even have been lowered by the addition of bentonite particles. As shown by the results in Table 4, it seems thus highly feasible to mix laminar mineral particles into the base coating, from an induction heat sealing point of view.

**Table 4**

| ***Example*** | ***Comparative Examples 7*** | | | | |
|---|---|---|---|---|---|
| ***STRUCTURES:*** | | | | | |
| **Outermost layer** | - | - | - | - | LDPE (12) |
| **Bulk layer** | - | - | - | - | 80 mN |
| **Bonding layer** | - | - | - | - | LDPE (15) |
| **Paper substrate** | HD paper | HD paper | HD paper | HD paper | HD paper |
| **Base Coating** | ~1.5 gsm PVOH (Poval^{®} 6-98) + 10% Bentonite | ~1.5 gsm PVOH (Poval^{®} 6-98) + 30% Bentonite | ~1.5 gsm PVOH (Poval^{®} 15-99) + 10% Bentonite | ~1.5 gsm PVOH (Poval^{®} 15-99) + 30% Bentonite | 2 gsm PVOH (Poval^{®} 15-99) + 10% Bentonite |
| **Metallisation** | Std met, Rs 0,5 | Std met, Rs 0,5 | Std met, Rs 0,5 | Std met, Rs 0,5 | Std met, Rs 0,5 |
| **Inside polymer layer structure** | /EAA/mPE / (6/29) | /EAA/mPE/ (6/29) | /EAA/mPE/ (6/29) | /EAA/mPE / (6/29) | /EAA/LDPE/ pre-manufacture d film LLDPE/ (6/13/18) |

| ***EVALUATION:*** | | | | | |
|---|---|---|---|---|---|
| **Number of TS light marks** | **0** | **0** | **0** | **0** | **0** |

### Comparative Examples 8

In the same sub-system screening test series as according to the above, a couple of other grades of PVOH with high degree of hydrolysis were tested for the base coating, i.e. Poval^{®} 20-98 and Poval^{®} 28-99 and compared to the above grades Poval^{®} 6-98 and Poval^{®} 15-99. The results showed 8-10 TS light marks for the 6-98 variant, while all the others provided no TS light marks at all. As shown in Table 5, the further grades with 98 % degree of hydrolyzation are also very good base coatings for the metallization for the purpose of high frequency induction heat sealing. There is a difference vs the Poval^{®} 6-98 grade, which appears could be due to that grade having a lower molecular weight. Keeping in mind that the test method is performed at stressed conditions, these base coatings are yet all suitable and in accordance with the invention.

**Table 5**

| ***Example*** | ***Comparative examples 8*** | | | |
|---|---|---|---|---|
| ***STRUCTURES:*** | | | | |
| **Decor** | - | - | - | - |
| **Board** | - | - | - | - |
| **Laminate** | - | - | - | - |
| **Paper** | HD paper | HD paper | HD paper | HD paper |
| **Coating** | ~1.5 gsm PVOH (Poval^{®} 6-98) | ~1.5 gsm PVOH (Poval^{®} 20-98) | ~1.5 gsm PVOH (Poval^{®} 15-99) | ~1.5 gsm PVOH (Poval^{®} 28-99) |
| **Metallisation** | Std met, Rs 0,5 | Std met, Rs 0,5 | Std met, Rs 0,5 | Std met, Rs 0,5 |
| **Inside** | /EAA/mPE/ (6/29) | /EAA/mPE/ (6/29) | /EAA/mPE/ (6/29) | /EAA/mPE/ (6/29) |

| ***EVALUATION:*** | | | | |
|---|---|---|---|---|
| **Number of TS light marks** | **8** | **0** | **0** | **0** |

### Example 9 and Comparative Example 9

As seen in previous Inventive Example 1, when using the PVOH base coating with Poval^{®} 15-99 in the full laminate with paperboard, the induced TS light marks by the stressed heat-sealing test may be reduced and even eliminated. This is a great achievement, in comparison to the same comparative laminates, using a conventional standard aluminium metallization obtained by depositing aluminium metal vapour only.

In previous attempts to improve the laminates having the conventional standard aluminium metallization, it had been seen a slight trend towards lower surface weights of the base coating providing fewer TS light marks and thus being better for induction heat sealing in the LS-TS area. In these comparative examples 9, the aim was to investigate whether the surface weight of the base coating could be optimized further regarding the heat-sealing results.

The TS light-marks sub-system heat sealing test as described above was made more severe and even further stressed, by using only a thicker carton strip having three times the thickness of the thickest strip, i.e. a total thickness of 1.5 mm, such that the good samples finally also would provide some induced TS light marks.

Accordingly, the same laminates as produced in Example 1, but with different coating weights of the PVOH base coating applied, were thus tested under even further stressed conditions.

As seen in the diagram in Figure 11a, there were no TS light marks at all visible in the inventive laminate samples having the oxygen-enriched metallization layer, from the normal, original heat-sealing test, i.e. the test applying the normal level of further stress vs reality conditions. Based on the experiences from thicker coat weights of PVOH with the conventional standard metallization deposition coating (see left part of the diagram), no laminate was however tested having a surface weight of PVOH above 2 g/m² and an oxygen-enriched metallization coating.

Furthermore, as seen in the diagram in Fig. 11b, there were still no TS light marks induced at the lower surface weights from 1.0 to 1.5 g/m², even in the test with a higher level of stress applied. However, at 1.7 g/m², a couple of TS light marks were induced. Although the results are still far below any risk level under reality conditions in a filling machine, keeping in mind that these tests were extra stressed in comparison to the normal stress-test, it seems it could still be better to stay at a maximum surface weight of 2.1 g/m², such as below 2.0 g/m², such as below 1.8 g/m², such as below 1.7 g/m², such as 1.6 g/m² or below. For sufficient oxygen gas barrier properties, however, it seems advantageous to apply at least 1.0 g/m² in total, however, such as at least 1.1 g/m², such as at least 1.2 g/m², such as at least 1.3 g/m².

Some of the laminated materials of Inventive and Comparative Examples 9 were also tested regarding oxygen transmission on planar samples of the material according to ASTM F1927:2020 and ASTM D3985:2017. Measurements were made at 23 °C and 50% RH. Even a low surface weight of the base coating as 1.0 g/m² seems sufficient for the purpose of liquid carton packaging.

As seen in the diagram of Figure 11c, however, based on experience from the comparative laminates having a standard metallization only, the risk of too low oxygen barrier in the inventive packaging laminate may be safely avoided if not applying lower surface weight of the base coating than 1.0 g/m².

Similarly, some of the laminated material samples from Inventive and Comparative Examples 9 were formed into water-filled packaging containers of 200 ml size and Tetra Brik^{®} Slim shape, in a Tetra Pak^{®} A3/Speed filling machine. This type of filling machine can fill portion packages at a speed of 24000 packages/hour. The obtained packages were emptied and measured regarding package oxygen transmission, at 25 °C and 50 % RH.

The OTR (Oxygen Transmission Rate) values, as shown in the diagram of Figure 11d, did not differ significantly between the respective inventive example and comparative example, i.e. the different metallization coatings did not significantly influence the oxygen barrier properties of each respective packaging container. However, there is a slight indication still, of a higher oxygen transmission below 1.0 g/m², as seen also in the OTR results from measurement on planar, inventive samples of laminated packaging materials.

### Example 10 and Comparative Example 10

There is a further surprising improvement, however, by the laminated materials of the Inventive Examples.

When testing some sample laminates from Inventive and Comparative Examples 9 by first storing them in two different climates and then measuring their OTR at each respective climate of 23 °C/ 50 % RH and 23 °C/ 80 % RH, respectively, i.e. samples from the Inventive and a Comparative Example 9 having a base coating surface weight of 1.0 g/m² (Comparative Example 10a), and a further sample from Comparative Example 9 having a base coating surface weight of 1.3 g/m² (Comparative Example 10b), a more important difference was seen. The metallization coatings were, as in the previous examples, deposited to a sheet resistance of about 0.5 Ohms/square and the PVOH grade was Poval^{®} 15-99.

As may be concluded from the diagram of Figure 12a, the Inventive laminate with only 1.0 g/m² of base coating PVOH, Example 10, is not negatively influenced by the higher temperature and moisture conditions despite 6 months storage at severe climate conditions of 35 °C and 80 % relative humidity, RH, before performing OTR measurements, regardless of the measurement conditions.

The sample laminates of the Comparative Examples 10a and 10b, on the other hand, each exhibit significantly worse oxygen transmission measured at the more severe climate conditions, after the prior storage for 6 months, regardless of the storage climate conditions. (The higher level of the OTR values of the sample having only 1.0 g/m² of PVOH coating with a standard metallization applied, Comparative Example 10a, reflects what is shown above in Fig. 11d, i.e. that the oxygen barrier properties become less reliable at 1 g/m² and below. We believe that there may have been an accidental defect in the PVOH coating on the area measured on, or temporarily lower amounts of PVOH-coating applied. Based on extensive testing at the higher coat weights of PVOH, around 1.5 g/m², we do not see a significant difference in OTR level between two laminates of the same structure, where only the type of metallization coating differs.)

The worse result at higher humidity is reversible, however, meaning that the oxygen barrier properties seem to improve again as the laminate is re-conditioned to the 23 °C/ 50 % RH lower-humidity climate again, and vice versa (there is a minimum time period for conditioning of the sample materials before measurements, according to the test procedure as well).

Upon storage of the packages filled with the liquid products, however, the equilibrium moisture content in the laminated packaging material, particularly in the cellulose-based bulk layer, will constantly be at a higher humidity level of at least 80 % RH. The moisture sensitive barrier properties of PVOH are negatively influenced by continuous exposure to high moisture conditions and therefore, will not function as well as intended, when in use. This has been understood and accepted as the fate for non-metal foil materials, but here surprisingly, the non-foil laminated material of the Inventive Example 10 does not show this difference at all. It is "immune" and stable to the storage and conditioning at the significantly more severe climate of 35 °C/ 80 % RH, and equally stable in measurements regardless of the prior storage climate.

At an already good level of OTR, we seem thus to be able to keep that good level also in liquid-filled packages and furthermore, to be able to heat seal such a non-foil (not comprising a metal foil) paper-barrier based material into filled packages by means of induction heat sealing with a better resulting seal quality and at improved heat sealing conditions (possible to function over a wider window of heat sealing power), as shown by the Inventive Examples above.

These improved results may also be illustrated by the diagram of Fig. 12b, in which the same laminate samples as tested in the diagram of Figure 12a (Example 10 and Comparative Example 10a) having the base coating surface weight of 1.0 g/m², i.e. the coating surface weight chosen from Examples 9 having the same principal laminate structures as of Example 1 and Comparative Example 1, however with barrier-coated paper substrates having a PVOH base coating of a surface weight of 1.0 g/m² only, and with the standard vs oxygen-enriched metallization coating applied, respectively.

Fig. 12b illustrates the results of repeated OTR measurements at measurement conditions of 23 °C/ 80 % RH, of the above samples after storage at two climates of 23 °C/ 50 % RH and 35 °C/ 80 % RH, respectively, for 6 months. The measured OTR values of the laminate of Comparative Example 10 increases continuously irrespectively of storage climate but increases more having been stored for 6 months at the higher humidity climate. The OTR of the laminate of Inventive Example 10 remains constant and unaffected by the storage climate conditions and measures similar values in each of the consecutive OTR measurements. The OTR was measured for all samples at 23 °C and 80 % RH but the samples had thus been stored at different climate conditions during 6 months prior to the OTR measurements. The initial level of OTR is not comparable between the curves, the curves merely illustrate how each measured value has increased in comparison to the previous measured value.

To conclude, laminated materials from the paper-based barrier-coated barrier material of Example 10, which in the majority consists of moisture-sensitive materials (paper and PVOH) and having an oxygen-enriched aluminium metallization coating applied, appears to exhibit a permanent moisture resistance on par with laminates with the traditional full-barrier Aluminium foil of thickness in the micron range (5-9 µm). This allows for longer storage times and better endurance to humid climates than hitherto anticipated regarding non-foil packaging laminates.

Moreover, it may with this solution in the future be less critical to maximize and optimize the initial gas barrier properties of such a non-foil laminated material, or a package produced therefrom, because the further loss of oxygen gas barrier properties that normally would occur due to long-term storage of liquid-filled packages from non-foil materials, may instead be significantly reduced.

### Example 11 and Comparative Example 11

The two types of barrier aluminium metallization coatings, a standard aluminium vapour deposition coating and an oxygen-enriched aluminium vapour deposition coating, as deposited onto a PVOH-coated paper substrate, as described above in connection to Example 1 and Comparative Example 1/ Example 9 and Comparative Example 9, were further investigated by TOF-SIMS analysis.

### Comparative Example 11

Fig. 13a shows schematically an intensity-versus-time diagram from surface analysis by Time of Flight Secondary ion Mass Spectroscopy ToF-SiMS at varying depths of a standard aluminium metallization coating, as deposited onto a PVOH surface of a base coated paper substrate, focussing on how the content of oxygen in the form of aluminium oxide gradually varies throughout the thickness of a standard barrier aluminium metallization coating, as applied by standard metal vapour deposition, PVD, performed onto a PVOH-coated substrate as above in Comparative Example 9. The principal sub-portions or sub-layers are indicated in the diagram, while the sub-portions are not distinctly separable from each other, but gradually transitioning from one characteristic portion to the other. The first sub-portion at zone 3 constitutes the interface of the metallization coating towards the PVOH-coated paper substrate, while the final, third sub-portion at zone 1 represents the surface of the coating. The content of oxygen, which has been determined as aluminium oxide of the approximate formula Al₂O₃, is a gradient declining from the first sub-portion of the metallization coating to a minimum at the centre of the second sub-portion, which has a greater content of aluminium metal, as also seen in the diagram (zone 2). The gradient thereafter increases again towards the third and final sub-portion surface at the surface of the coating (zone 1). Such a third sub-portion of aluminium oxide is always present on any aluminium surface exposed to air, as the aluminium surface reacts with oxygen in the air to form a passivating layer of oxide very quickly. The gradient is steep on both sides of the curve, with a clearly steep incline from the second sub-portion to the third sub-portion, and the concentration of aluminium oxide (CsAlO+) at the centre of the coating, i.e. at the minimum of the gradient curve, was determined relative to the concentration of abrasion (sputtering) Cesium ions, Cs+, to be lower than 1*10⁻⁵. There is a low content of aluminium hydroxide, AIOH+, which is believed to be formed from moisture in the PVOH-coated paper substrate.

### Example 11

Fig. 13b is a corresponding schematic diagram from TOF-SIMS analysis, showing the corresponding relative content of oxygen in the form of aluminium oxide throughout the thickness of an oxygen-enriched barrier aluminium metallization coating, as obtained by metal vapour deposition while adding oxygen to the entry part of the deposition zone, (i.e. the part of the deposition zone closest to where the substrate enters into the deposition zone). It may be concluded that there is more aluminium oxide in the first and third sub-portions than in the second sub-portion, but in total there is a higher content of aluminium oxide CsAlO+ throughout the coating, than in the standard metallization coating. The gradient is less steep on both sides of the curve and exhibits a "shoulder," most distinctly between the third sub-portion and the second sub-portion, i.e. a "dome"-shaped final incline towards the surface of the coating. The concentration of aluminium oxide (CsAlO+) relative to Cesium ions, Cs+ from the etching, was determined at the centre of the coating, i.e. at the minimum of the gradient curve, to be higher than 1*10⁻⁵. The dome-shaped appearance does not necessarily reflect that the first and third sub-portions of aluminium oxide are thicker, but rather that the etching by sputtering through this portion takes longer time, which means that these portions of the coatings are harder to etch than the second sub-portion of a prevailing pure-metal character.

### Comparative Example 11 (continued)

Fig. 14a shows a further intensity-versus-time diagram from surface analysis by ToF-SiMS at varying depths of a standard aluminium metallization coating, as deposited onto a PVOH surface of a base coated paper substrate, focussing on the presence and content of trimethyl aluminium, CH3AI+, in the coating. There is a low content of trimethyl aluminium in the first sub-portion, meaning that the oxidation to aluminium oxide in this sub-portion is not complete. The concentration of CH3AI+ relative to the abrasion Cesium ions, Cs+, was determined at the maximum of the gradient curve in this first sub-portion, to be lower than 1*10⁻⁵. This is thus a diagram from analysis of an older, stabilised standard metallization coating (about 1 year old), i.e. after the expected passivation (oxidation) of the aluminium in this sub-portion, which slowly progresses over a period of several months.

### Example 11 (continued)

Fig. 14b-1 shows the corresponding diagram to Fig. 14 a, but of the oxygen-enriched barrier aluminium metallization coating of Fig. 13b, instead. There was no (zero) content of trimethyl aluminium visible in the first sub-portion, presumably because the oxidation to aluminium oxide in this sub-portion is complete. The concentration relative to the abrasion Cesium ions, Cs+, is thus 0.

Fig. 14b-2 shows the corresponding diagram of a similar oxygen-enriched barrier aluminium metallization coating. There was, as indicated, close to no (zero) content of trimethyl aluminium visible in the first sub-portion, again because the oxidation to aluminium oxide in this sub-portion is substantially complete. The concentration relative to the abrasion Cesium ions, Cs+, as determined as a maximum value within the first sub-portion, is substantially 0.

### Example 12 and Comparative Examples 12

In the early stage of the described development, the method for dispersion coating of the base coating layer was improved to optimize the oxygen barrier contribution of a barrier-coated cellulose-based substrate and to see how various base coating variants would interact with aluminium barrier metallization coatings, subsequently deposited onto the base coating.

The principal laminate structure investigated for this purpose was the same principal laminate structure as in Example 1 and Comparative Example 1:
/12 g/m² LDPE / paperboard (bulk layer) / 8 g/m² LDPE / PVOH coated and metallised 39 g/m² Kraft substrate paper / 6 g/m² EAA / 20 g/m² LDPE 1 17 g/m² LLDPE film /

The paperboard bulk layer was CLC/C Duplex liquid packaging board from Billerud AB, Sweden, of bending stiffness 80 mN and basis weight 200 g/m², clay-coated on the outer surface only and with an uncoated fibrous inner surface.

The LDPE in the outermost layer, intermediate bonding layer and interjacent layer of the inside polymer layers was 19N730 from Ineos.

The EAA in the tie layer was Primacor 3540 from Dow.

The innermost LLDPE film was SealTOUGH 18X400 from Jindal films.

The metallization coatings of the PVOH-coated and dried paper barrier substrate were performed by physical vapour deposition, PVD, in a metallizing equipment "Expert K5", from Bobst SA, Switzerland.

The laminated packaging material was formed as follows. The paperboard web was unwound, printed on its outer surface and provided with creasing lines for subsequent folding in register with the thus printed décor, and again wound onto a reel. LID lamination was conducted ("Lamination - Inside - Décor side"). Thus, the paperboard was melt-extrusion laminated to the paper substrate of the barrier-coated paper with LDPE. The paper barrier multilayer was thus oriented with the metallization coating directed towards the inside polymer layers and the paper barrier substrate directed towards the paperboard bulk layer. The tie layer and interjacent layer of the inside polymer layers were co-extruded between the inner surface of the barrier metallization coating and the innermost layer, in this case being a pre-manufactured film, and the outermost layer was then extruded onto the outer surface of the paperboard (bulk layer).

The sample laminated materials were formed into water-filled packaging containers of 200 ml size and Tetra Brik^{®} Slim shape, in a Tetra Pak^{®} A3/Speed filling machine. The obtained packages were emptied and measured regarding package oxygen transmission at 25 °C and 50 % RH (unit cm³/package, 24 hours, 21% oxygen (0.2 atm)).

### Example 12

The PVOH coating was applied in two consecutive steps of coating about 0.85 g/m2, dry weight, of an aqueous PVOH solution of Poval^{®} 15-99 from Kuraray with intermediate and subsequent drying to evaporate the water content. The PVOH was applied by means of a smooth roller arrangement (more specifically a semiflexo roller coating arrangement) by a "Mastercoater 8000" equipment from Bobst, Italy. The PVOH solution was held at a viscosity from 250 to 300 mPa*s and had a solid content from 7 to 15 weight-%. The applied respective coating was dried at a surface temperature below 95 °C to evaporate the aqueous content to form a dry PVOH coating layer of a total coat weight of 1.7 g/m².

The metal vapour was deposited as a mixture with added oxygen gas injected at the entry of the deposition chamber and the deposition zone, to form aluminium oxide at the interface of the metallization coating to the surface of the PVOH-coated paper substrate produced as described above. The formed aluminium oxide had the average formula Al₂O₃. The further coating phase deposits a high proportion of aluminium metal with a much lower oxygen content than the first sub-portion of the coating from the initial deposition phase, to form a metallization coating with metallic appearance and high optical density (whereas aluminium oxide is transparent). The thus overall oxygen-enriched metallization layer was applied until a sheet resistance of 0.5 Ω/□ was reached, resulting in a coating having an aluminium metallic and shiny appearance, equal to a metal appearance and sheet resistance obtained in a metal vapour metallization coating formed without any injection of additional oxygen.

### Comparative Example 12a

The laminated material was made in the same way and with the same materials as in Example 12, except in that the PVOH coating was applied in two consecutive steps of gravure coating about 0.75 g/m2, dry weight, of an aqueous PVOH solution of Poval^{®} 15-99 from Kuraray with intermediate and subsequent drying to evaporate the water content. The PVOH was applied by means of a reverse gravure coating arrangement. The PVOH solution was held at a viscosity from about 50 to 100 mPa*s and had a solid content from 7 to 15 weight-%. The applied respective coating was dried at a surface temperature below 85 °C to evaporate the aqueous content to form a dry PVOH coating layer of a total coat weight of 1.5 g/m².

The thus PVOH-coated paper substrate was further vapour deposited (PVD) with a standard aluminium metallization coating from essentially pure aluminium metal vapour only, which was applied until a sheet resistance was reached such that the barrier-coated paper substrate would exhibit a sheet resistance of 0.5 Ω/□ when used for producing packaging containers from a laminated material comprising the barrier-coated paper substrate.

### Comparative Example 12b

A further comparative barrier-coated paper substrate was prepared in the same way as the PVOH-coated paper substrate of Example 12, however instead vapour deposition coated (PVD) with a standard aluminium metallization coating from essentially pure aluminium metal vapour only, which was applied until a sheet resistance was reached such that the barrier-coated paper substrate would exhibit a sheet resistance of 0.5 Ω/□ when used for producing packaging containers from a laminated material comprising the barrier-coated paper substrate.

The thus barrier-coated paper substrates were laminated as described above. The exact laminated structures are presented in Table 6. It is to be noted that the slightly varied amounts of melt extruded LDPE in the inside polymer layer configuration and in the bonding layer between paperboard and the barrier-coated paper substrate, are generally known to not influence oxygen barrier properties of the total laminate significantly, i.e. LDPE does not contribute with any inherent oxygen barrier properties such that a thicker or thinner LDPE layer would alter the OTR results. The sample laminated materials were formed into water-filled packaging containers of 200 ml size and Tetra Brik^{®} Slim shape, in a Tetra Pak^{®} A3/Speed filling machine. The obtained packages were emptied and measured regarding package oxygen transmission at 25 °C and 50 % RH (unit cm³/package, 24 hours, 21% oxygen (0.2 atm)). The results are presented in figure 15.

We have observed by repeated experiments, as explained in connection to the previous Examples, that an oxygen-enriched barrier aluminium metallization coating does not add or significantly alter the level of oxygen barrier properties at 23 °C and 50% RH to a same PVOH-coated paper substrate in comparison to a standard, aluminium metal-vapour deposition coating, as measured on a package formed from a same laminated material structure, if the aluminium metallization coatings are applied by the same equipment and under essentially the same PVD conditions (excepting the addition of oxygen to the deposition chamber).

As seen in figure 15, there is, however, a notable and significant improvement of the oxygen barrier properties when coating the PVOH with a smooth roller arrangement as in Example 12, in comparison to previous coating of PVOH by means of a gravure roller arrangement, such as with reverse gravure roller coating, as in Comparative Example 12a. This holds true, regardless of the type of aluminium metallization deposition coating applied under the same conditions, other than the oxygen-enrichment. The small difference in coat weight (0.2 g/m²) of PVOH between the two examples has been concluded as not being significantly important to the OTR results of packages formed from the laminated materials as described above.

Considering this improvement of the basic oxygen barrier level, in combination with the improvement to the durability of the oxygen barrier properties at high humidity climate conditions, as shown by Example 10, an improved barrier-coating combination for cellulose-based substrates has been developed which is more suitable for packaging of liquid food into carton-based, aseptic packages, for long-term storage at ambient conditions, or for even more severe, non-chilled storage conditions.

**Table 6**

| ***Example*** | ***Example 12*** | ***Comparative example 12a*** | ***Comparative example 12b*** |
|---|---|---|---|
| ***STRUCTURES:*** | | | |
| **Decor** | LDPE (12) | LDPE (12) | LDPE (12) |
| **Board** | 80 mN | 80 mN | 80 mN |
| **Laminate** | LDPE (8) | LDPE (15) | LDPE (8) |
| **Paper** | HD paper | HD paper | HD paper |
| **Coating** | 1,7 gsm PVOH (Poval^{®} 15-99) | 1,5 gsm PVOH (Poval^{®} 15-99) | 1,7 gsm PVOH (Poval^{®} 15-99) |
| **Metallisation** | Ox-met | Std met | Std met |
| **Inside** | /EAA/LDPE/pre-manufactured film LLDPE/ (6/20/18) | /EAA/LDPE/pre-manufactured film LLDPE/ (6/13/18) | /EAA/LDPE/pre-manufactured film LLDPE/ (6/20/18) |

| ***COATING TECHNIQUE:*** | | | |
|---|---|---|---|
| | Smooth roller | Reverse gravure | Smooth roller |

The following advantages can accordingly be achieved by the invention.

The barrier-coated cellulose-based substrate as described above and claimed herein, enables improved quality heat sealing of relatively thick laminated packaging materials, by high-frequency induction, at critical overlap sealing areas thereof. By applying the oxygen-enriched barrier aluminium metallization coating instead of a standard, conventional metal-vapour deposited metallization layer, to a corresponding sheet resistance, an improved laminated material for use in an induction heat sealing process was obtained, with a significantly lower risk for defects in the critical LS-TS area, i.e. where the overlapping longitudinal heat seal area meets (crosses) the transversal heat seal area.

The barrier-coated cellulose-based substrate also exhibits increased stability of its oxygen gas-barrier properties in laminated packaging materials and in filled, heat-sealed packaging containers made therefrom, surprisingly also during long-term storage and use. Improved stability in high humidity climate conditions is enabled, i.e. when filled with liquid food products, and additionally at continuous, longer-term storage in climates of high humidity also on the outside of the package. Considering that the cellulose-based substrate and its adjacent moisture-sensitive base coating of a gas barrier polymer is not shielded from migrating water vapour (moisture) from any side, such improved oxygen gas barrier stability at high humidity was unexpected and a truly surprising effect. By only adding a very low amount of oxygen to a conventional aluminium deposition metallization coating, these excellent results were achieved, especially useful for long-term packaging of wet or liquid, oxygen-sensitive food products.

The packaging material may further provide improved repulpability and recycling properties, i.e. increased sustainability, to laminated packaging materials, due to the increased content of easily repulpable, fibrous cellulose of the barrier-coated cellulose-based substrate.

Generally, the use of a cellulose-based substrate in laminated materials and packages provides for a greater total proportion of fibre content, which is of renewable, i.e. non-fossil, bio-based origin and which is possible to recycle into creation of new materials.

Moreover, the use of thin papers or cellulose-based substrates as "facing layers" in a sandwich configuration, supports the use of bulk materials having a lower bending stiffness, thus being less complex in design for a maximized bending stiffness in the total laminated material, and/ or being of lower density and thus using lower amounts of fibers, thus being less expensive altogether, by laminating such facing layers on each side of the bulk layer.

As a final remark, the invention is not limited by the embodiments shown and described above but may be varied within the scope of the claims.

List of reference numerals:
10 barrier-coated cellulose-based substrate
11 cellulose-based substrate
12 base coating
13 oxygen-enriched barrier aluminium metallization coating
14 gas-barrier top coating (optional)
15 protective and/or heat-sealable coating (optional)
16 protective and/or heat-sealable coating (optional)
20 laminated packaging material
21 bulk layer
22 outermost, transparent and protective material layer
23 barrier-coated cellulose-based substrate
24 inside polymer layer structure
25 innermost, heat sealable, liquid tight layer
25a innermost layer - pre-manufactured polyolefin film
25a* innermost, heat sealable, liquid tight layer
25b interior bonding layer (embodiment with 25a)
25b* interior bonding layer (embodiment with 25a*)
26 intermediate bonding layer - melt extrusion lamination
26* intermediate bonding layer - wet lamination
27 printed décor pattern
28; 28* melt extrusion laminated bonding-layer (adhesive polymer/ tie layer)
30a aqueous dispersion/ solution coating
31a paper/ cellulose-based substrate web
32a dispersion coating station
33a drying step (hot air dryer)
34a base-coated cellulose-based substrate
30b extrusion lamination
31b bulk layer
32b extrusion feedblock and die
33b thin molten polymer curtain of e.g. LDPE
34b barrier-coated cellulose-based substrate
35b nip of lamination rollers
36b laminated material
30c final lamination steps
31c bulk-to-barrier pre-laminate web
32c first extrusion feedblock and die
33c molten polymer curtain (LDPE)
34c cooled lamination roller nip
35c second extrusion feedblock and die
36c molten polymer curtain
37c cooled lamination roller nip
39c finished laminated packaging material
40 PVD plant
41 aluminium evaporation source
42 injection of additional oxygen
43 base-coated cellulose-based substrate web
44 metal-deposition, barrier-coated cellulose-based substrate web
50a packaging container
50b pouch container
50c gable top package
50d bottle like package
51a longitudinal seal
51b longitudinal seal
52a transversal seal
52b transversal seal
53 opening device
54 sleeve
55 top
60 tube-filling and -packaging method
61 tube
62, 62' edges of web
63 overlap joint
64 filling of tube
65 double transversal seal
66 final, filled packaging container
70 overlapping longitudinal sealing area
71, 72 overlapping longitudinal edges
73, 74 sensitive positions
75 longitudinal sealing cover strip
76 opposite side of the tube
77, 78 light marks

## Claims

1. Heat sealable laminated packaging material (20) for packaging of oxygen-sensitive food products, comprising as layers of a layer sequence, as viewed from outside to inside of a packaging container formed from the laminated packaging material,
an outermost, transparent, and protective material layer (22),
a barrier-coated cellulose-based substrate (23;10),
an inside polymer layer structure (24), comprising at least an innermost, heat sealable, liquid tight layer (25; 25a; 25a*), which comprises a thermoplastic material and is intended to be in direct contact with a filled food product in a packaging container manufactured from the laminated packaging material, the barrier-coated cellulose-based substrate (23;10), comprising
a cellulose-based substrate (11) having a surface weight from 30 to 80 g/m2, as measured according to ISO 536:2012, and a density from 700 to 1500 kg/m3, as measured according to ISO 534:2011, and
a base coating (12), comprising from 65 to 100 weight-% of a polymer material selected from the group consisting of polyvinyl alcohol, PVOH, modified polyvinyl alcohols, starch, starch derivatives, modified starch materials, cellulose ethers and blend compositions of any two or more thereof, and from 0 to 35 weight-% of inorganic laminar particles, based on the total dry weight of the base coating (12), the base coating being applied on a first, top side of the cellulose-based substrate by means of aqueous dispersion or solution coating and subsequent drying, and
an oxygen-enriched barrier aluminium metallization coating (13) applied onto the uncoated side of the dry base coating (12), by a physical vapour deposition method (PVD), wherein
in a first phase of the vapour deposition method, a first, aluminium oxide sub-portion (13a) of the metallization coating (13) is applied adjacent and in direct contact with the free surface of the base coating (12) while adding oxygen to the aluminium metal vapour, and in a second phase of the vapour deposition coating method, a second, aluminium metal sub-portion (13b) of the metallization coating is applied onto the first, aluminium oxide sub-portion (13a),
the first and second sub-portions (13a, 13b) being deposited within a single deposition process, the second, aluminium metal sub-portion (13b) being bonded to the base coating by the first, interjacent aluminium oxide sub-portion (13a) of the first phase, and the thickness of the second, aluminium metal sub-portion (13b) being greater than the thickness of the first, aluminium oxide sub-portion (13a), the oxygen-enriched barrier aluminium metallization coating (13) having a metallization coating appearance and opacity, wherein
the oxygen-enriched barrier aluminium metallization coating (13) has a total thickness from above 90 nm to 150 nm, as measured by transmission electron microscopy, TEM, following sample preparation by ultramicrotomy as described herein, and exhibits a sheet resistance from 0.3 to 0.7 Ω/□, such as from 0.3 to 0.6 Ω/□, such as from 0.4 to 0.6 Ω/□ (Ohms per square), as measured by an instrument for contactless eddy current measurement,
the barrier-coated cellulose-based substrate thus enabling robust heat sealing conditions in a method for manufacturing of packages from the laminated packaging material.

2. Heat sealable laminated packaging material (20) as claimed in claim 1, wherein the base coating (12) has a composition comprising from 65 to 100 weight-%, such as from 70 to 100 weight-%, such as from 80 to 100 weight-%, such from 90 to 100 weight-%, of a polymer material selected from the group consisting of polyvinyl alcohol, PVOH, and modified polyvinyl alcohols, and from 0 to 35 weight-%, such as from 0 to 30 weight-%, such as from 0 to 20 weight-%, such as from 0 to 10 weight-% of an inorganic, laminar compound, based on the total dry weight of the base coating.

3. Heat sealable laminated packaging material (20) as claimed in any one of claims 1 or 2, wherein the PVOH or modified polyvinyl alcohol has a degree of hydrolysis of 98 mol-% or higher, such as of 99 mol-% or higher.

4. Heat sealable laminated packaging material (20) as claimed in claim 1, wherein the base coating (12) comprises from 65 to 100 weight-%, such as from 70 to 100 weight-%, such as from 80 to 100 weight-%, such as from 90 to 100 weight-% of a material selected from the group consisting of starch, modified starch materials and cellulose ethers and from 0 to 35 weight-%, such as from 0 to 30 weight-%, such as from 0 to 20 weight-%, such as from 0 to 10 weight-% of an inorganic, laminar compound, wherein the barrier-coated cellulose-based substrate (10) further comprises a gas-barrier top coating (14), which comprises a polymer selected from the group consisting of polyvinyl alcohol, PVOH, and modified polyvinyl alcohols, and is applied by means of aqueous dispersion or solution coating onto the barrier aluminium metallization coating (13) and subsequent drying.

5. Heat sealable laminated packaging material (20) as claimed in claim 4, wherein the gas-barrier top coating (14) further comprises a polymer or compound having functional carboxylic acid groups, such as a copolymer of ethylene with acrylic or methacrylic acid, EAA or EMAA.

6. Heat sealable laminated packaging material (20) as claimed in any one of the preceding claims, wherein the base coating (12) is applied to a total amount from 0.5 to 2.5 g/m², such as from 1.0 to 2.1 g/m², such as from 1.0 to 2.0 g/m², such as from 1.1 to 2.0 g/m², such as from 1.0 to 1.8 g/m², such as from 1.1 to 1.8 g/m², such as from 1.2 to 1.8 g/m², such as from 1.2 to 1.7 g/m², such as from 1.3 to 1.7 g/m², based on dry weight.

7. Heat sealable laminated packaging material (20) as claimed in any one of the preceding claims, wherein the cellulose-based substrate is a fibrous cellulose substrate, which is pre-coated with an aqueous pre-coating composition comprising a polymer binder and optionally clay, inorganic pigments or particles, dried and subsequently calendered.

8. Heat sealable laminated packaging material (20) as claimed in any one of the preceding claims, wherein the cellulose-based substrate is a fibrous cellulose substrate, which is impregnated with an aqueous polymer dispersion or solution, dried and subsequently calendered.

9. Heat sealable laminated packaging material (20) as claimed in any one of the preceding claims, comprising the barrier-coated cellulose-based substrate (23;10) manufactured by a method comprising the steps of
a) providing and forwarding a continuous web of a cellulose-based substrate (11; 31a), having a surface weight from 30 to 80 g/m2, as measured according to ISO 536:2012, and a density from 700 to 1500 kg/m3, as measured according to ISO 534:2011,
b) providing an aqueous base coating composition comprising a polymer material selected from the group consisting of polyvinyl alcohol, PVOH, modified polyvinyl alcohols, starch, starch derivatives, modified starch materials, cellulose ethers and blend compositions of any two or more thereof, and from 0 to 35 weight-% inorganic laminar particles, based on the total dry weight of the base coating (12),
c) applying the aqueous base coating composition onto the top side of the web of the cellulose-based substrate by means of dispersion coating (32a), such as by a smooth roller coating method,
d) drying (33a) the applied aqueous base coating from step c), to provide the base coating (12),
e) optionally repeating steps c) and d),
f) further coating the base coated and dried web substrate obtained from step e), with an oxygen-enriched barrier aluminium metallization coating by means of physical vapour deposition (40) of aluminium metal vapour,
comprising
f1) depositing a first sub-portion (13a) of aluminium oxide adjacent onto and in direct contact with the free, uncoated surface of the base coating (12) while adding oxygen to the aluminium metal vapour,
f2) depositing a second sub-portion (13b) comprising mainly aluminium metal to a greater thickness than the first sub-portion of aluminium oxide, thus providing the oxygen-enriched barrier aluminium metallization coating (13) with an aluminium metallization appearance and opacity,
wherein the first and second sub-portions (13a, 13b) are deposited within a single deposition process,
the oxygen-enriched barrier aluminium metallization coating (13) being deposited to a total thickness from 90 to 150 nm, as measured by transmission electron microscopy, TEM, following sample preparation by ultramicrotomy as described herein, and exhibiting a sheet resistance from 0.3 to 0.7 Ω/□, such as from 0.3 to 0.6 Ω/□, such as from 0.4 to 0.6 Ω/□ (Ohms/square), as measured by an instrument for contactless eddy current measurement.

10. Heat sealable laminated packaging material (20) as claimed in claim 9, wherein the base coating (12) is applied as two consecutive coatings with intermediate drying.

11. Heat sealable laminated packaging material (20) as claimed in any one of claims 9-10, wherein the method further comprises the steps of
g) applying an aqueous solution or dispersion (32a) of a gas-barrier top coating material onto the oxygen-enriched barrier aluminium metallization coating (13),
h) drying (33a) the applied aqueous solution or dispersion from step g) to provide a gas-barrier top coating (14), and
i) optionally repeating steps g) and h),
the steps g), h) and i) to be performed after step f2).

12. Heat sealable laminated packaging material (20) as claimed in claim 11, wherein the gas-barrier top coating (14) comprises a polymer selected from polyvinyl alcohol, PVOH, and modified polyvinyl alcohols.

13. Heat sealable laminated packaging material (20) as claimed in any one of claims 11-12, wherein the method further comprises a step of
j) coating the surface of the gas-barrier top coating (14) with at least one heat sealable layer (15) of thermoplastic material(s), the heat resistant gas-barrier top coating having a higher melting temperature than the thermoplastic material(s).

14. Heat sealable laminated packaging material (20) as claimed in any one of the preceding claims, further comprising a bulk layer (21) of paper, paperboard or other cellulose-based material, laminated between the outermost, transparent and protective material layer (22) and the barrier-coated cellulose-based substrate (23).

15. Heat sealable laminated packaging material as claimed in claim 14, wherein the barrier-coated cellulose-based substrate (23) is bonded to the bulk layer (21) by an interjacent bonding layer (26; 26*) of a thermoplastic polymer.

16. Heat sealable laminated packaging material as claimed in any one of the preceding claims, wherein the outermost, transparent, and protective material layer (22), is a liquid tight, heat sealable layer of a polyolefin-based polymer, such as polyethylene-based polymer, such as low density polyethylene, LDPE.

17. Heat sealable laminated packaging material as claimed in any one of the preceding claims, wherein the thermoplastic material of the innermost liquid tight, heat sealable layer (25; 25a; 25a*) is a polyolefin-based material, such as a polyethylene-based polymer, such as a blend of a linear low-density metallocene-polyethylene, m-LLDPE, and low-density polyethylene, LDPE.

18. Heat sealable laminated packaging material (20) according to any one of the preceding claims, wherein the innermost liquid tight, heat sealable material layer is a pre-manufactured polyolefin film (25a), such as an oriented polyethylene film comprising a major proportion of linear low density polyethylene, LLDPE, or linear low density metallocene-polyethylene, m-LLDPE, for improved robustness of the mechanical properties of the laminated packaging material.

19. Heat sealable laminated packaging material (20) according to any one of claims 1-17, wherein the inside polymer layer structure (24) applied on the inner side of the barrier-coated cellulose-based substrate (23) comprises an interior layer (25b*) comprising high-density polyethylene, HDPE, medium-density polyethylene, MDPE, or a linear low-density polyethylene, LLDPE, the LLDPE having a melt flow ratio, MFR, from 4 to 20 g/10 min (190 °C/ 2.16 kg) and a melting temperature above 115 °C.

20. Packaging container (50a; 50b; 50c; 50d) comprising the laminated packaging material as defined in any one of claims 1-19.
